(19) Europäisches Patentamt
European Patent Office
Office européen des brevets

(11) EP 1 788 002 A1

(12) **EUROPEAN PATENT APPLICATION**
published in accordance with Art. 158(3) EPC

(43) Date of publication:
**23.05.2007 Bulletin 2007/21**

(21) Application number: **05774711.5**

(22) Date of filing: **25.08.2005**

(51) Int Cl.:
***C08F 4/645*** (2006.01) ***C08F 10/00*** (2006.01)
***C07F 17/00*** (2006.01) ***C07F 7/00*** (2006.01)
***C07F 7/28*** (2006.01)

(86) International application number:
**PCT/JP2005/015485**

(87) International publication number:
**WO 2006/022355 (02.03.2006 Gazette 2006/09)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.08.2004 JP 2004247736**
**27.08.2004 JP 2004247737**
**28.01.2005 JP 2005020918**
**28.01.2005 JP 2005020919**

(71) Applicant: **Mitsui Chemicals, Inc.**
**Tokyo 105-7117 (JP)**

(72) Inventors:
- **MICHIUE, Kenji,**
**c/o MITSUI CHEMICALS, INC.**
**Sodegaura-shi,**
**Chiba 299-0265 (JP)**
- **ONDA, Mitsuhiko,**
**c/o MITSUI CHEMICAL**
**Sodegaura-shi,**
**Chiba 299-0265 (JP)**
- **MATSUI, Shigekazu,**
**c/o MITSUI CHEMICALS, INC.**
**Sodegaura-shi,**
**Chiba 299-0265 (JP)**
- **MATSUURA, Sadahiko,**
**c/o MITSUI CHEMICALS, INC.**
**Sodegaura-shi,**
**Chiba 299-0265 (JP)**
- **ENDO, Koji,**
**c/o MITSUI CHEMICALS, INC.**
**Sodegaura-shi,**
**Chiba 299-0265 (JP)**
- **MITANI, Makoto,**
**c/o MITSUI CHEMICALS, INC.**
**Sodegaura-shi,**
**Chiba 299-0265 (JP)**
- **FUJITA, Terunori,**
**c/o MITSUI CHEMICALS, INC.**
**Sodegaura-shi,**
**Chiba 299-0265 (JP)**

(74) Representative: **Cresswell, Thomas Anthony**
**J.A. KEMP & CO.**
**14 South Square**
**Gray's Inn**
**London WC1R 5JJ (GB)**

# (54) CATALYSTS FOR OLEFIN POLYMERIZATION, PROCESS FOR PRODUCTION OF OLEFIN POLYMERS, OLEFIN COPOLYMERS, NOVEL TRANSITION METAL COMPOUNDS, AND PROCESS FOR PRODUCTION OF TRANSITION METAL COMPOUNDS

(57) [Task] To provide a catalyst for olefin polymerization having an excellent olefin polymerization performance and capable of producing a polyolefin with excellent properties.

[Construction] A catalyst for olefin polymerization comprising(A) a transition metal compound represented by the following general formula (1); and (B) at least one compound selected from the group consisting of (B-1) organometallic compound, (B-2) organoaluminum oxy compound and (B-3) compounds capable of reacting with the transition metal compound (A) to form an ion pair:

EP 1 788 002 A1

[Chem. 1]

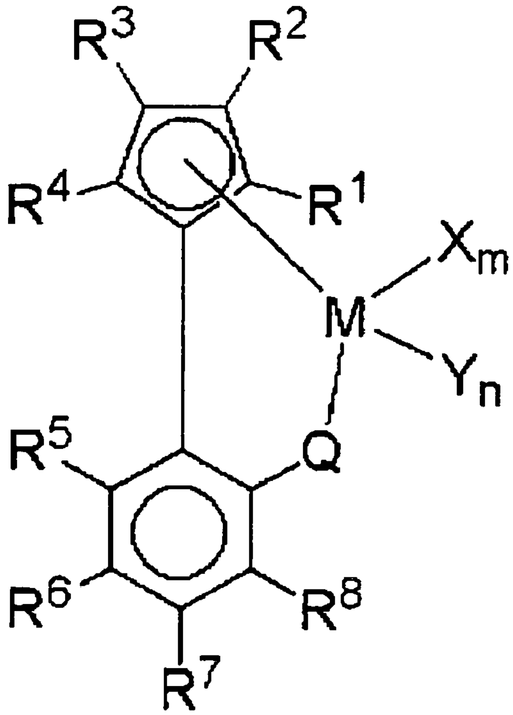

・・・(1)

(M is a transition metal atom selected from Groups 4 to 6 of the periodic table; the two of $R^1$ to $R^4$, which are adjacent to each other, are combined to form a ring with the carbon atoms to which the two are bonded; groups of not forming a ring, $R^5$ to $R^8$, and X are each an atom or a group selected from a hydrogen atom, a halogen atom, a hydrocarbon group, a halogenated hydrocarbon group, an oxygen-containing group, and a nitrogen-containing group; Q is -O-, -S-, -$NR^a$-, or -$PR^b$- ($R^a$ and $R^b$ are each a hydrogen atom or a hydrocarbon group); Y is a neutral ligand having an electron-donating group; m is a number satisfying the valence of M; and n is an integer of 0 to 3.).

## Description

### TECHNICAL FIELD

The present invention relates to a catalyst for olefin polymerization, a process for polymerizing olefins using the catalyst for olefin polymerization, a polymer which can be obtained in accordance with the polymerization process, a novel transition metal compound, and a process for producing the same.

### BACKGROUND ART

A well known catalyst for olefin polymerization is a so-called Kaminsky catalyst of which the cyclopentadienyl group is provided as a ligand. This catalyst has a characteristic of producing a polymer having an extremely high polymerization activity and a narrow molecular weight distribution. As a transition metal compound useful for such a Kaminsky catalyst, for example, bis(cyclopentadienyl)zirconiumdichloride
(Patent Document 1) and ehtylenebis(4,5,6,7-tetrahydroindenyl)zirconiumdichloride
(Patent Document 2) have been known.
In addition, it has been known that if a different transition metal compound for polymerization is used, the property of the resultant polyolefin accordingly differs significantly. Since the polyolefin is excellent in mechanical properties, it can be used in many fields such as for various molded products. Recently, demands on properties for polyolefin are diversified, and thus polyolefin with various properties has been required.
Therefore, there is a demand for the advent of excellent catalysts component for olefin polymerization, wherein the resultant polyolefin has further excellent properties, and further the advent of new transition metal compound that can be used as a component of such catalyst for olefin polymerization.
In recent years, a process of polymerizing olefins using a catalyst system comprising a monocyclopentadienyl compound, on which a group including a heteroatom such as a nitrogen atom, an oxygen atom, or a phosphorus atom is bonded, has been developed significantly and is disclosed in Non-Patent Document 1 and Non-Patent Document 2.
The present inventors have disclosed a catalyst system comprising a novel transition metal compound that exhibits a polymerization activity of ethylene in Patent Document 3.
Subsequent to the inventors' disclosure, transition metal compounds having a similar ligand structure are disclosed in Patent Document 4, Non-Patent Document 3, Non-Patent Document 4, and Non-Patent Document 5.
However, the polymerization process using the above-mentioned transition metal compounds employed in conventional technology has problems in that neither catalyst has a sufficient polymerization activity in the polymerization of ethylene and copolymerization of ethylene and $\alpha$-olefin and that it is not industrially useful for a commercial production because the molecular weight of the obtained polymer is insufficient.
In addition, as the process for synthesizing the transition metal compounds employed in conventional technology, processes which are generally used to synthesize a Kaminsky catalyst are employed, such as a process comprising deprotonation of a compound serving as a ligand and then reacting with a halogenated metal (Patent Document 3 and Non-Patent Document 4) and a process comprising dealkanization of a compound serving as a ligand and an alkalized metal (Patent Document 4 and Non-Patent Document 3). However, the product produced by means of these processes includes a large amount of complexes in which two ligands are coordinated with one metal, and thus although the yield differs depending on the kind of ligand used, the yield is low in general, except with a certain special kind of ligand giving about 60% yield. It is usually equal to or less than 50% yield, is equal to or less than 10% yield in many cases, and there are some cases that no target compound may be obtained at all.
At the same time, as improvement of these processes, there is reported a process comprising first reacting a compound serving as a ligand with a halogenated metal and then further reacting the resultant with adding a deprotonation agent (Non-Patent document 5). In this manner, it has become possible to synthesize a transition metal compound having a specific ligand structure.
However, the yield of the process is also equal to or less than 50%, and when a cyclopentadienyl group moiety is, for example, an indenyl group, it is confirmed that there are cases, in which the yield significantly reduces depending on the kind of ligands or no target product is obtained at all. Thus, the process is not satisfactory.
For such synthetic processes of giving a low yield, it is necessary to repeat purification operations such as washing and recrystallization so as to remove by-products. In addition, in the above-mentioned process where halogenated metal is used, since a desalting process after the reaction is also necessary, there is a possibility that a complex, extremely unstable in impurities such as air or moisture, gradually degrades due to the complicated post-treatment process after the reaction.
As described above, with the synthesis of a transition metal compound that can be obtained by the processes described above, it is difficult to synthesize a large quantity of the target product having good purity with good reproducibility and in a short period of time, and thus there is a need for improvement. It has been desired to develop a synthetic

process that is simple and gives a high yield.

Patent Document 1: JP-A-58-19309
Patent Document 2: JP-A-61-130314
Patent Document 3: JP-A-8-325283
Patent Document 4: U.S. Patent No. 5,856,258
Non-Patent Document 1: Chem. Rev., 1998(98), 2587
Non-Patent Document 2: Chem. Rev., 2003(103), 2633
Non-Patent Document 3: Organometallics, 1997(16), 5958
Non-Patent Document 4: Organometallics, 2003(22), 3877
Non-Patent Document 5: Organometallics, 2004(23), 540

DISCLOSURE OF THE INVENTION

PROBLEM TO BE SOLVED BY THE INVENTION

It is an object of the present invention to provide catalysts for olefin polymerization having an excellent olefin polymerization performance and capable of producing polyolefins having excellent properties, and also to provide a process for polymerizing an olefin by using the catalyst for olefin polymerization and to provide a polymer obtained by the process. Another object of the present invention is to provide a novel transition metal compound useful for the above-mentioned polymerization. In addition, another object of the present invention is to provide a more simplified process for synthesizing the high purity transition metal compound with a high yield.

MEANS FOR SOLVING THE PROBLEM

According to the present invention, there is provided a catalyst for olefin polymerization, a process for producing an olefin polymer, an olefin copolymer, a transitionmetal compound, and a process for producing the transition metal compound described below, and thus the above-mentioned objects of the present invention can be achieved.

(1) A catalyst for olefin polymerization includes:

(A) a transition metal compound represented by the following general formula (1); and
(B) at least one compound selected from the group consisting of

(B-1) organometallic compound,
(B-2) organoaluminum oxy compound, and
(B-3) compounds capable of reacting with the transition metal compound (A) to form an ion pair,

[Chem. 1]

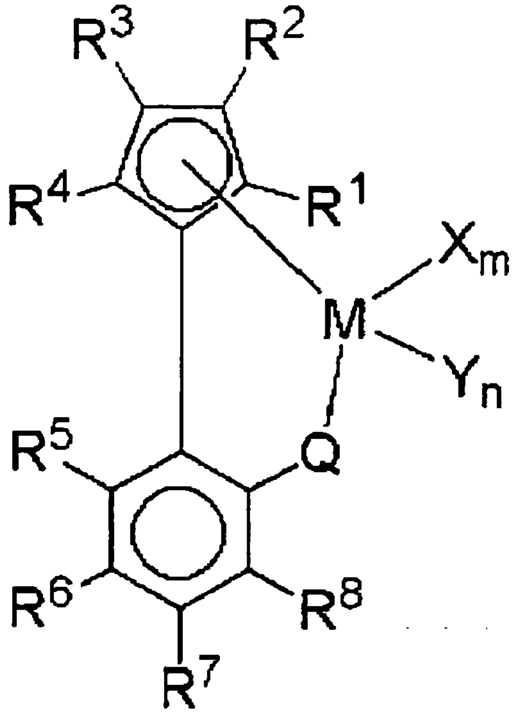

• • • (1)

In the general formula (1), M represents a transition metal atom selected from Groups 4 to 6 of the periodic table; X represents atom or a group selected from a hydrogen atom, a halogen atom, a hydrocarbon group, a halogenated hydrocarbon group, an oxygen-containing group, and a nitrogen-containing group; Q is -O-, -S-, $-NR^a-$, or $-PR^b-$ (wherein, $R^a$ and $R^b$ are each a hydrogen atom or a hydrocarbon group)); Y is a neutral ligand having an electron-donating group; m is a number satisfying the valence of M, and when m is 2 or more, a plurality of atoms or groups represented by X may be the same as or different from each other, the plurality of groups represented by X may be bonded to each other, it may form a conjugated straight-chain diene residue, a conjugated branched-chain diene residue, a non-conjugated straight-chain diene residue, or a non-conjugated branched-chain diene residue, and the plurality of groups represented by X may be bonded to each other to form a ring; n is an integer of 0 to 3; two of $R^1$ to $R^4$ which are adjacent to each other may be combined to form an aromatic ring or an aliphatic ring with the carbon atoms to which the two are bonded, and groups of not forming a ring which may be the same as or different from each other, are each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group, and a nitrogen-containing group; and $R^5$ to $R^8$ which may be the same as or different from each other, are each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and two of $R^5$ to $R^8$ which are adjacent to each other may be combined to form an aromatic ring, an aliphatic ring, or a hetero ring with the carbon atoms to which the two are bonded.

(2) The catalyst for olefin polymerization according to (1) above, in which in the general formula (1), $R^1$ and $R^2$ are combined to form one aromatic ring with the carbon atoms to which the two are bonded, and $R^3$ and $R^4$ are combined to form one aromatic ring with the carbon atoms to which the two are bonded.

(3) The catalyst for olefin polymerization according to (1) above, in which in the general formula (1), $R^2$ and $R^3$ are combined to form one aromatic ring with the carbon atoms to which $R^2$ and $R^3$ are bonded.

(4) The catalyst for olefin polymerization according to (1) above, in which in the general formula (1), $R^3$ and $R^4$ are combined to form one aromatic ring with the carbon atoms to which $R^3$ and $R^4$ are bonded, and M is a titanium atom.

(5) The catalyst for olefin polymerization according to any one of (1) to (4) above, wherein, in the general formula (I), $R^8$ is a group selected from (a) a hydrocarbon group selected from a tertiary alkyl group, an arylalkyl group, an aryl group, and an alicyclic group, (b) a halogenated hydrocarbon group selected from a halogenated alkyl group and a halogen-containing aromatic group, and (c) a tertiary silyl group, and is a group having 1 to 20 carbon atom (s) in total.

(6) A process for producing an olefin polymer comprises polymerizing one or more kinds of olefins in the presence of the catalyst for olefin polymerization of any of (1) to (5) above.

(7) The process for producing an olefin polymer according to (6) above further comprises copolymerizing two or more kinds of olefins.

(8) The process for producing an olefin polymer according to (7) above, in which the two or more kinds of olefins are olefins selected from α-olefins having 2 to 20 carbon atoms, and any olefin satisfies the relationship of the following formula (Eq-1) when assumed that a ratio (mol%) of a concentration of any one olefin ($M_1$) among the olefins in the copolymerization system to the sum of concentrations of all olefins is Ci and an abundance ratio (mol%) of structural units derived from an olefin ($M_1$) in the obtained copolymer to the total structural units is Pi.

$$0.33 \leq Ci/Pi \leq 1.50 \quad \ldots \text{(Eq-1)}$$

(9) A process for producing an olefin-vinylidene compound copolymer, comprising steps of: copolymerizing one or more kinds of olefins selected from α-olefins having 2 to 20 carbon atoms and a vinylidene compound in the presence of a catalyst for olefin polymerization including (A) a transition metal compound represented by the following general formula (1), and (B) at least one compound selected from the group consisting of (B-1) organometallic compound, (B-2) organoaluminum oxy compound and (B-3) compounds capable of reacting with the transition metal compound (A) to form an ion pair; and producing a copolymer having a content ratio (Uo/Uv) of the structural units (Uo) derived from the olefin to the structural units (Uv) derived from the vinylidene compound of 50/50 to 99/1 (molar ratio),

[Chem. 2]

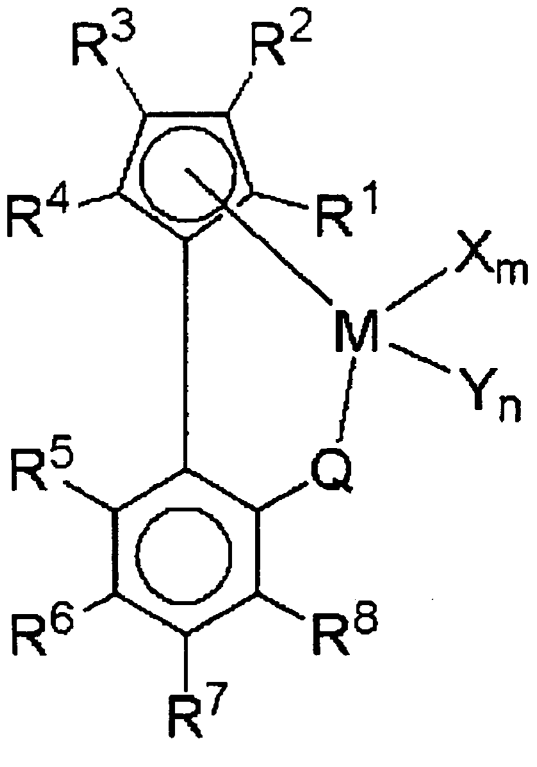

・・・(1)

In the general formula (1), M represents a transition metal atom selected from Groups 4 to 6 of the periodic table; X represents an atom or a group selected from a hydrogen atom, a halogen atom, a hydrocarbon group, a halogenated hydrocarbon group, an oxygen-containing group, and a nitrogen-containing group; Q repersents -O-, -S-, $-NR^a-$, or $-PR^b-$ (wherein, $R^a$ and $R^b$ are each a hydrogen atom or a hydrocarbon group); Y is a neutral ligand having an electron-donating group; m is a number satisfying the valence of M, and when m is 2 or more, a plurality of atoms or groups represented by X may be the same as or different from each other, the plurality of groups represented by X may be bonded to each other, they may form a conjugated straight-chain diene residue, a conjugated branched-chain diene residue, a non-conjugated straight-chain diene residue, or a non-conjugated branched-chain diene residue, and the plurality of groups represented by X may be bonded to each other to form a ring; n is an integer of 0 to 3; $R^1$ to $R^4$, which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and the two of $R^1$ to $R^4$ which are adjacent to each other may be combined to form an aromatic ring or an aliphatic ring, with the carbon atoms to which the two are bonded; and $R^5$ to $R^8$ which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and the two of $R^5$ to $R^8$ which are adj acent to each other may be combined to form an aromatic ring, an aliphatic ring, or a hetero ring, with the carbon atoms to which the two are bonded.

(10) An olefin copolymer comprising structural units derived from one or more kinds of olefin selected from α-olefins having 2 or more carbon atoms, wherein the tri-substituted internal olefin quantity is 0.1 or more per 1000 carbon atoms when measured by $^1$H-NMR.

(11) The olefin copolymer according to (10) above, which is a copolymer of two or more kinds of olefins selected from α-olefins having 2 to 20 carbon atoms or a polymer of α-olefin of one or more kind(s) selected from α-olefins having 3 to 20 carbon atoms, wherein the constituent ratio of regioirregular linkage between the α-olefins having 3 to 20 carbon atoms in the total α-olefin chains is 10 mol% or more when measured by $^{13}$C-NMR.

(12) An olefin polymer, which is a polymer of an olefin selected from α-olefins having 2 or more carbon atoms, comprising on its side chain two or more alkyl groups selected from an ethyl group (b1), an alkyl group having 3 carbon atoms (b2), an alkyl group having 4 carbon atoms (b3), and an alkyl group having 5 carbon atoms (b4) (provided that, when the number of carbon atoms of α-olefin having 3 or more carbon atoms supplied in a polymerization is t, side chains having t-2 carbon atoms are not included in the alkyl group selected from (b1) to (b4)), wherein the content of the total b1 to b4 alkyl groups is 1.0 or more per 1000 carbon atoms.

(13) An olefin-vinylidene compound copolymer, which is a copolymer of at least one olefin selected from α-olefins having 2 to 20 carbon atoms and a vinylidene compound, wherein the ratio (Uo/Uv) of the total content of structural units derived from the olefin (Uo) to the content of structural units derived from the vinylidene compound (Uv) is from 50/50 to 99/1 (molar ratio).

(14) A transition metal compound represented by the following general formula (I):

[Chem. 3]

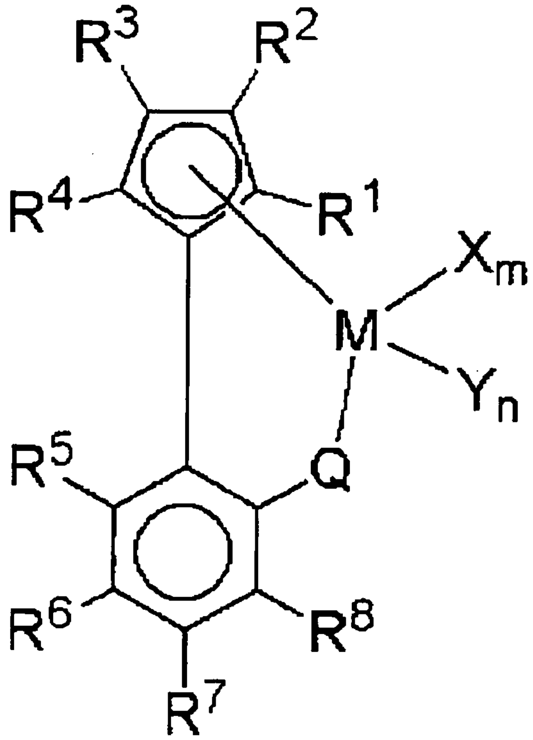

• • • (1)

In the general formula (1), M represents a transition metal atom selected from Groups 4 to 6 of the periodic table; X represents an atom or a group selected from a hydrogen atom, a halogen atom, a hydrocarbon group, a halogenated hydrocarbon group, an oxygen-containing group, and a nitrogen-containing group; Q represents-O-, -S-, $-NR^a-$ or $-PR^b-$ (wherein, $R^a$ and $R^b$ represent each a hydrogen atom or a hydrocarbon group); Y represents a neutral ligand having an electron-donating group; m is a number satisfying the valence of M, and when m is 2 or more, a plurality of atoms or groups represented by X may be the same as or different from each other, the plurality of groups represented by X may be bonded to each other, they may form a conjugated straight-chain diene residue, a conjugated branched-chain diene residue, a non-conjugated straight-chain diene residue, or a non-conjugated branched-chain diene residue, and the plurality of groups represented by X may be bonded to each other to form a ring; n is an integer of 0 to 3; the two of $R^1$ to $R^4$, which are adjacent to each other may be combined to form an aromatic ring or an aliphatic ring with the carbon atoms to which the two are bonded, and the groups not forming a ring which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group; and $R^5$ to $R^8$, which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group, and a nitrogen-containing group and the two of $R^5$ to $R^8$, which are adjacent to each other, may be combined to form an aromatic ring, an aliphatic ring, or a hetero ring, with the carbon atoms to which the two are bonded.

(15) The transition metal compound according to (14) above, in which the transition metal compound, is a compound represented by the following general formula (2):

[Chem. 4]

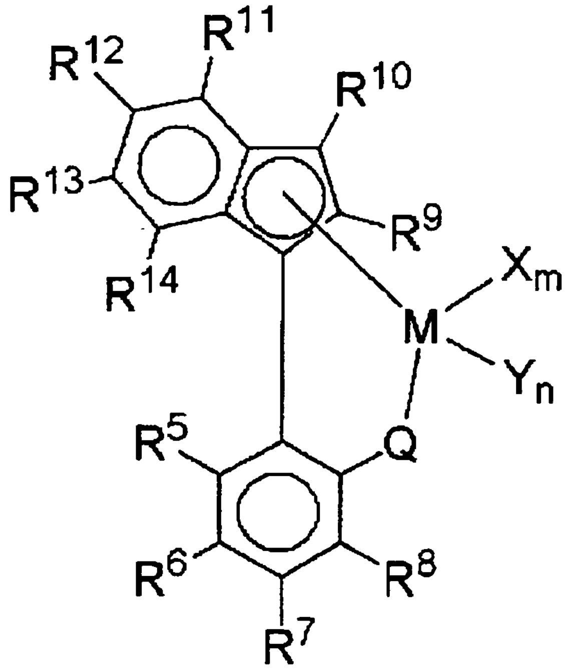

. . . (2)

In the general formula (2), $R^9$ to $R^{14}$, which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and the two of $R^9$ to $R^{14}$, which are adjacent to each other, may be combined to form an aromatic ring, an aliphatic ring, or a hetero ring with the carbon atoms to which the two are bonded.

(16) The transition metal compound according to (15) above, wherein among the atoms or groups represented by $R^9$ to $R^{14}$, at least one of $R^9$ and $R^{10}$ is a halogen atom, a hydrocarbon group having 1 to 20 carbon atom (s), a halogenated hydrocarbon group having 1 to 20 carbon atom(s), a silyl group-substituted hydrocarbon group having 1 to 20 carbon atom (S), or a hydrocarbon group-substituted silyl group having 1 to 20 carbon atom(s) in total, and $R^9$ and $R^{10}$ may be the same as or different from each other.

(17) The transition metal compound according to (15) above, wherein among the atoms or groups represented by $R^9$ to $R^{14}$, $R^{11}$ is a halogen atom, a hydrocarbon group having 1 to 20 carbon atom(s), a halogenated hydrocarbon group having 1 to 20 carbon atom(s), a silyl group-substituted hydrocarbon group having 1 to 20 carbon atom(s) or a hydrocarbon group-substituted silyl group having 1 to 20 carbon atom(s) in total.

(18) The transition metal compound according to (15) above, wherein the two atoms or groups of $R^{11}$ to $R^{14}$ adjacent to each other combines to form an expanded aromatic ring.

(19) The transition metal compound according to (14) above, wherein the transition metal compound is a compound represented by the following general formula (3):

[Chem. 5]

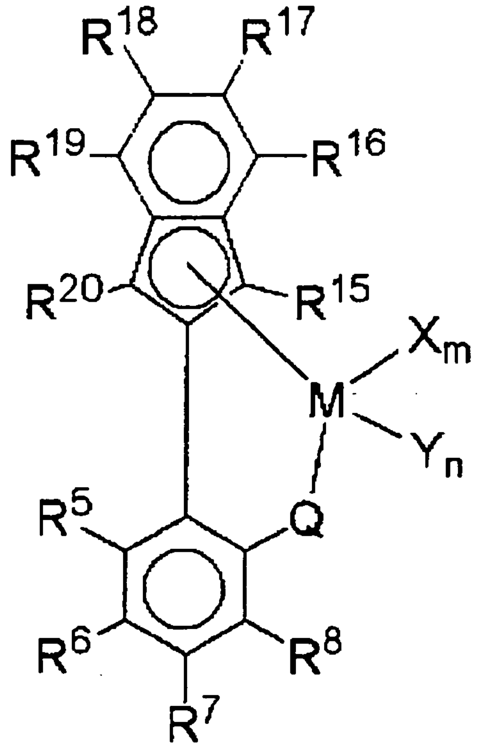

・・・(3)

In the general formula (3), $R^{15}$ to $R^{20}$, which may be same with or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group, and a nitrogen-containing group, and the two of $R^{15}$ to $R^{20}$, which are adjacent to each other, may be combined to form an aromatic ring, an aliphatic ring or a hetero ring, with the carbon atoms to which the two are bonded.

(20) The transition metal compound according to (14) above, wherein the transition metal compound has a structure represented by the following general formula (4):

[Chem. 6]

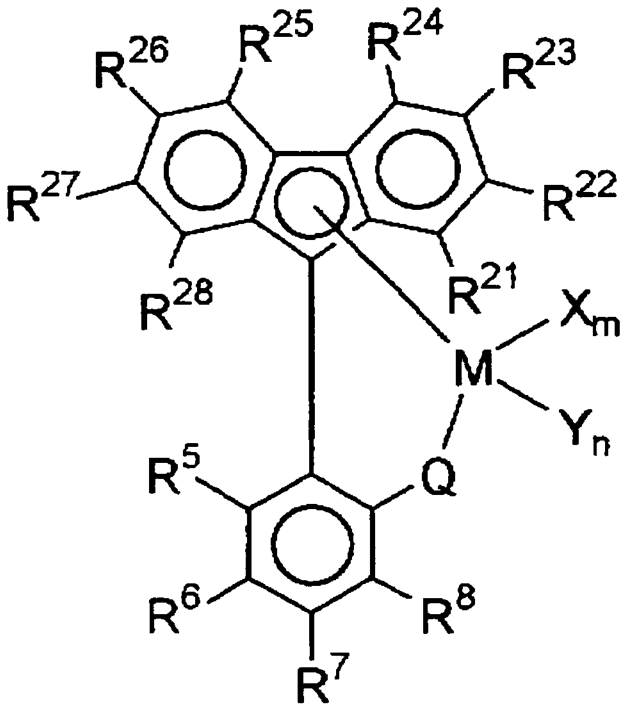

$$\cdots (4)$$

In the above general formula (4), $R^{21}$ to $R^{28}$, which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and the two of $R^{21}$ to $R^{28}$, which are adjacent to each other, may be combined to form an aromatic ring, an aliphatic ring, or a hetero ring, with the carbon atoms to which the two are bonded.

(21) A process for producing a novel transition metal compound comprising Process 1 and Process 2:

Process 1: reacting an amide complex represented by the following general formula (10) with an anion ligand (L) having a structure represented by the following general formula (11) or with a neutral organic compound in which the anion ligand (L) is hydrogenated, and converting the resultant into a reaction product containing an amide complex represented by the following general formula (12):

$$MW_p(NZZ')_{ml}Y_n \cdots \qquad (10)$$

[Chem. 7]

L= 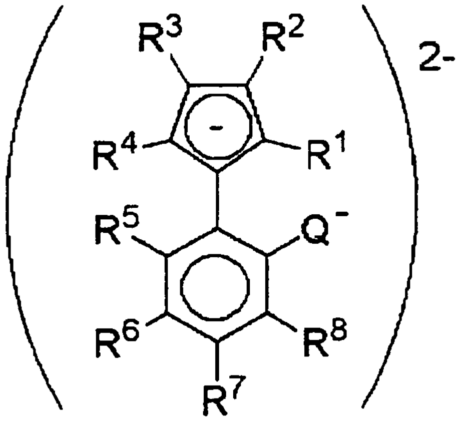 ... (11)

LM(NZZ')$_m$Y$_n$ ... (12);

and

Process 2: reacting the obtained reaction product from the Process 1 with a compound represented by the following general formula (13), and preparing the novel transition metal compound represented by the following general formula (1):

$VX^1$ ... (13)

[Chem. 8]

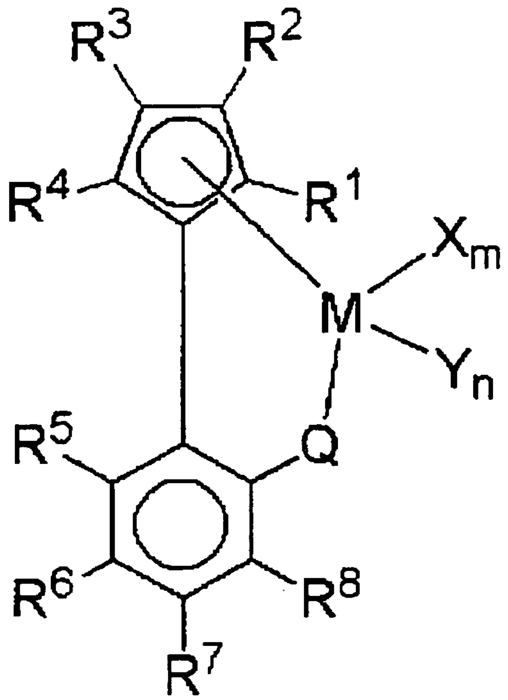

... (1)

In the general formulae (1), (10), and (12), M represents a transition metal atom selected from Groups 4 to 6

of the periodic table, in the general formula (12), L is the anion ligand represented by the above general formula (11), in the general formulae (1) and (11), $R^1$ to $R^4$, which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and the two of $R^1$ to $R^4$, which are adj acent to each other, may be combined to form an aromatic ring, an aliphatic ring, or a hetero ring, with the carbon atoms to which the two are bonded; and $R^5$ to $R^8$, which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group, and a nitrogen-containing group, and the two of $R^5$ to $R^8$, which are adjacent to each other, may be combined to form an aromatic ring or a hetero ring with the carbon atoms to which the two are bonded, in the general formula (10), W represents a halogen atom; p is an integer of 0 to 2; and p and ml are determined to satisfy the valence of M, in the general formula (1), X represents an atom or a group selected from a hydrogen atom, a halogen atom, a hydrocarbon group, a halogenated hydrocarbon group, an oxygen-containing group, and a nitrogen-containing group, in the general formula (11), Q represents -O-, -S, $-NR^a-$ or $-PR^b-$ (wherein, $R^a$ and $R^b$ represent each a hydrogen atom or a hydrocarbon group), in the general formulae (10) and (12), Z and Z' which may be the same as or different from each other, represent a hydrocarbon group having 1 to 20 carbon atom (s) or a silicon-containing group; and the two groups represented by NZZ' which are adjacent to each other may be bonded via Z or Z', and in the case where those are bonded, bridging groups of those may have a chiral structure, in the general formula (13), V represents a metal atom selected from Group 1 of the periodic table, a hydrogen atom, a hydrocarbon group having 1 to 20 carbon atom(s), a halogenated hydrocarbon group having 1 to 20 carbon atom(s), a silicon-containing group, a nitrogen-containing group or an oxygen-containing group; and $X^1$ represents a halogen atom, in the general formulae (1), (10), and (12), Y represents a neutral ligand having an electron-donating group, in the general formula (12), m is a number satisfying the valence of M, and when m is 2 or more, a plurality of groups represented by NZZ' may be the same as or different from each other, in the general formula (1), m is a number satisfying the valence of M, and when m is 2 or more, a plurality of atoms or groups represented by X may be the same as or different from each other, the plurality of groups represented by X may be bonded to each other, they may form a conjugated straight-chain diene residue, a conjugated branched-chain diene residue, a non-conjugated straight-chain diene residue or a non-conjugated branched-chain diene residue, and the plurality of groups represented by X may be bonded to each other to form a ring, in the general formulae (1), (10), and (12), n represents an integer of 0 to 3.

## THE EFFECT OF THE INVENTION

The catalyst component for olefin polymerization according to the present invention exhibits a polymerization with high polymerization activity when a polymerization of olefin e.g., ethylene, propylene, butene, decene, butadiene etc., or a copolymerization of olefin such as ethylene - propylene, ethylene - butane etc. , is carried out. In addition, when polymerization of $\alpha$-olefin is carried out, the olefin polymer having an alkyl side-chain which is different from the supplied $\alpha$-olefin based side-chain can be produced. For example, when homopolymerization of ethylene is carried out, the ethylene polymer having an alkyl side-chain is produced.
When a homopolymerization of $\alpha$-olefin e.g., propylene, butene, decene etc., is carried out, an olefin polymer having a large amount of internal olefins can be produced in comparison with the polymer obtained by using conventional catalysts for olefin polymerization. In addition, the polymer of $\alpha$-olefin of the present invention has a low regioregularity, and for example, the polymer having a lower crystallinity can be obtained. On the other hand, when copolymerization is carried out, excellent copolymerizability of comonomers, and the ethylene olefin copolymers having high comonomer content with the use of only a small amount of comonomer, can be obtained in comparison with the case where conventional catalysts for olefin polymerization are used, and since copolymerization of vinylidene compound and polymerization of conjugated diene are also possible, there is a significant industrial value.
The transition metal compound of the present invention can be used for a catalyst for olefin polymerization having the above-mentioned performance.
According to the process for producing a transition metal compound of the present invention, it is possible to simply synthesize the transition metal compound represented by the above-mentioned general formula (1) with high purity and high yield.

## BEST MODE FOR CARRYING OUT THE INVENTION

Hereinafter, catalysts for olefin polymerization related to the present invention, a process for producing olefin polymers, an olefin copolymer, a novel transition metal compound, and a process for producing the transition metal

compound, will be described in detail.

In the present specification, there is a case where the word 'polymerization' is used not only to mean homopolymerization but also to mean copolymerization. In addition, there is the case where a word 'polymer' is used not only to mean homopolymer but also to mean copolymer.

The catalysts for olefin polymerization related to the present invention includes

(A) a transition metal compound represented by the following general formula (1), and
(B) at least one compound selected from the group consisting of

(B-1) organometallic compounds,
(B-2) organoaluminum oxy compounds, and
(B-3) compounds capable of reacting with the transition metal compound (A) to form an ion pair. First, each of these components, which are comprised in a catalyst for olefin polymerization related to the present invention, will be described.

[Transition metal compound (A)]

The transition metal compound, which is useful as a transition metal compound component in the catalyst for olefin polymerization related to the present invention, is represented by the following general formula (1).

[Chem. 9]

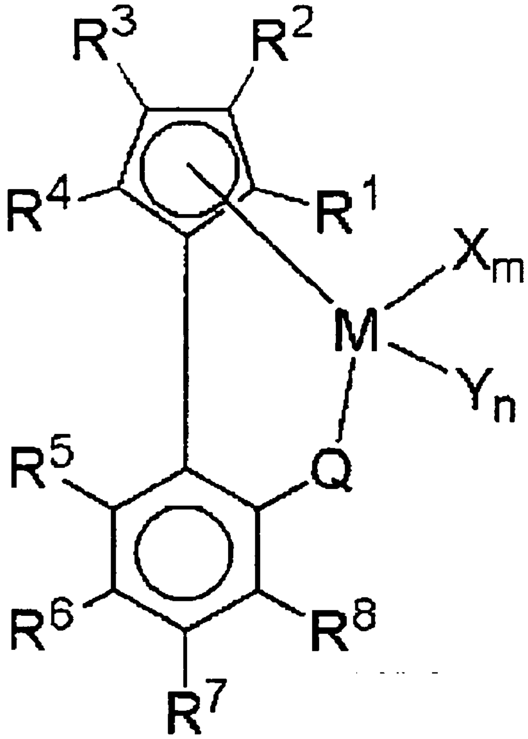

・・・(1)

In the above general formula (1), M represents a transition metal atom selected from Groups 4 to 6 of the periodic table, and specifically is Group 4 metal atoms of titanium, zirconium and hafnium, Group 5 metal atoms of vanadium, niobium and tantalum, and Group 6 metal atoms of chromium, molybdenum and tungsten. Among these, transition metal such as titanium, zirconium, hafnium, vanadium, niobium, tantalum and chromium is preferable, among these a Group 4 metal atom and a Group 5 metal atom are preferable, further, Group 4 or Group 5 transition metal atoms of the periodic table in which the transition metal atom M has a valence number of 2, 3, or 4, are more preferable, and titanium, zirconium, hafnium and vanadium are particularly preferable.

$R^1$ to $R^9$ may be the same as or different from each other, and represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and specifically is a halogen atom such as fluorine, chlorine, bromine and iodine; a hydrocarbon group having 1 to 30 carbon atom (s) such as an alkyl group e.g., methyl, ethyl, propyl, butyl, hexyl, octyl, nonyl, dodecyl, eicosyl, an alicyclic group e.g., cyclohexyl, norbornyl, adamanthyl, an arylalkyl group e.g., benzyl, phenylethyl, phenylpropyl, trityl, and an aryl group e.g., phenyl, tolyl, dimethylphenyl, trimethylphenyl, ethylphenyl, propylphenyl, biphenyl, naphthyl, methylnaphthyl, anthracenyl, phenanthryl; a halogenated hydrocarbon group having 1 to 30 carbon atom(s) in which at least one hydrogen in the above-mentioned hydrocarbon group having 1 to 30 carbon atom(s) is substituted to a halogen atom; a hydrocarbon group-substituted silyl group having 1 to 30 carbon atom(s) in total such as trimethylsilyl, methyldiphenylsilyl, dimethylphenylsilyl and triphenylsilyl, and a silyl group-substituted hydrocarbon group having 1 to 30 or preferably 3 to 30 carbon atom(s) in total in which at least one hydrogen in the above-mentioned hydrocarbon group is substituted to, for example, a hydrocarbon group-substituted silyl group such as a trimethylsilyl group.

In addition, the two groups of $R^1$ to R4, which are adjacent to each other, may be combined to form an aromatic ring, an aliphatic ring or a hetero ring with the carbon atoms to which the two are bonded, and preferably form an aromatic ring. As the ring formed by combining the two groups of $R^1$ to $R^4$ adjacent to each other with the carbon atoms to which the two are bonded, an indene ring and a fluorene ring are preferable.

Specific examples of the oxygen-containing group include an oxy group; a peroxy group; a hydroxy group; a hydroperoxy group; an alkoxy group such as methoxy, ethoxy, propoxy and butoxy; an aryloxy group such as phenoxy, methylphenoxy, dimethylphenoxy and naphthoxy; an arylalkoxy group such as phenylmethoxy and phenylethoxy; an acetoxy group; a carbonyl group; an acetylacetonato group (acac); an oxo group and the like.

Specific examples of the nitrogen-containing group include an amino group; an alkylamino group such as methylamino, dimethylamino, diethylamino, dipropylamino, dibutylamino and dicyclohexylamino; an alkylarylamino group or an arylamino group such as phenylamino, diphenylamino, ditolylamino, dinaphthylamino and methylphenylamino; an alkylimino group such as methylimino, an ethylimino group, an i-propylimino group and a tert-butylimino group; an arylimino group such as phenylimino, a 2-methylphenylimino group, a 2,6-dimethylphenylimino group, a 2,4,6-trimethylphenylimino group, a 2-i-propylphenylimino group, a 2,6-di-i-propylphenylimino group, a 2,4,6-tri-i-propylphenylimino group, a 2-tert-butylphenylimino group, a 2,6-di-tert-butylphenylimino group and a 2,4,6-tri-tert-butylphenylimino group; and an alkyl or arylamine group such as trimethylamine, triethylamine, triphenylamine, N,N,N',N'-tetramethylethylenediamine (tmeda) and N,N,N',N'-tetraphenylpropylenediamine (tppda).

$R^5$ to $R^8$ may be the same as or different from each other, and represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group. The two groups of $R^5$ to $R^8$, which are adjacent to each other, are combined with the carbon atoms to which the two are bonded to form an aromatic ring such as benzene, naphthalene and acenaphthene, or an aliphatic ring.

Among these, $R^8$ is preferably a hydrocarbon group having 1 to 20 carbon atom(s), a halogenated hydrocarbon group having 1 to 20 carbon atom(s), a silyl group-substituted hydrocarbon group having 1 to 20 carbon atoms or a hydrocarbon group-substituted silyl group which is a group having 1 to 20 carbon atom(s) in total, since they give a remarkably improved effect on polymerization activity.

Among these, $R^8$ is preferably a hydrocarbon group having 1 to 20 carbon atom(s), a halogenated hydrocarbon group having 1 to 20 carbon atom(s), a silyl group-substituted hydrocarbon group having 1 to 20 carbon atom(s) in total, or a hydrocarbon group-substituted silyl group which is a group having 1 to 20 carbon atom(s) in total, and specifically is a hydrocarbon group having 1 to 20 carbon atom (s) such as an alkyl group e.g., methyl, ethyl, propyl, butyl, hexyl, cyclohexyl, octyl, nonyl, dodecyl and eicosyl, an alicyclic group e.g., norbornyl and adamanthyl; an arylalkyl group e.g., benzyl, phenylethyl, phenylpropyl and trityl, and an aryl group e.g., phenyl, tolyl, dimethylphenyl, trimethylphenyl, ethylphenyl, propylphenyl, biphenyl, naphthyl, methylnaphthyl, anthracenyl and phenanthryl; a halogenated hydrocarbon group having 1 to 20 carbon atom (s) in which a hydrogen atom in the above-mentioned hydrocarbon group having 1 to 20 carbon atom(s) is substituted to a halogen atom; a hydrocarbon group-substituted silyl group having 1 to 20 carbon atom(s) in total e.g., trimethylsilyl, methyldiphenylsilyl, dimethylphenylsilyl and triphenylsilyl, and a silyl group-substituted hydrocarbon group having 1 to 20 carbon atom(s) in total in which a hydrogen atom in the hydrocarbon group is substituted to the hydrocarbon group-substituted silyl group.

According to the present invention, $R^8$ is more preferably a tertiary alkyl group, an arylalkyl group, an aryl group, an alicyclic group, a halogenated alkyl group, a halogen-containing aromatic group, and a tertiary silyl group, and specifically is a tertiary alkyl group such as tert-butyl; an arylalkyl group such as benzyl, phenylethyl, phenylpropyl and trityl; an aryl group such as phenyl, tolyl, dimethylphenyl, trimethylphenyl, ethylphenyl, propylphenyl, biphenyl, naphthyl, methylnaphthyl, anthracenyl and phenanthryl; a hydrocarbon group having 4 to 20 carbon atoms such as an alicyclic group e.g., norbornyl and adamanthyl, etc. ; a halogenated alkyl group having 1 to 20 carbon atom(s) in which a hydrogen atom in the alkyl group having 1 to 20 carbon atom(s) substituted to a halogen atom such as trifluoromethyl; a halogenated

aryl group having 6 to 20 carbon atoms such as 2,3,4,5,6-pentafluorophenyl, 3,5-difluorophenyl and 3,5-ditrifluoromethylphenyl; and a tertiary silyl group such as trimethylsilyl, methyldiphenylsilyl, dimethylphenylsilyl and triphenylsilyl, and preferably is a tertiary silyl group in which a hydrocarbon group is substituted and a group having 1 to 20 carbon atom (s) in total. Particularly preferable examples include tert-butyl, adamanthyl, trityl, phenyl, tolyl, dimethylphenyl, trimethylphenyl, ethylphenyl, propylphenyl, biphenyl, naphthyl, methylnaphthyl, anthracenyl, phenanthryl, trifluoromethyl, 2,3,4,5,6-pentafluorophenyl, 3,5-difluorophenyl, 3,5-ditrifluoromethylphenyl, trimethylsilyl, methyldiphenylsilyl, dimethylphenylsilyl and triphenylsilyl.

Particularly, $R^8$ is preferably a tertiary alkyl group, a tertiary arylalkyl group, an aryl group, a tertiary alicyclic group or a tertiary silyl group having 1 to 20 carbon atom(s) in total. Further, from the viewpoint of activity, $R^8$ is particularly preferably a tertiary alkyl group, a tertiary arylalkyl group, a tertiary alicyclic group or a tertiary silyl group having 1 to 20 carbon atom(s) in total. Examples of such groups include tert-butyl, adamanthyl, cumyl, diphenylethyl, trityl, trimethylsilyl and the like.

X represents a hydrogen atom, a halogen atom, a hydrocarbon group, a halogenated hydrocarbon group, an oxygen-containing group or a nitrogen-containing group; Q represents -O-, -S-, - $NR^a$-, or - $PR^b$ -; and $R^a$ and $R^b$ represent each a hydrogen atom or a hydrocarbon group having 1 to 20 carbon atom(s).

As the halogen atom, fluorine, chlorine, bromine and iodine can be exemplified.

As the hydrocarbon group, specifically, hydrocarbon groups having 1 to 30 carbon atom(s) such as an alkyl group e.g., methyl, ethyl, propyl, butyl, hexyl, octyl, nonyl, dodecyl and eicosyl; a cycloalkyl group having 3 to 30 carbon atoms e.g., cyclopentyl, cyclohexyl, norbornyl and adamanthyl; an alkenyl group e.g., vinyl, propenyl and cyclohexenyl; an arylalkyl group e.g., benzyl, phenylethyl and phenylpropyl; an aryl group e.g., phenyl, tolyl, dimethylphenyl, trimethylphenyl, ethylphenyl, propylphenyl, biphenyl, naphthyl, methylnaphthyl, anthryl and phenanthryl can be exemplified. As the halogenated hydrocarbon, specifically, a group, in which at least one hydrogens in the hydrocarbon group having 1 to 30 carbon atom (s) is substituted to a halogen atom, can be exemplified. As the hydrocarbon group and the halogenated hydrocarbon, ones having 1 to 20 carbon atom(s) are preferable.

As the oxygen-containing group and the nitrogen-containing group, same ones exemplified as the 'oxygen-containing group' and the 'nitrogen-containing group' for $R^1$ to $R^4$, can be exemplified.

In a case where X is either an alkylimino group or an arylimino group, X bonds to M with double bond.

Symbol m is a number satisfying the valence of M, it is determined by valence of transition metal atom M and valence of X, and is a number to neutralize positive and negative valences. Herein, relations of $a - 2 = b \times m$ can be obtained providing that 'a' is an absolute value of valence of transition metal atom M and 'b' is an absolute value of valence of X. More specifically, for example, if M is $Ti^{4+}$ and X is $Cl^-$, m is 2.

When m is 2 or more, a plurality of atoms or groups represented by X may be the same as or different from each other, the plurality of groups represented by X may be bonded to each other, they may form a conjugated straight-chain diene residue, a conjugated branched-chain diene residue, a non-conjugated straight-chain diene residue or a non-conjugated branched-chain diene residue, the plurality of groups represented by X may be bonded to each other to form a ring, and also may form an aromatic ring, an aliphatic ring, a conjugated cyclic diene residue or a non-conjugated cyclic diene residue.

When m is 2 or more, a plurality of atoms or groups represented by X may be the same as or different from each other, and the plurality of groups represented by X may be bonded to each other to form a ring.

Y represents a neutral ligand having an electron-donating group. The electron-donating group is a group containing unpaired electrons that can be donated to metals, and Y may be any ligand as long as it is the neutral ligand having electron-donating property.

Specific examples of the neutral ligand Y include acyclic or cyclic saturated or unsaturated ethers such as diethylether, dimethylether, dimethoxyethane, diisoprpylether, tetrahydrofuran, furan, dioxane, dimethylfuran, anisole, diphenylether and methyl-tert-butylether; acyclic or cyclic saturated or unsaturated aldehydes such as acetoaldehyde, propionaldehyde, n-butylaldehyde, benzaldehyde, p-nitrobenzaldehyde, p-tolualdehyde and phenylacetoaldehyde; acyclic or cyclic saturated or unsaturated ketones such as acetone, methylethyleketone, methyl-n-propylketone, acetophenone, benzophenone, n-butyrophenone and benzylmethylketone; acyclic or cyclic saturated or unsaturated amides such as formamide, acetamide, benzamide, n-valeramide, stearylamide, N,N-dimethylformamide, N,N-dimethylacetamide, N,N-diethylpropionamide and N,N-dimethyl-n-butylamide; acyclic or cyclic saturated or unsaturated anhydride such as acetic anhydride, succinic anhydride and maleic anhydride; acyclic or cyclic saturated or unsaturated imides such as succinimide and phthalimide; acyclic or cyclic saturated or unsaturated esters such as methyl acetate, ethyl acetate, benzyl acetate, phenyl acetate, ethyl formate, ethyl propanoate, ethyl stearate and ethyl benzoate; acyclic or cyclic saturated or unsaturated amines such as trimethylamine, triethylamine, triphenylamine, dimethylamine, N,N,N',N'-tetramethylethylenediamine, aniline, N,N-dimethylaniline, pyrrolidine, piperidine and morpholine; Nitrogen-containing heterocyclic compounds such as pyridine, α-picoline, β-picoline, quinoline, isoquinoline, 2-methylpyridine, pyrrole, oxazole, imidazole, pyrazole and indole; sulfur-containing heterocyclic compounds such as thiophen and thiazole; phosphines such as trimethylphosphine, triethylphosphine, tri-n-butylphosphine and triphenylphosphine; saturated or unsaturated

nitriles such as acetonitrile and benzonitrile; inorganic salts such as lithium chloride, sodium chloride, potassium chloride, magnesium chloride and calcium chloride; inorganic compounds such as carbon monoxide and carbon dioxide; an organometallic compound of (B-1) described below, and the like. Further, it may be a compound in which a part of the compound is substituted to a substituent such as, for example, an alkyl group, a halogen group, a nitro group, a carbonyl group, an amino group and the like. As the Y in the above-mentioned general formula (1), among those neutral ligands, ethers, aldehydes, ketones, nitrogen-containing heterocyclic compounds and inorganic salts can be preferably exemplified.

Here, n which represents a number of Y is an integer of 0 to 3, and preferably is 1 or 2.

Q represents -O-, -S-, $-NR^a-$, and $-PR^b-$. $R^a$ and $R^b$ represent each a hydrogen atom or a hydrocarbon group having 1 to 20 carbon atom(s). As a hydrocarbon group, the hydrocarbon group having 1 to 20 carbon atom(s) among the above-mentioned hydrocarbon groups exemplified for $R^1$ to $R^4$, can be exemplified. Of these, it is preferably a hydrocarbon group, and particularly preferably is a hydrocarbon group having 1 to 10 carbon atom(s) such as methyl, ethyl, propyl, butyl, benzyl, phenyl, tolyl, dimethylphenyl, naphthyl and the like.

When $R^2$ and $R^3$ in a compound represented by the above-mentioned general formula (1) are combined to form an aliphatic ring or an aromatic ring with the carbon atoms to which the two are bonded, $R^1$ and $R^2$ may be further combined to form an aliphatic ring or an aromatic ring with the carbon atoms to which the two are bonded, or $R^1$ and $R^2$ may not be combined with each other, and further, $R^4$ and $R^3$ may be further combined to form an aliphatic ring or an aromatic ring with the carbon atoms to which the two are bonded, or $R^4$ and $R^3$ may not be combined with each other. Among these compounds, it is one of the preferred aspects that such compounds have a structure in which, for example, $R^1$ is not combined with $R^2$, and $R^4$ is not combined with $R^3$ In addition, when $R^3$ and $R^4$ are combined to form an aliphatic ring or an aromatic ring with the carbon atoms to which the two are bonded, $R^1$and $R^2$ may be combined to form an aliphatic ring or an aromatic ring with the carbon atoms to which the two are bonded, or $R^1$and $R^2$ may not be combined with each other, and further, $R^2$ and $R^3$ may be further combined to form an aliphatic ring or an aromatic ring with the carbon atoms to which the two are bonded, or $R^2$ and $R^3$ may not be combined with each other. Among these compounds, it is one of the preferred aspects that such compounds have a structure in which $R^1$ is not combined with $R^2$, and $R^2$ is not combined with $R^3$. Other than those above, compounds in which $R^1$ and $R^2$ are combined to form an aliphatic ring or an aromatic ring with the carbon atoms to which the two are bonded and $R^3$ and $R^4$ are combined to form an aliphatic ring or an aromatic ring with the carbon atoms to which the two are bonded, can also be exemplified.

Examples of the compound which can be represented by the above-mentioned general formula (1), in which the two of $R^1$ to $R^4$ adjacent to each other are combined to form a ring with the carbon atoms to which the two are bonded, include a compound represented by the following general formula (2) in which $R^2$ and $R^3$ are combined to form one aromatic ring with the carbon atoms to which the two are bonded; a compound represented by the following general formula (3) in which $R^3$ and $R^9$ are combined to form one aromatic ring with the carbon atoms to which the two are bonded; and a compound represented by the following general formula (4) in which $R^1$ and $R^2$ are combined to form one aromatic ring with the carbon atoms to which the two are bonded and also $R^3$ and $R^9$ are combined to form one aromatic ring with the carbon atoms to which the two are bonded.

[Chem. 10]

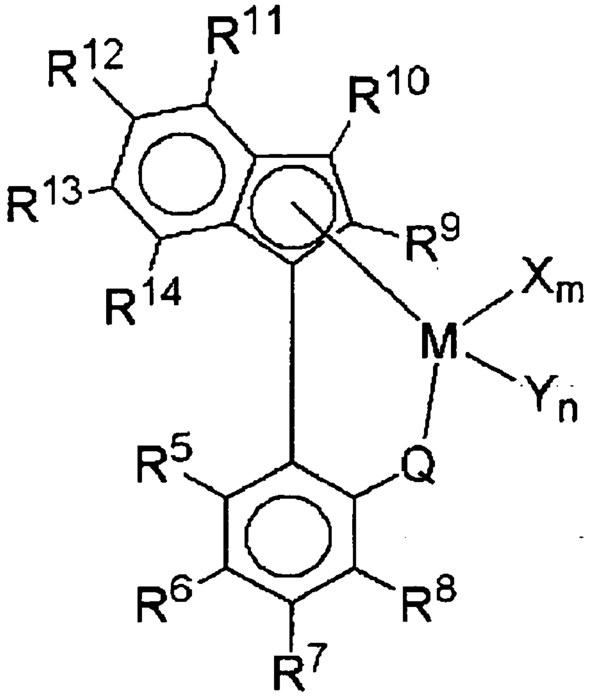

• • • (2)

In the above general formula (2), $R^9$ to $R^{14}$ may be the same as or different from each other, and represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and the two of $R^9$ to $R^{14}$ which are adjacent to each other may be combined to form an aromatic ring, an aliphatic ring or a hetero ring, with the carbon atoms to which the two are bonded. As the halogen atom, the hydrocarbon group, the halogenated hydrocarbon group, the silyl group-substituted hydrocarbon group, the hydrocarbon group-substituted silyl group, the oxygen-containing group, and the nitrogen-containing group, same atoms or groups exemplified for $R^1$ to $R^4$ can be exemplified.

Among $R^9$ to $R^{14}$, at least one of $R^9$ and $R^{10}$ is preferably a halogen atom, a hydrocarbon group, a halogenated hydrocarbon group, a silyl group-substituted hydrocarbon group or a hydrocarbon group-substituted silyl group, and specifically a halogen atom such as fluorine, chlorine, bromine, iodine; an alkyl group such as methyl, ethyl, propyl, butyl, hexyloctyl, nonyl, dodecyl, eicosyl; a hydrocarbon group having 1 to 20 carbon atom(s) such as an alicyclic group e.g., cyclohexyl, norbornyl, adamanthyl, etc., an arylalkyl group e.g., benzyl, phenylethyl, phenylpropyl, trityl, etc., an aryl group e.g., phenyl, tolyl, dimethylphenyl, trimethylphenyl, ethylphenyl, propylphenyl, biphenyl, naphthyl, methylnaphthyl, anthracenyl, phenanthryl, etc.; a halogenated hydrocarbon group having 1 to 20 carbon atom(s) in which at least one hydrogen in the above-mentioned hydrocarbon group having 1 to 20 carbon atom (s) is substituted to a halogen atom; a hydrocarbon group-substituted silyl group having 1 to 20 carbon atom(s) in total such as trimethylsilyl, methyldiphenylsilyl, dimethylphenylsilyl triphenylsilyl, and a silyl group-substituted hydrocarbon group having 1 to 20 carbon atom (s) in total in which a hydrogen atom in the hydrocarbon group is substituted to the hydrocarbon group-substituted silyl group.

When both the $R^9$ and $R^{10}$ are each a group or an atom other than a hydrogen atom, they may be the same as or different from each other.

$R^{11}$ is preferably a halogen atom, a hydrocarbon group having 1 to 20 carbon atom (s), a halogenated hydrocarbon group - having 1 to 20 carbon atom(s), a silyl group-substituted hydrocarbon group having 1 to 20 carbon atom (s) in total, or a hydrocarbon group-substituted silyl group having 1 to 20 carbon atom(s) in total, and specifically the same atoms or groups exemplified as preferable groups for $R^9$ and $R^{10}$ can be exemplified.

In addition, the two or all of $R^9$, $R^{10}$, and $R^{11}$ may be each a group or an atom other than a hydrogen atom, and they may be the same as or different from each other.

Among $R^9$ to $R^{14}$, in a case where at least one of $R^9$, $R^{10}$ and $R^{11}$ is a halogen atom, a hydrocarbon group, a

halogenated hydrocarbon group, a silyl group-substituted hydrocarbon group, or a hydrocarbon group-substituted silyl group, any of $R^9$ to $R^{14}$ which are other than a halogen atom, a hydrocarbon group, a halogenated hydrocarbon group, a silyl group-substituted hydrocarbon group or a hydrocarbon group-substituted silyl group, is preferably a hydrogen atom.

The two groups among the groups represented by $R^{11}$ to $R^{14}$, which are adjacent to each other, may be combined to form an expanded aromatic ring with the carbon atoms to which the two are bonded, and any adjacent groups of $R^{11}$ and $R^{12}$, $R^{12}$ and $R^{13}$, and $R^{13}$ and $R^{14}$, may be combined with each other to form an expanded aromatic ring, and preferably, groups of $R^{11}$ and $R^{12}$, or $R^{12}$ and $R^{13}$ are combined with each other to form an expanded aromatic ring since they give an improved effect on molecular weight and stereoregularity in polymerization of $\alpha$-olefin.

In specific, it is preferably benzoindenyl, dibenzoindenyl or substituted benzoindenyl, and in particular, it is more preferably substituted benzoindenyl in which hydrogen in the benzoindenyl group is substituted to a hydrocarbon group having 1 to 20 carbon atom(s), a halogenated hydrocarbon group having 1 to 20 carbon atom(s), a silyl group-substituted hydrocarbon group having 1 to 20 carbon atom (s) or a hydrocarbon group-substituted silyl group having 1 to 20 carbon atom(s) in total.

When the two groups among the groups represented by $R^{11}$ to $R^{14}$, which are adjacent to each other are combined to form an expanded aromatic ring with the carbon atoms to which the two are bonded, any one or both of $R^9$ and $R^{10}$ may be each an atom or a group other than a hydrogen atom, and they may be the same as or different from each other.

[Chem. 11]

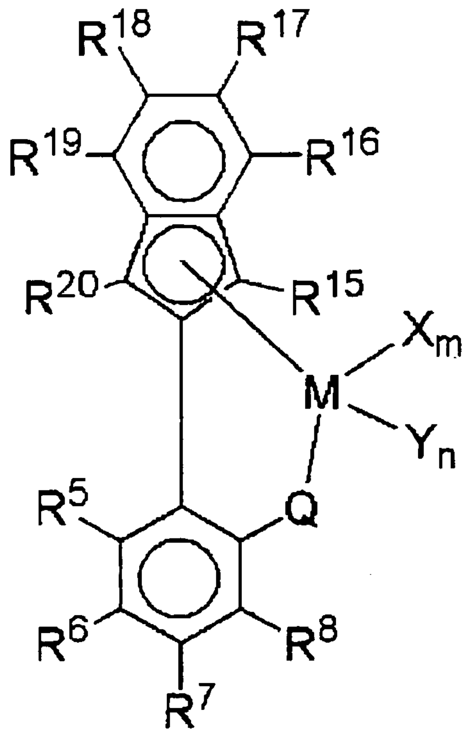

• • • (3)

In the above general formula (3), $R^{15}$ to $R^{20}$ may be the same as or different from each other, and represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and the two groups among the groups represented by $R^{15}$ to $R^{20}$, which are adjacent to each other, may be combined to form an aromatic ring, an aliphatic ring or a hetero ring, with the carbon atoms to which the two are bonded. As the halogen atom, the hydrocarbon group, the halogenated hydrocarbon group, the silyl group-substituted hydrocarbon group, the hydrocarbon group-substituted silyl group, the oxygen-containing group and the nitrogen-containing group, same atoms or groups exemplified for $R^1$ to $R^4$ can be exemplified.

Among $R^{15}$ to $R^{20}$ , at least one of $R^{15}$ and $R^{20}$ is preferably a halogen atom, a hydrocarbon group, a halogenated

hydrocarbon group, a silyl group-substituted hydrocarbon group or a hydrocarbon group-substituted silyl group, and specifically same atoms or groups exemplified for the above-mentioned $R^9$ to $R^{14}$ such as the halogen atom, the hydrocarbon group having 1 to 20 carbon atom(s), the halogenated hydrocarbon group having 1 to 20 carbon atom(s), the silyl group-substituted hydrocarbon group having 1 to 20 carbon atom(s) and the hydrocarbon group-substituted silyl group having 1 to 20 carbon atom(s), can be exemplified.

When both of $R^{15}$ and $R^{20}$ are each a group or an atom other than a hydrogen atom, they may be the same as or different from each other.

$R^{16}$ and $R^{19}$ are each preferably a halogen atom, a hydrocarbon group having 1 to 20 carbon atom(s), a halogenated hydrocarbon group having 1 to 20 carbon atom(s), a silyl group-substituted hydrocarbon group having 1 to 20 carbon atom(s), or a hydrocarbon group-substituted silyl group having 1 to 20 carbon atom(s) in total, and specifically the same atoms or groups exemplified as preferable groups for $R^{15}$ to $R^{20}$ can be exemplified.

In addition, the two, three or all of $R^{15}$, $R^{16}$, $R^{19}$ and $R^{20}$ each may be a group or an atom other than a hydrogen atom, and they may be the same as or different from each other.

The two groups among the groups represented by $R^{16}$ to $R^{19}$, which are adjacent to each other, may be combined to form an expanded aromatic ring with the carbon atoms to which the two are bonded, and any adjacent groups of $R^{16}$ and $R^{17}$, $R^{17}$ and $R^{18}$, and $R^{18}$ and $R^{19}$, may be combined with each other to form an expanded aromatic ring.

In specific, it is preferably benzoindenyl, dibenzoindenyl or substituted benzoindenyl, and in particular, it is more preferably substituted benzoindenyl in which hydrogen in the benzoindenyl group is substituted to a hydrocarbon group having 1 to 20 carbon atom (s), a halogenated hydrocarbon group having 1 to 20 carbon atom(s), a silyl group-substituted hydrocarbon group having 1 to 20 carbon atom(s), or a hydrocarbon group-substituted silyl group having 1 to 20 carbon atom(s) in total, since they give an improved effect on molecular weight and stereoregularity in polymerization of $\alpha$-olefin.

When the two groups among the groups represented by $R^{16}$ to $R^{19}$, which are adjacent to each other, are combined to form an expanded aromatic ring with the carbon atoms to which the two are bonded, any one or both of $R^{15}$ and $R^{20}$ may be each an atom or a group other than a hydrogen atom, and they may be the same as or different from each other.

[Chem. 12]

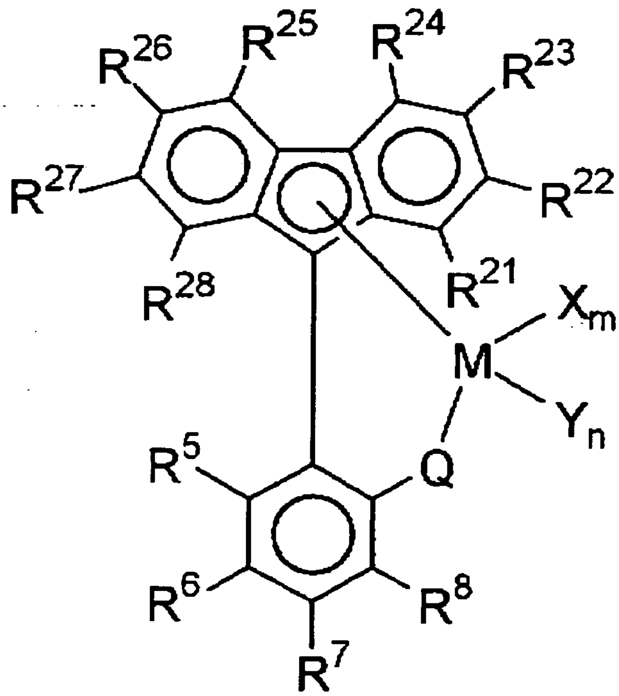

· · · (4)

In the above general formula (4), $R^{21}$ to $R^{28}$, which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and the two groups among the groups represented by $R^{21}$ to $R^{28}$, which are adjacent to each other, may be combined to form an aromatic ring, an aliphatic ring or a hetero ring, with the carbon atoms to which the two are bonded. As the halogen atom, the hydrocarbon group, the halogenated hydrocarbon group, the silyl group-substituted hydrocarbon group, the hydrocarbon group-substituted silyl group, the oxygen-containing group and the nitrogen-containing group, same atoms or groups exemplified for $R^1$ to $R^4$ can be exemplified.

When the two groups among the groups represented by $R^{21}$ to $R^{28}$, which are adjacent to each other, are combined to form a ring with the carbon atoms to which the two are bonded, preferably $R^{22}$ and $R^{23}$, and $R^{26}$ and $R^{27}$ are combined with each other to form a ring, and preferably to form an aliphatic ring. In this case, $R^{21}$, $R^{24}$, $R^{25}$ and $R^{28}$ are each preferably a hydrogen atom. In addition, the ring formed by combining the two groups among the groups represented by $R^{21}$ to $R^{28}$, which are adjacent to each other with the carbon atoms to which the two are bonded, may be substituted with at least one atom or a group selected from a halogen atom, a hydrocarbon group, a halogenated hydrocarbon group, a silyl group-substituted hydrocarbon group and a hydrocarbon group-substituted silyl group.

At least one of $R^{22}$, $R^{23}$, $R^{26}$ and $R^{27}$, preferably $R^{22}$ and $R^{27}$ or $R^{23}$ and $R^{26}$ is a tertiary alkyl group, an arylalkyl group, an aryl group, an alicyclic group, a halogenated alkyl group, a halogen-containing aromatic group, or a tertiary silyl group. As the tertiary alkyl group, the arylalkyl group, the aryl group, the alicyclic group, the halogenated alkyl group and the tertiary silyl group, same groups exemplified as preferable examples for $R^8$ can be exemplified.

Specific examples of the transition metal compound (A) represented by the above general formula (1) will be described below, but it is not limited thereto.

In the present specification, a methyl group, an ethyl group, an n-propyl group, a tert-butyl group, an adamanthyl group, a cumyl group, a trimethylsilyl group, a triphenylsilyl group, a trityl group, a phenyl group, a naphthyl group, a phenanthryl group and a mesityl group (2,4,6-trimethylphenyl) are sometimes abbreviated as Me, Et, $^n$Pu, $^t$Bu, Ad, Cu, TMS, TPS, Tr, Ph, Nap, Phen and Mes, respectively.

[Chem. 13]

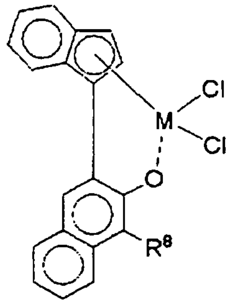

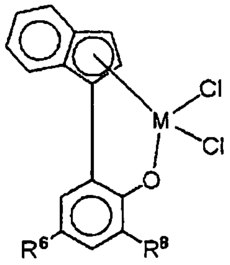

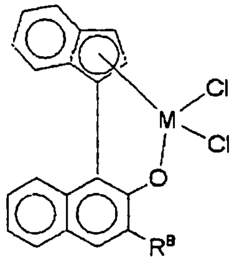

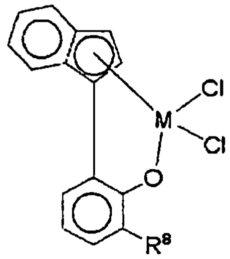

M=Ti, Zr, Hf
$R^6$, $R^8$=$^t$Bu, Ad, TMS, Cu, Ph, Tr, TPS

[Chem. 14]

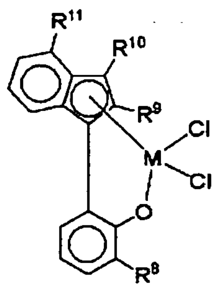

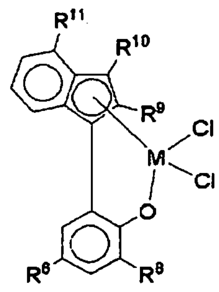

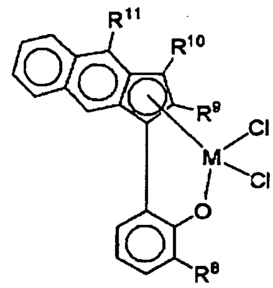

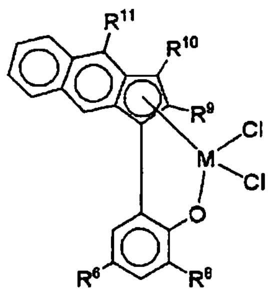

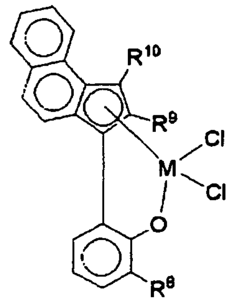

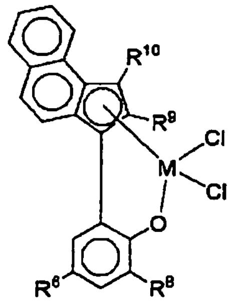

M=Ti, Zr, Hf
$R^6$, $R^8$=$^t$Bu, Ad, TMS, Cu, Ph, Tr, TPS
$R^9$,$R^{10}$=Me, Et, $^n$Pr, Ph
$R^{11}$=Ph, Mes, Nap, Phen, TPS

[Chem. 15]

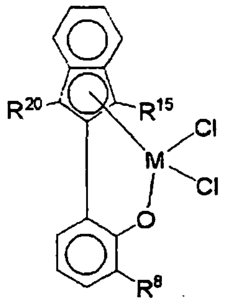
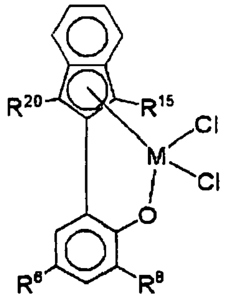
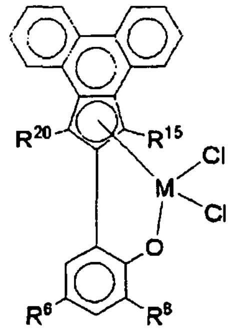
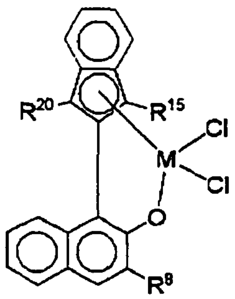
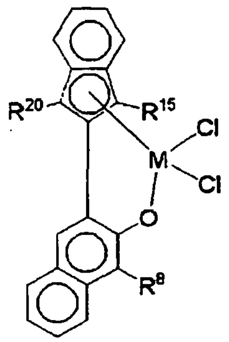

M=Ti, Zr, Hf
$R^6$, $R^8$=$^t$Bu, Ad, TMS, Cu, Ph, Tr,
TPS
$R^{15}$,$R^{20}$=Me, Et, $^n$Pr, Ph

[Chem. 16]

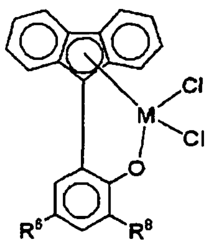
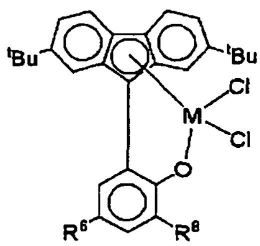
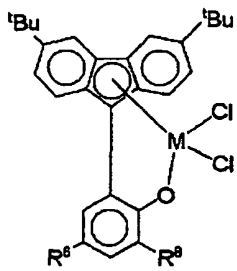
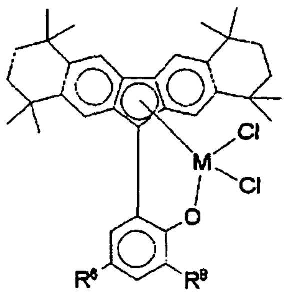
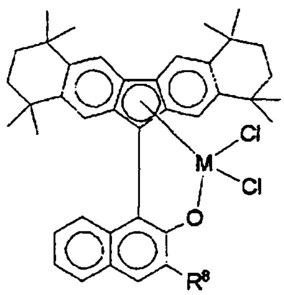
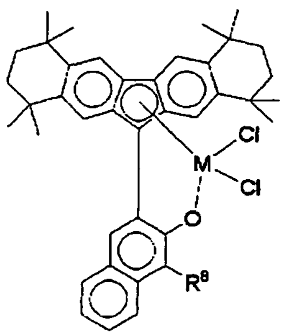

M=Ti, Zr, Hf
$R^6$, $R^8$=$^t$Bu, Ad, TMS, Cu, Ph, Tr,
TPS
$R^{15}$,$R^{20}$=Me, Et, $^n$Pr, Ph

Such transition metal compound (A) can be, for example, produced by the following processes for producing the transition metal compound.

[(B-1) Organometallic Compound]

As the organometallic compounds (B-1), specifically the following Groups 1, 2 and 12, 13 of the periodic table

can be exemplified.

(B-1a) An organoaluminum compound which can be represented by a general formula $R^a{}_mAl(OR^b)_nH_pX_q$, wherein, $R^a$ and $R^b$ may be the same as or different from each other and represent each a hydrocarbon group having 1 to 15, preferably 1 to 4 carbon atom(s); X represents a halogen atom; m, n, p and q are numbers of $0<m\leq3$, $0\leq n<3$, $0\leq p<3$ and $0\leq q<3$, respectively; and m+n+p+q = 3.

(B-1b) An alkylated complex composed of Group 1 metal and aluminum, which can be represented by a general formula $M^2AlR^a{}_4$, wherein, $M^2$ represents Li, Na, or K; and $R^a$ represents a hydrocarbon group having 1 to 15, preferably 1 to 4 carbon atoms.

(B-1c) A dialkyl compound of Group 2 or 12 metals, which can be represented by a general formula $R^aR^bM^3$, wherein, $R^a$ and $R^b$ are the same as or different from each other, and represent each a hydrocarbon group having 1 to 15, preferably 1 to 4 carbon atom(s); and $M^3$ is Mg, Zn, or Cd.

As the above-mentioned organoaluminum compounds belong to (B-1a), the following compounds can be exemplified.

An organoaluminum compound which can be represented by a general formula $R^a{}_mAl(OR^b)_{3-m}$, wherein, $R^a$ and $R^b$ are the same as or different from each other, and represent each a hydrocarbon group having 1 to 15, preferably 1 to 4 carbon atoms; and m is a number of $1.5\leq m\leq3$.

An organoaluminum compound, which can be represented by a general formula $R^a{}_mAlX_{3-m}$, wherein, $R^a$ represents a hydrocarbon group having 1 to 15, preferably 1 to 4 carbon atoms; X represents a halogen atom; and m is preferably $0<m<3$.

An organoaluminum compound represented by a general formula $R^a{}_mAlH_{3-m}$, wherein, $R^a$ represents a hydrocarbon group having 1 to 15, preferably 1 to 4 carbon atoms; and m is preferably $2\leq m<3$.

An organoaluminum compound represented by general formula $R^a{}_mAl(OR^b)_nX_q$, wherein, $R^a$ and $R^b$ may be the same as or different from each other, and represent each a hydrocarbon group having 1 to 15, preferably 1 to 4 carbon atom (s) ; X represents a halogen atom; m, n, and q are numbers of $0<m\leq3$, $0\leq n<3$ and $0\leq q<3$, respectively; and m+n+q = 3.

A As the organoaluminum compound belongs to (B-1a) is specifically exemplified by trialkylaluminum such as trimethylaluminum, triethylaluminium, tri-n-butylaluminum, tripropylaluminum, tripentylaluminium, trihexylaluminium, trioctylaluminium, tridecylaluminium and the like; tribranchedalkylaluminum such as triisopropylaluminum, triisobutylaluminium, tri-sec-butylaluminum, tri-tert-butylaluminum, tri-2-methylbutylaluminium, tri-3-methylbutylaluminium, tri-2-methylpentylaluminium, tri-3-methylpentylaluminium, tri-4-methylpentylaluminium, tri-2-methylhexylaluminium, tri-3-methylhexylaluminium, tri-2-ethylhexylaluminium and the like; tricycloalkylaluminum such as tricyclohexylaluminum, tricyclooctylaluminum and the like; triarylaluminum such as triphenylaluminum, tritolylaluminum and the like; dialkylaluminum hydride such as diethylaluminum hydride, diisobutylaluminum hydride and the like; trialkenylaluminum such as triisoprenylaluminum and the like which can be represented by $(i\text{-}C_4H_9)xAly(C_5H_{10})z$, wherein, x, y and z are each a positive numeral, and $z \geq 2x$) etc.; alkylaluminium alkoxide such as isobutylaluminum methoxide, isobutylaluminum ethoxide, isobutylaluminium isopropoxide and the like; dialkylaluminium alkoxide such as dimethylaluminum methoxide, diethylaluminum ethoxide, dibutylaluminum butoxide and the like; alkylaluminum sesquialkoxide such as ethylaluminum sesquiethoxide, butylaluminum sesquibutoxide and the like; partially alkoxylated alkylaluminum having an average composition of the formula $R^a{}_{2.5}Al(OR^b)_{0.5}$; dialkylaluminum aryloxide such as diethylaluminum phenoxide, diethylaluminum (2,6-di-tert-butyl-4-methylphenoxide), ethylaluminumbis(2,6-di-tert-butyl-4-methylphenoxide), diisobutylaluminum(2,6-di-tert-butyl-4-methylphenoxide), isobutylaluminumbis(2,6-di-tert-butyl-4-methylphenoxide) and the like; dialkylaluminum halide such as dimethylaluminum chloride, diethylaluminium chloride, dibutylaluminum chloride, diethylaluminum bromide, diisobutylaluminum chloride and the like; alkylaluminum sesquihalide such as ethylaluminium sesquichloride, butylaluminum sesquichloride, ethylaluminum sesquibromide and the like; partially halogenated alkylaluminum, for example alkylaluminum dihalides such as ethylaluminum dichloride, propylaluminum dichloride, butylaluminum dibromide and the like; dialkylaluminium hydride such as diethylaluminum hydride, dibutylaluminum hydride and the like; other partially hydrogenated alkylaluminum, for example alkylaluminum dihydride such as ethylaluminum dihydride, propylaluminum dihydride and the like; and partially alkoxylated and halogenated alkylaluminum such as ethylaluminum ethoxychloride, butylaluminum butoxychloride, ethylaluminum ethoxybromide and the like.

In addition, compounds similar to (B-1a) can also be used, and for example, an organoaluminum compound in which two or more aluminum compounds are bonded via nitrogen can be exemplified. A specific example of such compounds includes $(C_2H_5)_2AlN(C_2H_5)Al(C_2H_5)_2$.

As a compound belongs to the above-mentioned compound (B-1b), $LiAl(C_2H_5)_4$ and $LiAl(C_7H_{15})_4$ is exemplified.

In addition, as the organometallic compounds (B-1), methyllithium, ethyllithium, propyllithium, butyllithium, methylmagnesium bromide, methylmagnesium chloride, ethylmagnesium bromide, ethylmagnesium chloride, propylmagnesium bromide, propylmagnesium chloride, butylmagnesium bromide, butylmagnesium chloride, dimethyl magnesium, diethyl magnesium, dibutyl magnesium, butylethyl magnesium and the like, may also be used.

Further, compounds which can form the above-mentioned aluminum compounds in the polymerization system, for example combination of halogenated aluminum and alkyllithium, or combination of halogenated aluminum and alkylmagnesium, can also be used. Among the organometallic compounds (B-1), the organoaluminum compound is preferable.

The above-mentioned organometallic compounds (B-1) can be used alone or in combination with 2 or more kinds.

[(B-2) Organoaluminum oxy Compound]

The organoaluminum oxy compounds (B-2) used according to necessity in the present invention may be a conventional publicly known aluminoxane or benzene-insoluble organoaluminum oxy compounds disclosed as examples in JP-A-2-78678. The known aluminoxane can be produced by e.g., the following processes, and in general, it is obtained as a hydrocarbon solvent solution.

[1] A process comprises adding an organoaluminum compound such as trialkylaluminum to a hydrocarbon solvent in which a compound containing adsorbed water or a salt containing crystal water, e.g., magnesium chloride hydrate, copper sulfate hydrate, aluminum sulfate hydrate, nickel sulfate hydrate or cerium(I) chloride hydrate are suspended, and reacting the organoaluminum compound with the absorbed water or crystal water.

[2] A process comprises reacting water, ice or steam directly with an organoaluminum compound such as trialkylaluminum in a solvent e.g., benzene, toluene, ethyl ether or tetrahydrofuran.

[3] A process comprises reacting an organotinoxide such as dimethyltinoxide or dibutyltinoxide with an organoaluminum compound such as trialkylaluminum in a solvent, e.g., decane, benzene or toluene.

Moreover, the aluminoxane may contain a small amount of organometal component. Furthermore, the solvent or unreacted organoaluminum compound is distilled and removed from the above-mentioned recovered aluminoxane solution, and then the aluminoxane may be re-dissolved in a solvent or suspended in a poor solvent of aluminoxane.

As specific examples of the organoaluminum compound used for the preparation of aluminoxane, same organoaluminum compounds exemplified for the above-mentioned organoaluminum compound (B-1a) can be exemplified. Of these compounds, trialkylaluminum and tricycloalkylaluminum are preferable, and trimethylaluminum is particularly preferable. Such mentioned organoaluminum compounds can be used alone or in combination with 2 or more kinds.

The solvents useful for preparation of aluminoxane include aromatic hydrocarbons such as benzene, toluene, xylene, cumene cymene; aliphatic hydrocarbons such as pentane, hexane, heptane, octane, decane, dodecane, hexadecane and octadecane; alicyclic hydrocarbons such as cyclopentane, cyclohexane, cyclooctane and methylcyclopentane; petroleum fractions such as gasoline, kerosene and gas oil; and halides of the above aromatic, aliphatic and alicyclic hydrocarbons (e.g.,chlorides, bromides, etc.). The other useful compounds include ethers, such as ethyl ether and tetrahydrofuran. Of these solvents, aromatic hydrocarbons or aliphatic hydrocarbons are preferable.

The benzene-insoluble organoaluminum oxy compounds contain an Al component soluble in benzene at 60 °C in an amount of generally 10% or less, preferably 5% or less, particularly preferably 2% or less in terms of Al atom, and they are preferably insoluble or hardly soluble in benzene.

An example of the organoaluminum oxy compound also includes a boron-containing organoaluminum oxy compound (G-1), which can be represented by the following general formula (5).

[Chem. 17]

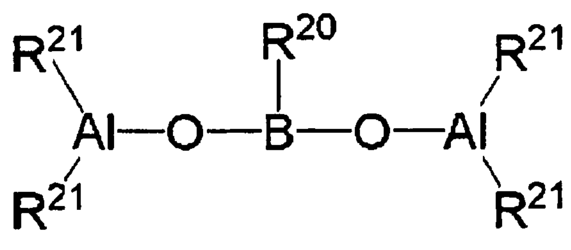

・・・ (5)

wherein, $R^{20}$ represents a hydrocarbon group having 1 to 10 carbon atom(s). $R^{21}$s represent each a hydrogen atom, a halogen atom or a hydrocarbon group having 1 to 10 carbon atom(s), and may be the same as or different from each other.

The boron-containing organoaluminum oxy compound (G-1) represented by the above general formula (5) can be produced with reacting alkylboronic acid (G-2) represented by the following general formula (6),

[Chem. 18] **$R^{20}$-$B(OH)_2$** (6)

wherein, $R^{20}$ represents a same group as $R^{20}$ in the above general formula (5), with the organoaluminum compound in an inactive solvent under an inert gas atmosphere for 1 minute to 24 hours at a temperature range of -80°C to room temperature.

Specific examples of the alkylboronic acid (G-2) represented by the general formula (6) include methylboronic acid, ethylboronic acid, isopropylboronic acid, n-propylboronic acid, n-butylboronic acid, isobutylboronic acid, n-hexylboronic acid, cyclohexylboronic acid, phenylboronic acid, 3,5-difluorophenylboronic acid, pentafluorophenylboronic acid and 3,5-bis(trifluoromethyl)phenylboronic acid.

Among these, methylboronic acid, n-butylboronic acid, isobutylboronic acid, 3,5-difluorophenylboronic acid and pentafluorophenylboronic acid are preferable.

These can be used alone or in combination with 2 or more kinds.

As organoaluminum-compounds for reacting with such mentioned alkylboronic acids, in specific, same organoaluminum compounds exemplified for organoaluminum compound belongs to above-mentioned (B-1a) can be exemplified. Among these, trialkylaluminium and tricycloalkylaluminum are preferable, and trimethylaluminum, triethylaluminium and triisobutylaluminium are particularly preferable. These can be used alone or in combination with 2 or more kinds. The above-mentioned organoaluminum oxy compounds (B-2) can be used alone or in combination with 2 or more kinds.

[(B-3) Ionizing Ionic Compound]

The ionizing ionic compounds (B-3) are the compounds which react with the transition metal compound (A) to form an ion pair. Examples of the compounds include Lewis acids, ionic compounds, borane compounds and carborane compounds as described in JP-A-1-501950, JP-A-1-502036, JP-A-3-179005, and U.S. Pat. No. 5,321,106, etc.. Examples further include a heteropoly compound and an isopoly compound.

Specifically, examples of the Lewis acids include compounds represented by $BR_3$ (wherein R is a phenyl group which may have a substituent group such as fluorine, methyl group or trifluoromethyl group, or a fluorine atom)_, e.g. trifluoroboron, triphenylboron, tris(4-fluorophenyl)boron, tris(3,5-difluorophenyl)boron, tris(4-fluoromethylphenyl)boron, tris(pentafluorophenyl)boron, tris(p-tolyl)boron, tris(o-tolyl)boron, tris(3,5-dimethylphenyl)boron and the like.

Examples of the ionic compounds include compounds represented by the following general formula (7).

[Chem. 19]

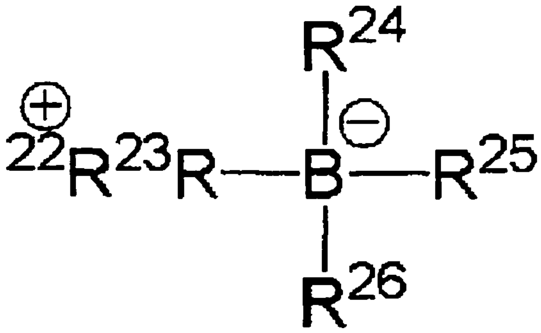

• • • (7)

Here, $R^{22+}$ is exemplified by $H^+$, carbonium cation, oxonium cation, ammonium cation, phosphonium cation, cycloheptyltrienyl cation, ferrocenium cation having a transition metal or the like. $R^{23}$ to $R^{26}$ may be the same as or different from each other and represent each an organic group, preferably an aryl group or a substituted aryl group. Specific examples of above-mentioned carbonium cation include tri-substituted carbonium cations such as triphenylcarbonium cation, tri(methylphenyl)carbonium cation and tri(dimethylphenyl)carbonium cation. Specific examples of above-mentioned ammonium cation include trialkylammonium cations such as trimethylammonium cation, triethylammonium cation, tripropylammonium cation, tributylammonium cation and tri(n-butyl)ammonium cation; N,N-dialkylanilinium cations such as N,N-dimethylanilinium cation, N,N-diethylanilinium cation and N,N-2,4,6-pentamethylanilinium cation; dialkylammonium cations such as di (isopropyl) ammonium cation and dicyclohexylammonium cation; and the like. Specific examples of above-mentioned phosphonium cation include triarylphosphonium cations such as triphenylphosphonium cation, tri(methylphenyl)phosphonium cation and tri(dimethylphenyl)phosphonium cation and the like.

The $R^{22+}$ is preferably carbonium cation, ammonium cation or the like, and particularly preferably triphenylcarbonium cation, N,N-dimethylanilinium cation or N,N-diethylanilinium cation.

Examples of the ionic compounds include trialkyl-substituted ammonium salts, N,N-dialkylanilinium salts, dialkylammonium salts, triarylphosphonium salts and the - like.

Specific examples of the trialkyl-substituted ammonium salts include triethylammoniumtetra(phenyl)boron, tripropylammoniumtetra(phenyl)boron, tri(n-butyl)ammoniumtetra(phenyl)boron, trimethylammoniumtetra(p-tolyl)boron, trimethylammoniumtetra(o-tolyl)boron, tri(n-butyl)ammoniumtetra(pentafluorophenyl)boron, tripropylammoniumtetra(o, p-dimethylphenyl)boron, tri(n-butyl)ammoniumtetra(m,m-dimethylphenyl)boron, tri(n-butyl)ammoniumtetra(p-trifluoromethylphenyl)boron, tri(n-butyl)ammoniumtetra(3,5-ditrifluoromethylphenyl) boron, tri(n-butyl)ammoniumtetra(o-tolyl) boron and the like. Specific examples of the N,N-dialkylanilinium salts include N,N-dimethylaniliniumtetra(phenyl)boron, N,N-diethylaniliniumtetra(phenyl)boron, N,N-2,4,6-pentamethylaniliniumtetra(phenyl)boron and the like. Specific examples of the dialkylammonium salts include, for example, di(1-propyl)ammoniumtetra(pentafluorophenyl)boron, dicyclohexylammoniumtetra(phenyl)boron and the like. Examples of the ionic compounds further include triphenylcarbeniumtetrakis(pentafluorophenyl)borate, N,N-dimethylaniliniumtetrakis(pentafluorophenyl)borate, ferroceniumtetra(pentafluorophenyl)borate, triphenylcarbeniumpentaphenylcyclopentadienyl complex, N,N-diethylaniliniumpentaphenylcyclopentadienyl complex, boron compounds represented by the following general formula (8) or (9) and the like.

[Chem. 20]

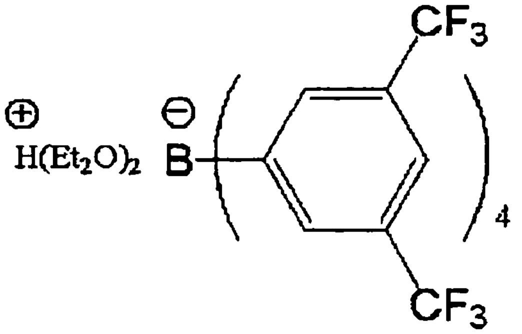

. . . (8)

Wherein, Et is an ethyl group)

[Chem. 21]

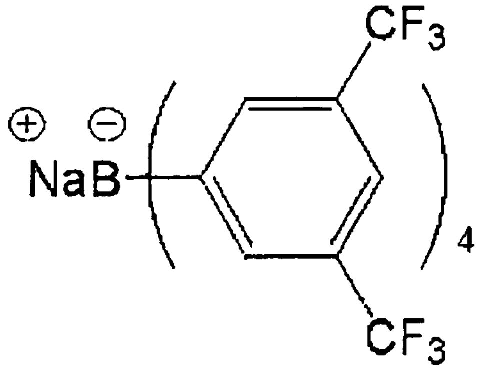

. . . (9)

Specific examples of the borane compounds include decaborane; salts of anions such as bis[tri(n-butyl)ammonium]nonaborate, bis[tri(n-butyl)ammonium]decaborate, bis[tri(n-butyl)ammonium]undecaborate, bis[tri(n-butyl)ammonium]dodecaborate, bis[tri(n-butyl)ammonium]decachlorodecaborate and bis[tri(n-butyl)ammonium]dodecachlorododecaborate; salts of metallic borane anions such as tri(n-butyl)ammoniumbis(dodecahydridododecaborato) cobaltate (III) and bis[tri(n-butyl)ammonium]bis(dodecahydridododecaborato) nickelate(III).

Specific examples of the carborane compounds include salts of anions such as 4-carbanonaborane, 1,3-dicarbanonaborane, 6,9-dicarbadecaborane, dodecahydrido-1-phenyl-1,3-dicarbanonaborane, dodecahydrido-1-methyl-1,3-dicarbanonaborane, undecahydrido-1,3-dimethyl-1,3-dicarbanonaborane, 7,8-dicarbaundecaborane, 2,7-dicarbaundecaborane, undecahydrido-7,8-dimethyl-7,8-dicarbaundecaborane, dodecahydrido-11-methyl-2,7-dicarbaundecaborane, tri(n-butyl)ammoniuml-carbadecaborate, tri(n-butyl)ammoniuml-carbaundecaborate, tri(n-butyl)ammoniuml-carbadodecaborate, tri(n-butyl)ammoniuml-trimethylsilyl-1-carbadecaborate, tri(n-butyl)ammoniumbromo-1-carbadodecaborate, tri (n-butyl) ammonium6-carbadecaborate-, tri(n-butyl)ammonium6-carbadecaborate, tri(n-butyl) ammonium7-carbaundecaborate, tri(n-butyl)ammonium7,8-dicarbaundecaborate, tri(n-butyl)ammonium2,9-dicarbaundecaborate, tri(n-butyl)ammoniumdodecahydrido-8-methyl-7,9-dicarbaundec aborate, tri(n-butyl)ammoniumundecahydrido-8-ethyl-7,9-dicarbaundeca borate, tri(n-butyl)ammoniumundecahydrido-8-butyl-7,9-dicarbaundeca borate, tri(n-butyl)ammoniumundecahydrido-8-allyl-7,9-dicarbaundeca borate, tri(n-butyl)ammoniumundecahydrido-9-trimethylsilyl-7,8-dica rbaundecaborate and tri(n-butyl)ammoniumundecahydrido-4,6-dibromo-7-carbaundeca borate; salts of metallic carborane anions such as tri(n-butyl)ammoniumbis(nonahydrido-1,3-dicarbanonaborato) cobaltate(III), tri(n-butyl)ammoniumbis(undecahydrido-7,8-dicarbaundecabora to)ferrate(III), tri(n-butyl)ammoniumbis(undecahydrido-7,8-dicarbaundecabora to)cobaltate(III), tri(n-butyl)ammoniumbis(undecahydrido-7,8-dicarbaundecabora to)nickelate(III), tri(n-butyl)ammoniumbis(undecahydrido-7,8-dicarbaundecabora to)cuprate(III), tri(n-butyl)ammoniumbis(undecahydrido-7,8-dicarbaundecabora to)aurate(III), tri(n-butyl)ammoniumbis(nonahydrido-7,8-dimethyl-7,8-dicarb aundecaborato) ferrate(III), tri(n-butyl)ammoniumbis(nonahydrido-7,8-dimethyl-7,8-dicarb aundecaborato)chromate(III), tri(n-butyl)ammoniumbis(tribromooctahydrido-7,8-dicarbaunde caborato)cobaltate(III), tris[tri(n-butyl)ammonium]bis(undecahydrido-7-carbaundecabo rato)chromate(III), bis[tri(n-butyl)ammonium]bis(undecahydrido-7-carbaundecabor ato)manganate (IV), bis[tri(n-butyl)ammonium]bis(undecahydrido-7-carbaundecabor ato)cobaltate(III) and bis[tri(n-butyl)ammonium]bis (undecahydrido-7-carbaundecabor ato)nickelate(IV).

The heteropoly compound consists of an atom selected from silicon, phosphorus, titanium, germanium, arsenic and tin, and one or two or more atom(s) selected from vanadium, niobium, molybdenum and tungsten. Specific examples of the heteropoly compound include phosphovanadic acid, germanovanadic acid, arsenovanadic acid, phosphoniobic acid, germanoniobic acid, siliconomolybdic acid, phosphomolybdic acid, titanomolybdic acid, germanomolybdic acid, arsenomolybdic acid, stannnomolybdic acid, phosphotungstic acid, germanotungstic acid, stannotungstic acid, phosphomolybdovanadic acid, phosphotungstovanadic acid, germanotungstovanadic acid, phosphomolybdotungstovanadic acid, germanomolybdotungstovanadic acid, phosphomolybdotungstic acid and phosphomolybdoniobic acid, salts of these acids for example, Group 1 or Group 2 metals of the periodic table such as lithium, sodium, potassium, rubidium, cesium, beryllium, magnesium, calcium, strontium or barium, organic salts such as triphenylethyl salt, isopoly compounds, and the like. For the heteropoly compound and the isopoly compound, 2 or more kinds among the above-mentioned compounds can be used in combination, without being limited to one kind.

The ionizing ionic compounds (B-3) mentioned above can be used alone or in combination with 2 or more kinds.

[Other Transition Metal Compound]

In the polymerization of the present invention, other known transition metal compounds, which consist of ligands

containing heteroatoms, for example, nitrogen, oxygen, sulfur, boron or phosphorous can be used in combination with the above-mentioned transition metal compound (A).

[Polymerization Process of Olefin]

The process for producing olefin polymers related to the present invention either polymerize one olefin selected from the following olefins or copolymerize two or more kinds selected from the following olefins, in the presence of the above component (A), component (B), and if necessary, catalysts comprising other transition metal compounds.

An olefin is a compound having a carbon - carbon double bond, and it may be for example so-called hydrocarbon consisting only of carbon atoms and hydrogen atoms, or may be a compound containing a heteroatom such as an oxygen atom, a nitrogen atom or a sulfur atom. Specific examples include $\alpha$-olefins having 2 to 20 carbon atoms such as ethylene, propylene, 1-butene, 1-pentene, 3-methyl-1-butene, 1-hexene, 4-methyl-1-pentene, 3-methyl-1-pentene, 3,4-dimethyl-1-pentene, 4-methyl-1-hexene, 3-ethyl-1-pentene, 3-ethyl-4-methyl-1-pentene, 3,4-dimethyl-1-hexene, 4-methyl-1-heptene, 3,4-dimethyl-1-heptene, 1-octene, 1-decene, 1-dodecen, 1-tetradecene, 1-hexadecene, 1-octadecene and 1-eicosen; oligomers of $\alpha$-olefins each having a double bond on one end, of which the Mw (relative to polystyrene standards) is ranging from 300 to 20000, such as oligoethylene; olefins each having a double bond at its inner part such as cis-2-butene and trans-2-butene; vinylidene compounds such as isobutene, 2-methyl-1-pentene, 2,4-dimethyl-1-pentene, 2,4-dimethyl-1-hexene, 2,4,4-trimethyl-1-pentene, 2,4-dimethyl-1-heptene, 2-methylbuten, 2-methylhexene, 2-methylheptene, 2-methyloctene, 2,3-dimethylbutene, 2,3-dimethylpentene, 2,3-dimethylhexene, 2,3-dimethyloctene, 2,3,3-trimethylbuten, 2,3,3-trimethylpentene, 2,3,3-trimethylhexene, 2,3,3-trimethyloctene, 2,3,4-trimethylpentene, 2,3,4-trimethylhexene, 2,3,4-trimethyloctene, 2,4,4-trimethylhexene, 2,4,4-trimethyloctene, 2-methyl-3-cyclohexylpropylene, vinylidenecyclopentane, vinylidenecyclohexane, vinylidenecyclooctane, 2-methylvinylidenecyclopentane, 3-methylvinylidenecyclopentane, 4-methylvinylidenecyclopentane, isoprene, 4-methyl-1,4-pentadiene, $\alpha$-methylstyrene, $\alpha$-ethylstyrene, 2-methyl-3-phenylpropylene, methyl methacrylate, ethyl methacrylate, n-propyl methacrylate, iso-propyl methacrylate, n-butyl methacrylate, iso-butyl methacrylate, tert-butyl methacrylate, 2-cyanopropylene, 2-methoxycarbonylpropylene, 2-aminopropylene, 2-hydroxymethylpropylene, 2-fluoropropylene and 2-chloropropylene; cyclic olefins having 3 to 20 carbon atoms such as cyclopentene, cyclohexene, cycloheptene, norbornene, 5-methyl-2-norbornene and tetracyclododecen; cyclic or acyclic dienes or polyenes having 2 or more double bonds and 4 to 30 carbon atoms, preferably 4 to 20 carbon atoms such as butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidenenorbornene, vinylnorbornene, dicyclopentadiene; 7-methyl-1,6-octadiene, 4-ethylidene-8-methyl-1,7-nonadiene and 5,9-dimethyl-1,4,8-decatriene; aromatic vinyl compounds such as styrene, o-methylstyrene, m-methylstyrene, p-methylstyrene, o, p-dimethylstyrene, o-ethylstyrene, m-ethylstyrene and p-ethylstyrene; vinylcyclohexane.

In addition, olefins may have a functional group including atoms such as oxygen, nitrogen and sulfur. Examples include unsaturated carboxylic acid such as acrylic acid, methacrylic acid, fumaric acid, itaconic acid and bicyclo [2.2.1]-5-heptene-2,3-dicarboxylic acid, and their metallic salts such as sodium salt, potassium salt, lithium salt, zinc salt, magnesium salt and calcium salt of the unsaturated carboxylic acids;

unsaturated carboxylic anhydride such as maleic anhydride, itaconic acid anhydride, and bicyclo [2.2.1]-5-heptene-2,3-dicarboxylic acid anhydride; unsaturated carboxylic ester such as methyl acrylate, ethyl acrylate, n-propyl acrylate, isopropyl acrylate, n-butyl acrylate, isobutyl acrylate, tert-butyl acrylate, 2-ethylhexyl acrylate, methyl methacrylate, ethyl methacrylate, n-propyl methacrylate, isopropyl methacrylate, n-butyl methacrylate and isobutyl methacrylate;

vinyl esters such as vinyl acetate, vinyl propionate, vinyl caproate, vinyl caprate, vinyl laurate, vinyl stearate and vinyl trifluoroacetate; unsaturated glycidyl esters such as glycidyl acrylate, glycidyl methacrylate andmonoglycidylester itaconate; halogenated olefins such as vinyl chloride, vinyl fluoride and allyl fluoride; unsaturated cyano compounds such as acrylonitrile and 2-cyano-bicyclo[2.2.1]-5-heptene; unsaturated ether compounds such as methyl vinyl ether and ethyl vinyl ether; unsaturated amide such as acrylamide, methacrylamide and N,N-dimethylacrylamide; functional group-containing styrene derivatives such as methoxystyrene, ethoxystyrene, vinyl benzoate, methyl vinyl benzoate, vinylbenzyl acetate, hydroxystyrene, o-chlorostyrene, p-chlorostyrene and divinylbenzene; N-vinylpyrrolidone and the like.

Olefin is preferably ethylene or $\alpha$-olefin, and particularly preferably ethylene.

For the polymerization, the process of adding the component (A) to a polymerization vessel, the usage of each component, the adding process, and the adding order can be selected arbitrarily. Some exemplary processes are given below.

(1) The component (A) and the component (B) are added to a polymerization vessel in an arbitrary order.
(2) A catalyst in which the components (A) and (B) are contacted in advance is added to a polymerization vessel.
(3) A catalyst component in which the components (A) and (B) are contacted in advance, and the component (B) are added to a polymerization vessel in an arbitrary order. In this case, these components (B) may be the same or different.

In the present invention, the polymerization can be carried out through any of liquid-phase polymerization processes such as solution polymerization or suspension polymerization and gas-phase polymerization processes. Examples of the inert hydrocarbon media used in the liquid-phase polymerization include aliphatic hydrocarbons such as propane, butane, pentane, hexane, heptane, octane, decane, dodecane and kerosine; alicyclic hydrocarbons such as cyclopentane, cyclohexane and methylcyclopentane; aromatic hydrocarbons such as benzene, toluene and xylene; halogenated hydrocarbons such as ethylene chloride, chlorobenzene and dichloromethane; and mixtures of these hydrocarbons and the like. The olefin itself can also be used as the solvent.
To carry out the olefin polymerization in the presence of the above-mentioned catalyst, the component (A) is used in an amount of usually $10^{-13}$ to $10^{-2}$ mol, preferably $10^{-11}$ to $10^{-3}$ mol based on 1 liter of the reaction volume. Even in a case where the component (A) is used in a relatively high concentration, olefin can be polymerized with high polymerization activity.
The component (B-1) is used in such an amount that the molar ratio [(B-1)/(M)] of the component (B-1) to the transition metal atom (M) in the component (A) becomes usually 0.01 to 100,000, preferably 0.05 to 50,000.
The component (B-2) is used in such an amount that the molar ratio [(B-2)/(M)] of the aluminum atom in the component (B-2) to the transition metal atom (M) in the component (A) becomes usually 1 to 500,000, preferably 10 to 100,000.
The component (B-3) is used in such an amount that the molar ratio [(B-3)/(M)] of the component (B-3) to the transition metal atom (M) in the component (A) becomes usually 1 to 10, preferably 1 to 5.
When the component (B) is the component (B-1), the component (D is used in such an amount that the molar ratio [(D)/(B-1)] becomes usually 0.01 to 10, preferably 0.1 to 5 in the case that the component (D) is used. When the component (B) is the component (B-2), the component (D) is used in such an amount that the molar ratio [(D)/(B-2)] becomes usually 0.001 to 2 in the case that the component (D) is used, preferably 0.005 to 1. When the component (B) is the component (B-3), the component (D) is used in such an amount that the molar ratio [(D)/(B-3)] becomes usually 0.01 to 10, preferably 0.1 to 5 in the case that the component (D) is used.
The amount of olefin in polymerization system is not particular limited, and appropriately selected in accordance with a kind of olefin which to be used or a copolymerization ratio of the copolymer which to be obtained.
The temperature for the polymerization of using the above-mentioned polymerization catalyst is in the range of usually -50 to 200 °C, preferably 0 to 170 °C. The polymerization pressure is in the range of usually atmospheric pressure to 100 $kg/cm^2$ (9.8 MPa in approximate), preferably atmospheric pressure to 50 $kg/cm^2$ (4.9 MPa in approximate). The polymerization reaction can be carried out by any of batchwise, semi-continuous or continuous process. The polymerization can be conducted in two or more separated steps under different reaction conditions.
Changing a polymerization temperature, a monomer concentration, and a catalyst concentration can control the molecular weight and molecular weight distribution of polyolefin obtained according to the present invention. Further, it can be controlled by using a chain transfer agent such as hydrogen.
In addition, the molecular weight and molecular weight distribution of polyolefin obtained according to the present invention can be controlled by changing the use amount of organometallic compound (B-1), an organoaluminum oxy compound (B-2), or both compounds.
The use amount of the component (B) and the for controlling a molecular weight or a molecular weight distribution obtained in the present invention are 0.1 to 10,000,000, preferably 10 to 1,000,000, in a ratio of the number of mole of transition metal in the transition metal compounds to the number of mole of the organoaluminum compound (organoaluminum compound/transition metal). The molecular weight can be reduced by increasing the ratio of (organoaluminum compound/transition metal).
According to the present invention, polyolefin terminals can be functionalized with further using a particular reactive reagent (D) described below at the end of the polymerization. The terminal functionalizing process is not particularly limited and may be carried out according to any processes, for example, according to a process disclosed in Prog. Polym. Sci. , 2002(27), 1347, Macromol. Chem. Phys., 2001(202), 1757 or a process analogous thereto. Examples of the reagent (E) used in the process include reagents disclosed in the above-mentioned report, such as air, oxygen, sodium hydroxide/ hydrogen peroxide, chlorine / carbon tetrachloride, bromine/carbon tetrabromide, and iodine / carbon tetraiodide.
Polymerization process related to the present invention can be used as a process for producing polymers satisfying either of the following requirements (i) to (iv) or polymers having plural characteristics of those at the same time. It is used preferably to produce polymers satisfying the requirements (i) and (ii) or (i) and (iii) at the same time,

particularly preferably to produce polymers satisfying the requirements (i), (ii) and (iii) at the same time.

In addition, according to the polymerization process of the present invention, the following requirements can be satisfied when olefins of n kind (n is an integer of 2 or more) selected from α-olefins having 2 to 20 carbon atoms are copolymerized.

Upon copolymerizing n (where n is an integer of 2 or more) kinds of olefins M1, M2, ..., Mn which are selected from ethylene and α-olefins having 3 to 20 carbon atoms, when a ratio of a concentration Ri (which is a molar ratio of Mi to the total molar amount of all monomers and solvents in the copolymerization system) of either one olefin Mi (where i is an integer of 1 to n) among the olefins in the copolymerization system to the sum of the concentrations of all olefins (R1+R2+...+Rn) is defined as Ci (mol%) (= 100Ri/(R1+R2+...+Rn)) and an abundance ratio of the mol number of structural units derived from an olefin Mi in the obtained copolymer to the total number of mol of structural units derived from the olefins in the copolymer is defined as Pi (mol%), Ci/Pi values for all olefins M1, M2, ..., Mn satisfy the following formula (Eq-1), preferably (Eq-2), and more preferably (Eq-3).

$$0.33 \leq Ci/Pi \leq 1.50 \quad (Eq\text{-}1)$$

$$0.60 \leq Ci/Pi \leq 1.40 \quad (Eq\text{-}2)$$

$$0.75 \leq Ci/Pi \leq 1.30 \quad (Eq\text{-}3)$$

wherein, "i" is an integer of 1 to n. A concentration Ri (molar ratio) of ethylene, propylene, butane or the like, in a polymerization solution of each monomer, which is in a gas state under conditions of room temperature and atmospheric pressure, can be calculated by using Aspen Plus (calculation method based on RK-SOAVE; Reid, R.C.; Prausnitz, J. M.; Poling, B. E. The Properties of Gases and Liquids, 4th edition; MacGraw Hill: New York.), and by inputting monomer kind, monomer pressure, solvent kind and temperature. Concentration Ri (molar ratio) of decene or the like, in a solution of each monomer, which is in a solution sate under conditions of room temperature and atmospheric pressure, can be calculated by {(fed amount of olefin Mi × specific gravity) /molecular weight of Mi} / (total molar quantity of total monomer and solvent in the system).

In addition, the polymerization process of the present invention includes a process for producing polymers satisfying the above-mentioned (Eq-1), and at the same time having either of requirements (i) to (iv) or having plural of those requirements. It is preferably a process for producing polymers satisfying the above-mentioned (Eq-1) and at the same time satisfying the requirements (i) and (ii), or (i) and (iii), and particularly preferably a process for producing polymers satisfying the above-mentioned (Eq-1) and at the same time satisfying the requirements (i), (ii) and (iii).

When copolymerizing an olefin or one or more kinds of olefins selected from α-olefins having 2 to 20 carbon atoms with α-olefin oligomers having double bonds on their one end e.g., oligoethylenes, as the α-olefin oligomers to be used e.g., oligoethylenes are preferably the ones in which the amount of double bonds in oligoethylene is in the range that the ratio of double bonds-containing end groups to total end groups is 85% or more, and particularly preferably 90% or more.

As oligoethylenes having double bonds on their one end, ones produced by processes disclosed in JP-A-2000-351813, JP-A-2001-002731, JP-A-2003-73412, JP-A-2004-359861 and JP-A-2004-3598962, can be used.

Regarding the molecular weight of oligoethylene for a use, having double bonds on its one end, it is preferable that the Mw (relative to polystyrene standards) is within the range of 300 to 20000, in particular, it is preferable that the Mw (relative to polystyrene standards) is within the range of 300 to 10000, more preferably the Mw (relative to polystyrene standards) within the range of 300 to 5000, and particularly preferably within the range of, for example, 1000 to 5000.

In addition, the polymerization process of the present invention includes a process for producing either of above-mentioned polymers (i) and (iii), or polymers having both of these characteristics of the polymers at the same time by carrying out the polymerization in the presence of the above-mentioned olefin polymerization catalyst of the present invention, when copolymerizing an olefin or one or more kinds of olefins selected from α-olefins having 2 to 20 carbon atoms with above-mentioned α-olefin oligomers e.g., oligoethylenes.

It is preferable to carry out a liquid-phase polymerization process such as a solution polymerization or a suspension polymerization, and particularly preferable to carry out a solution polymerization in a state where oligomers of α-olefins e.g., oligoethylenes are dissolved completely.

When copolymerizing an olefin selected from α-olefins having 2 to 20 carbon atoms with a vinylidene compound

in accordance with the polymerization process of the present invention, it is particularly preferable to carry out a liquid-phase polymerization, and the polymerization temperature is in the range of usually -50 to 200 °C, and preferably 0 to 150 °C.

In addition, the polymerization process of the present invention is suitable as a process for producing copolymers having a content ratio (Uo/Uv) of the structural units (Uo) derived from an olefin to the structural units (Uv) derived from a vinylidene compound of 50/50 to 99/1 (molar ratio), by copolymerizing one or more kinds of olefins selected from α-olefins having 2 to 20 carbon atoms with a vinylidene compound in the presence of the above-mentioned catalysts for olefin polymerization.

According to the present invention, copolymerization of an α-olefin with a conjugated diene compound such as 1,3-butadiene and isoprene, can be carried out with high activity, and obtained polymer contains conj ugated diene in high ratio and has high molecular weight. Also, it is capable of obtaining a polymer having a narrow molecular weight distribution of for example, 3.0 or below, preferably 2.5 or below. It is particularly preferable for a copolymerization of ethylene · butadiene. Further, since the conjugated diene can be polymerized singly, obtained polymer has a high molecular weight. Also it is capable of obtaining a narrow molecular weight distribution of for example, 3.0 or below, preferably 2.5 or below.

[Olefin Polymer]

Olefin polymer related to the present invention can be obtained by carrying out an olefin polymerization with the above-mentioned process in the presence of the above-mentioned components (A) and (B), and if necessary, catalysts comprising other transition metal compounds.

Olefin polymer related to the present invention is a polymer that has either of the characteristics of the following (i) to (iv) or having plural characteristics of those at the same time. It is preferable that the polymer satisfies the requirement of (i) and (ii), or (i) and (iii) at the same time, particularly preferable that the polymer satisfies the requirement of (i), (ii) and (iii) at the same time.

(i) An olefin polymer comprising structural units derived from one or more kinds of olefins selected from α-olefins having 2 or more carbon atoms, in which the tri-substituted internal olefin quantity is 0.1 or more per 1000 carbon atoms when measured by $^{1}H$-NMR.
Such polymer of having tri-substituted internal olefins can be modified to produce a polymer having functional groups in the polymer, and thus is useful as functional material.
Specific examples of the olefin polymer include polyethylene, a homopolymer of α-olefin having 3 or more carbon atoms, or a copolymer obtained by copolymerizing 2 or more kinds of olefins selected from α-olefins having 2 or more carbon atoms, wherein the tri-substituted internal olefin quantity is 0.1 or more per 1000 carbon atoms when measured by $^{1}H$-NMR. These polymers are not particularly limited as long as they are the above-mentioned homopolymer or copolymer, and preferably they are not polypropylene or ethylene/1-octene copolymer. $^{1}H$-NMR can be used as a quantitation method to determine the tri-substituted internal olefins in the polymers. The amount of the tri-substituted internal olefins is preferably in the range of 0.1 to 10 per 1000 carbon atoms.
In addition, the olefin polymer satisfying the above-mentioned (i) can be produced with high activity by polymerizing an olefin using the catalyst for the polymerization of olefins, characterized by including:

(A) a transition metal compound represented by the following general formula (1'), and
(B) at least one compound selected from the group consisting of

(B-1) organometallic compounds,
(B-2) organoaluminum oxy compounds, and
(B-3) compounds capable of reacting with the transition metal compound (A) to form an ion pair.

[Chem. 22]

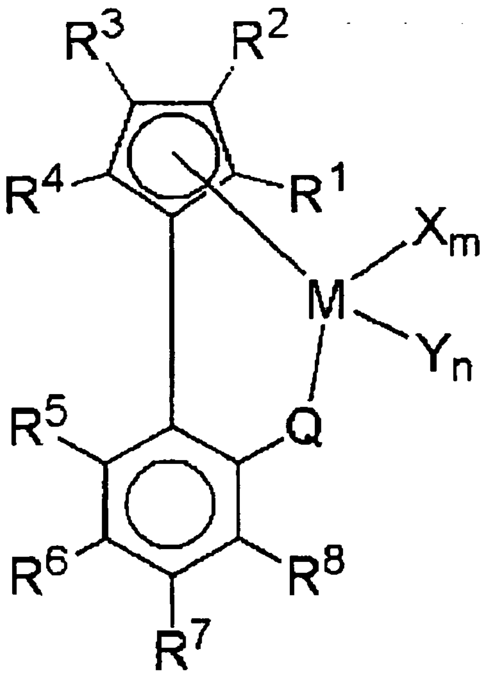

·· (1')

wherein, M represents a transition metal atom selected from among Groups 4 to 6 of the periodic table; X represents an atom or a group selected from a hydrogen atom, a halogen atom, a hydrocarbon group, a halogenated hydrocarbon group, an oxygen-containing group and a nitrogen-containing group; Q represents -O-, -S-, -$NR^a$- or -$PR^b$ - (wherein, $R^a$ and $R^b$ represent each a hydrogen atom or a hydrocarbon group); Y represents a neutral ligand having an electron-donating group; m is a number satisfying the valence of M, and when m is 2 or more, a plurality of atoms or groups represented by X may be the same as or different from each other, the plurality of groups represented by X may be bonded to each other, it may form a conjugated straight-chain diene residue, a conjugated branched-chain diene residue, a non-conjugated straight-chain diene residue or a non-conjugated branched-chain diene residue, the plurality of groups represented by X may be bonded to each other to form a ring, and also may form an aromatic ring, an aliphatic ring, a conjugated cyclic diene residue or a non-conjugated cyclic diene residue; n represents an integer of 0 to 3; $R^1$ to $R^4$ which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and two groups among the an atom or groups represented by $R^1$ to $R^4$, which are adjacent to each other, may be combined to form an aromatic ring or an aliphatic ring with the carbon atoms to which the two are bonded; and $R^5$ to $R^8$, which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and the two groups among the groups represented by $R^5$ to $R^8$, which are adjacent to each other, may be combined to form an aromatic ring, an aliphatic ring or a hetero ring, with the carbon atoms to which the two are bonded.

Herein, as the transition metal compound represented by the formula (1'), following examples can also be included apart from the ones exemplified for the compound represented by the above-mentioned general formula (1). Examples include:

(cyclopentadienyl)(3,5-dimethyl-2-phenoxy)titaniumdichlorid e;
(cyclopentadienyl)(3-tert-butyl-2-phenoxy)titaniumdichlorid e;
(cyclopentadienyl)(3-tert-butyl-5-methyl-2-phenoxy)titanium dichloride;
(cyclopentadienyl)(3-phenyl-2-phenoxy)titaniumdichloride;
(cyclopentadienyl)(3-tert-butyldimethylsilyl-5-methyl-2-phenoxy)titaniumdichloride;
(cyclopentadienyl)(3-trimethylsilyl-5-methyl-2-phenoxy)tita niumdichloride;

(cyclopentadienyl)(3-tert-butyl-5-methoxy-2-phenoxy)titaniumdichloride;
(cyclopentadienyl)(3-tert-butyl-5-dimethylamino-2-phenoxy) titaniumdichloride;
(cyclopentadienyl)(3-tert-butyl-5-fluoro-2-phenoxy)titanium dichloride;
(methylcyclopentadienyl)(3,5-dimethyl-2-phenoxy) titaniumdichloride;
(methylcyclopentadienyl)(3-tert-butyl-2-phenoxy)titaniumdic hloride;
methylcyclopentadienyl)(3-tert-butyl-5-methyl-2-phenoxy)tit aniumdichloride;
(methylcyclopentadienyl)(3-phenyl-2-phenoxy)titaniumdichlor ide;
(methylcyclopentadienyl)(3-tert-butyldimethylsilyl-5-methyl -2-phenoxy)titaniumdichloride;
(methylcyclopentadienyl)(3-trimethylsilyl-5-methyl-2-phenox y)titaniumdichloride;
(methylcyclopentadienyl)(3-tert-butyl-5-methoxy-2-phenoxy)t itaniumdichloride;
(methylcyclopentadienyl)(3-tert-butyl-5-dimethylamino-2-phe noxy)titaniumdichloride;
(methylcyclopentadienyl)(3-tert-butyl-5-fluoro-2-phenoxy)titaniumdichloride;
(tert-butylcyclopentadienyl)(3,5-dimethyl-2-phenoxy)titaniumdichloride;
(tert-butylcyclopentadienyl)(3-tert-butyl-2-phenoxy)titaniu mdichloride;
(tert-butylcyclopentadienyl)(3-tert-butyl-5-methyl-2-phenox y)titaniumdichloride;
(tert-butylcyclopentadienyl)(3-phenyl-2-phenoxy)titaniumdic hloride;
(tert-butylcyclopentadienyl)(3-tert-butyldimethylsilyl-5-me thyl-2-phenoxy)titaniumdichloride;
(tert-butylcyclopentadienyl)(3-trimethylsilyl-5-methyl-2-ph enoxy)titaniumdichloride;
(tert-butylcyclopentadienyl)(3-tert-butyl-5-methoxy -2-phenoxy)titaniumdichloride;
(tert-butylcyclopentadienyl)(3-tert-butyl-5-dimethylamino-2 -phenoxy)titaniumdichloride;
(tert-butylcyclopentadienyl)(3-tert-butyl-5-fluoro-2 -phenoxy)titaniumdichloride;
(tetramethylcyclopentadienyl)(3,5-dimethyl-2-phenoxy)titani umdichloride;
(tetramethylcyclopentadienyl)(3-tert-butyl-2-phenoxy)titani umdichloride;
(tetramethylcyclopentadienyl)(3-tert-butyl-5-methyl-2-pheno xy)titaniumdichoride;
(tetramethylcyclopentadienyl)(3-phenyl-2-phenoxy)titaniumdi chloride;
(tetramethylcyclopentadienyl)(3-tert-butyldimethylsilyl-5-m ethyl-2-phenoxy)titaniumdichloride;
(tetramethylcyclopentadienyl)(3-trimethylsilyl-5-methyl-2-p henoxy)titaniumdichloride;
(tetramethylcyclopentadienyl)(3-tert-butyl-5-methoxy-2-phen oxy)titaniumdichloride;
(tetramethylcyclopentadienyl)(3-tert-butyl-5-dimethylamino-2-phenoxy)titaniumdichloride;
(tetramethylcyclopentadienyl)(3-tert-butyl-5-fluoro -2-phenoxy)titaniumdichloride; compounds therefor in which the titanium is replaced with zirconium or hafnium; compounds in which the chloride is replaced by bromide, iodide, dimethylamide, diethylamide, methoxide, isopropoxide, benzyl or methyl; compounds in which the cyclopentadienyl moiety is replaced by dimethylcyclopentadienyl, trimethylcyclopentadienyl, phenylcyclopentadienyl or phenylindene-1-yl; transition metal complexes like compounds in which the phenoxy group is replaced by a phenylthio group in combination with those, and the like.

(ii) An olefin polymer which is produced from olefins selected from α-olefins having 2 to 20 carbon atoms (provided that ethylene homopolymer is excluded), in which the constituent ratio of regioirregular linkage (head-head bonding and tail-tail bonding) of α-olefins to the total α-olefin chains measured by $^{13}$C-NMR is 10 mol% or more.
Such polymer having a lot of regioirregular linkage (head to head bonding and tail to tail bonding) is useful as a flexible material, since, for example, it has a low heat of fusion, in comparison with usual α-olefin polymer having only head to tail bonding, and thus.
Specific examples of the olefin polymer include a homopolymer of α-olefin having 3 or more carbon atoms, and a copolymer obtained by copolymerizing 2 or more kinds of olefins selected from α-olefins having 2 or more carbon atoms.
(iii) A polymer which can be obtained by a polymerization being supplied with one or more kind(s) of olefin(s) selected from α-olefins having 2 or more carbon atoms, having on its side chain two or more kinds of alkyl groups selected from an ethyl group (b1), an alkyl group having 3 carbon atoms (b2), an alkyl group having 4 carbon atoms (b3), and an alkyl group having 5 carbon atoms (b4) (provided that, when number of carbon atoms of α-olefin having 3 or more carbon atoms supplied in a polymerization is t, side chains having t-2 carbon atoms are not included in the alkyl group selected from (b1) to (b4)), wherein the total number of alkyl groups, b1 to b4, in the polymer is 1.0 or more per 1000 carbon atoms.
By using the catalysts of the present invention, a polymer having a lot of above-mentioned short-chained alkyl groups can be obtained, and thereby amount of α-olefins fed can be reduced to obtain a polymer with an equal alkyl branching quantity to the ones obtained by using the existing catalysts.
$^{13}$C-NMR can be used to determine the quantity of b1 to b4 contained in the polymer, and the number of the total alkyl groups, b1 to b4, in the polymer is preferably 1.0 or more and 10.0 or less per 1000 carbon atoms.
(iv) An olefin-vinylidene compound copolymer, which is a copolymer of at least one olefin selected from α-olefins

having 2 to 20 carbon atoms and a vinylidene compound, in which the ratio (Uo/Uv) of the total content of structural units derived from the olefin (Uo) to the content of structural units derived from the vinylidene compound (Uv) is from 50/50 to 99/1 (molar ratio).

The molecular weight distribution (Mw/Mn) as determined by GPC measurement of such polymer is preferably 4.0 or less, more preferably 3.5 or less, and particularly preferably 3.0 or less.

[Process for producing Transition Metal Compounds]

The process for producing transition metal compounds related to the present invention is a process for producing the transition metal compound represented by the above general formula (1). The process comprises reacting an amide complex represented by the following general formula (10) with an anion ligand (L) having a structure represented by the following formula (11) or with a neutral organic compound in which the L is hydrogenated, so to be converted into a reaction product containing an amide complex represented by the following general formula (12) [Process 1], and reacting the reaction product obtained from the [Process 1] with a compound represented by the following general formula (13), to prepare the transition metal compound represented by the above general formula (1). [Process 2]. The processes are successively carried out.

<< Amide Complex represented by the following formula (10) >>

The amide complex represented by the following formula (10) is used in the process for producing transition metal compound related to the present invention.

$$MW_p(NZZ')_{m1}Y_n \ ... \qquad (10)$$

Wherein, M represents a transition metal atom selected from among Group 4 to 6 of the periodic table, which is same as the M in the above general formula (1).

W represents a halogen atom, and specific examples include fluorine, chlorine, bromine and iodine. "p" is an integer of 0 to 2, and p and ml are determined to satisfy the valence of M. Herein, providing that the absolute value of the M valence is "a", relationship of a=p+m1 is obtained. When "p" is 1 or 2, W is eliminated in the Process 1.

"Z" and "Z'" may be the same as or different from each other, and represent each a hydrocarbon group having 1 to 20 carbon atom(s) or a silicon-containing group, and specific examples of include a hydrocarbon group having 1 to 20 carbon atom (s) such as an alkyl group e.g., methyl, ethyl, propyl, butyl, hexyl, octyl, nonyl, dodecyl, eicosyl, etc., an alicyclic group e.g., cyclohexyl, norbornyl, adamanthyl, etc., an arylalkyl group e.g., benzyl, phenylethyl, phenylpropyl, trityl, etc., and an aryl group e.g., phenyl, tolyl, dimethylphenyl, trimethylphenyl, ethylphenyl, propylphenyl, biphenyl, naphthyl, methylnaphthyl, anthracenyl, phenanthryl, etc.; and a hydrocarbon group-substituted silyl group having 1 to 20 carbon atom(s) e.g., trimethylsilyl, methyldiphenylsilyl, dimethylphenylsilyl, and triphenylsilyl, etc.

When m is 2 or more, a plurality of NZZ' groups may be the same as or different from each other.

Also, the two groups adjacent to each other among the groups represented by NZZ' may be bonded via Z or Z', and in the case where those are bonded, bridging groups of those may have a chiral structure.

Y represents a neutral ligand having an electron-donating group, and specific examples include same ligands exemplified for Y in the above general formula (1).

Here, n represents an integer of 0 to 3.

Specific examples of the structure of amide complex represented by general formula (10) will be shown as following, however it is not limited thereto. In the following formulae, a methyl group, an ethyl group, an i-propyl group, a phenyl group, and a tetrahydrofuran are abbreviated as Me, Et, i-Pr, Ph, and THF, respectively.

[Chem. 23]

$Ti(NMe_2)_4$ $Ti(NMe_2)_4(THF)_2$ $Ti(NEt_2)_4$ $Ti(NEt_2)_4(THF)_2$ $Ti(NMePh)_4$ $Ti(NMePh)_4(THF)_2$

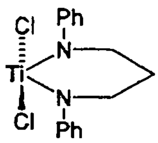
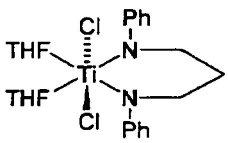
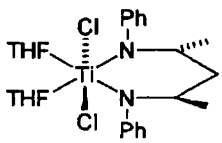

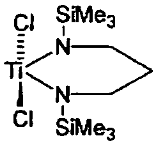
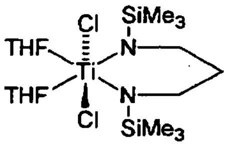
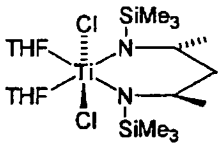

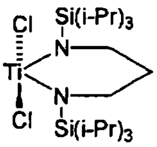
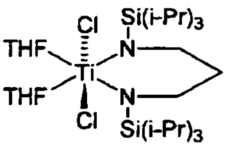
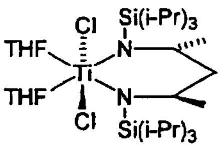

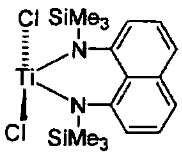
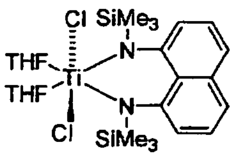

[Chem. 24]

$Zr(NMe_2)_4$ $Zr(NMe_2)_4(THF)_2$ $Zr(NEt_2)_4$ $Zr(NEt_2)_4(THF)_2$ $Zr(NMePh)_4$ $Zr(NMePh)_4(THF)_2$

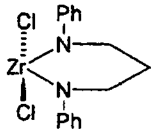 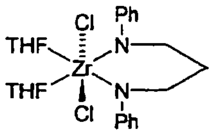 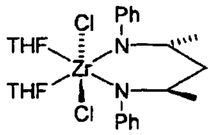

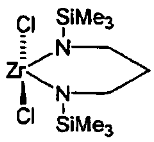 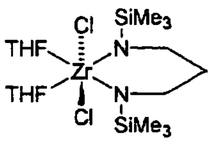 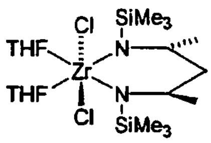

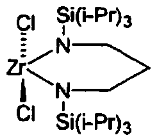 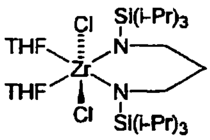 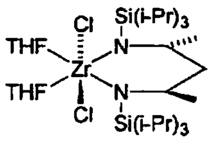

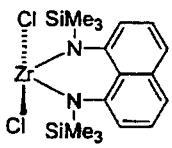 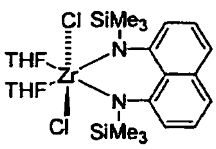

[Chem. 25]

$Hf(NMe_2)_4$ $Hf(NMe_2)_4(THF)_2$ $Hf(NEt_2)_4$ $Hf(NEt_2)_4(THF)_2$ $Hf(NMePh)_4$ $Hf(NMePh)_4(THF)_2$

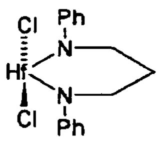 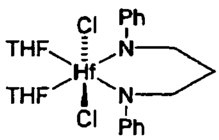 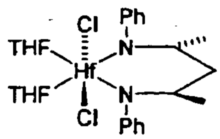

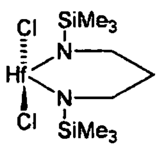 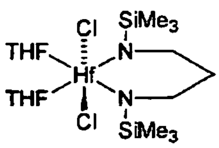 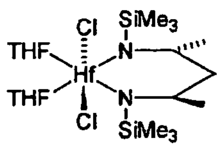

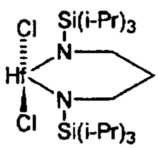 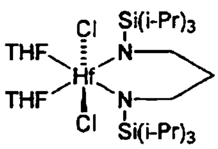 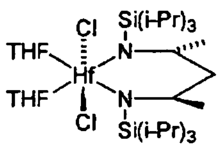

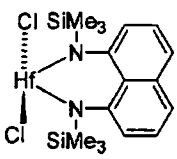 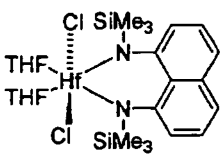

<< Anion Ligand (L) >>

In the process for producing the transition metal compounds related to the present invention, the anion ligand represented by the following general formula (11) is used.

[Chem. 26]

L= 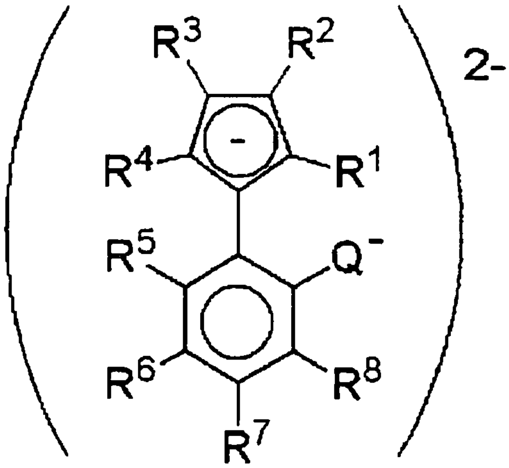 ... (11)

Wherein, $R^1$ to $R^4$ and $R^5$ to $R^8$ each represents a same atom or a group as $R^1$ to $R^4$ and $R^5$ to $R^8$ in the above general formula (1).

Q represents -O, -S, $-NR^a$, or $-PR^b$. $R^a$ and $R^b$ represent each a hydrogen atom or a hydrocarbon group having 1 to 20 carbon atom(s), and specific examples include same groups represented for $R^a$ and $R^b$ in the above general formula (1).

<< Amide Complex represented by general formula (12) >>

An amide complex obtained by reacting the amide complex represented by the above general formula (10) with the anion ligand (L) represented by the above general formula (11) or with the neutral organic compound in which the L is hydrogenated, is represented by the following formula (12).

$$LM(NZZ')_mY_n \qquad (12)$$

Wherein L is the anion ligand represented by the above general formula (11).

M, Z, Z', Y, and n respectively represent the same meaning as defined in the above general formula (10). "m" is a number satisfying the valence of M, meaning that m+2 is equal to an absolute value of M valence.

<< Compound represented by general formula (13) >>

In the process for producing transition metal compounds related to the present invention, the compound represented by the following general formula (13) is used.

$$VX^1. \qquad (13)$$

Wherein, V represents a metal atom selected from Group 1 of the periodic table, a hydrogen atom, a hydrocarbon group having 1 to 20 carbon atom (s), a halogenated hydrocarbon group having 1 to 20 carbon atom(s), a silicon-containing group, a nitrogen-containing group or an oxygen-containing group.

$X^1$ represents a halogen atom.

Among the compounds represented by the above general formula (13), compounds in which the $X^1$ is halogen and the V is hydrogen; compounds in which the $X^1$ is halogen and the V is a silicon-containing group; compounds in which the $X^1$ is halogen and the V is a nitrogen-containing group; and compounds in which the $X^1$ is halogen and the V is a hydrocarbon group having 1 to 20 carbon atom(s) are preferable, and compounds in which the $X^1$ is halogen and

the V is hydrogen; compounds in which the $X^1$ is halogen and V is a silicon-containing group; compounds in which the $X^1$ is halogen and the V is a nitrogen-containing group are particularly preferable.

Specific examples of such compounds include hydrogen chloride, trimethylsilyl chloride, silicon tetrachloride, dimethylamine hydrochloride and the like.

<< Production Process >>

For a synthesis of amide complex represented by the above-mentioned formula (12), a process disclosed in such as Dalton Trans., 2003, 4580, Organometallics, 2004(23), 1576, or similar processes thereof can be used. After the reaction, a reaction liquid is dried under reduced pressure to remove amine, which is the volatile by-product. On this occasion, in a case where the reaction is confirmed to be processed quantitatively using an NMR or the like, the resultant product can be used as it is for the next reaction. In a case where the by-product is provided, an ordinary manipulation used for refining a transition metal complex, such as extraction, recrystallization and the like can be used to obtain a pure target complex. The solvent useful for extraction or recrystallization is not particularly limited, and examples include petroleum ether, hexane, carbon tetrachloride, toluene, benzene, dichloromethane, chloroform, tetrahydrofuran, diethyl ether and mixed solution thereof.

Then, a synthesis of transition metal compound represented by the above-mentioned general formula (1) can be carried out in accordance with the processes disclosed in such as J. Am. Chem. Soc., 2000(122), 8093, J. Am. Chem. Soc., 1996(118), 8024, Organometallics, 1995(14), 5, Organometallics, 2003(22), 5498, Organometallics, 2003(22), 4658, or similar processes thereof. That is, the synthesis is carried out by reacting the compound represented by the above general formula (13) under stirring, with the amide complex represented by the general formula (12), which is purified in the above manner and dissolved in a solvent. The temperature of solution during the reaction is in the range of -80 to 120 °C, preferably the range of 0 to 60 °C is selected.

The solvent for a use is not particularly limited, and examples include petroleum ether, hexane, carbon tetrachloride, toluene, benzene, dichloromethane, chloroform, tetrahydrofuran, diethyl ether and mixed solution thereof.

After the reaction, the volatile by-product can be removed by drying under reduced pressure. On this occasion, in a case where the reaction is confirmed to be proceeded quantitatively using an NMR or the like, the resultant product can be used as it is for a polymerization reaction. In a case where the by-product is provided, an ordinary manipulation used for refining a transition metal complex, such as extraction, recrystallization and the like can be used to obtain a pure target complex.

The solvent useful for extraction or recrystallization is not particularly limited, and examples include petroleum ether, hexane, carbon tetrachloride, toluene, benzene, dichloromethane, chloroform, tetrahydrofuran, diethyl ether and mixed solution thereof. The compound represented by the above general formula (13) is not particularly limited, and examples include hydrogen chloride, dimethylamine hydrochloride, trimethylsilyl chloride, tetrachlorosilane and the like, and tetrachlorosilane is preferable.

In addition, the transition metal compound represented by the above general formula (1) can be obtained directly by reacting the amide complex represented by the above general formula (10) with the anion ligand (L) having a structure represented by the above general formula (11) or with the neutral organic compound in which the L is hydrogenated, followed by reaction with the compound represented by the above general formula (13) without isolating the amide complex represented by the above general formula (12).

According to the present invention, the compound represented by the general formula (1) in which the X is halogen is produced, and then the X can be changed to a hydrogen atom with the use of $Li[AlH_4]$, $Li[Al(O^tBu)_3H]$ , Mg/tetrahydrofuran and the like. Also, the compound represented by the general formula (1) in which the X is halogen is produced, and then the X can be changed to a hydrocarbon group or a halogenated hydrocarbon group with the use of $AlR_3$, LiR, RMgBr, RMgI and the like (Each R represents an alkyl group such as a methyl group, an ethyl group, a propyl group, a butyl group, a phenyl group, a 2,6-dimethylphenyl group, a 2,4,6-trimethylphenyl group, a 2,6-di-iso-propylphenyl group, a 2,6-di-iso-propyl-4-methylphenyl group, a 2,4,6-tri-iso-propylphenyl group, a 2,6-di-tert-butylphenyl group, a 2,6-di-tert-butyl-4-methylphenyl group, a 2,4,6-tri-tert-butylphenyl group or a benzyl group; a dienyl group such as a substituted conjugated dienyl group, a substituted non-conjugated dienyl group or a substituted cyclopentadienyl group; or a halogenated hydrocarbon group such as 4-fluorophenyl group, a 2,4-difluorophenyl group or a 2,4,6-trifluorophenyl group). The compound represented by the general formula (1) in which the X is halogen is produced, and then the X can be changed to an oxygen-containing group with the use of LiOR, NaOR and KOR (Each R represents an alkyl group such as a methyl group, an ethyl group, a propyl group, a butyl group, a phenyl group, a 2,6-dimethylphenyl group, a 2,4,6-trimethylphenyl group, a 2,6-di-iso-propylphenyl group, a 2,6-di-iso-propyl-4-methylphenyl group, a 2,4,6-tri-iso-propylphenyl group, a 2,6-di-tert-butylphenyl group, a 2,6-di-tert-butyl-4-methylphenyl group, a 2,4,6-tri-tert-butylphenyl group and a benzyl group). Moreover, the compound represented by the general formula (1) in which the X is halogen is produced, and then the X can be changed to a nitrogen-containing group with the use of $LiNMe_2$, $LiNEt_2$, $LiN(SiMe_3)_2$, $NaNMe_2$, $NaNEt_2$, $NaN(SiMe_3)_2$, $KNMe_2$, $KNEt_2$, $KN(SiMe_3)_2$ or an amidinate compound represented by general formulae

Li[R(CNR') (CNR")], Na[R(CNR') (CNR")] and K[R(CNR') (CNR")] (R, R' and R" each represents an alkyl group such as a methyl group, an ethyl group, a propyl group, a butyl group, a phenyl group, a 2,6-dimethylphenyl group, a 2,4,6-trimethylphenyl group, a 2, 6-di-iso-propylphenyl group, a 2,6-di-iso-propyl-4-methylphenyl group, a 2,4,6-tri-iso-propylphenyl group, a 2,6-di-tert-butylphenyl group, a 2,6-di-tert-butyl-4-methylphenyl group, a 2,4,6-tri-tert-butylphenyl group or a benzyl group).

INDUSTRIAL APPLICABILITY

Using the catalysts for olefin polymerization related to the present invention polymerizes olefin, a polymerization with high polymerization activity is exhibited. And in a case that the copolymerization is carried out, an ethylene-olefin copolymer having a higher comonomer content can be obtained although the small amount of comonomers is used in comparison with known catalysts for olefin polymerization, thereby it is extremely industrially valuable.
The process for producing transition metal compounds of the present invention can synthesize the transition metal compound (A) represented by the above general formula (1) at high purity and with high yield, which is also simple, thereby is extremely industrially valuable.

BRIEF DESCRIPTION OF THE DRAWINGS

Fig. 1 is a $^{13}C$-NMR spectrum of the polymer obtained in Example 3.
Fig. 2 is a $^{13}C$-NMR spectrum of the polymer obtained in Example 4.
Fig. 3 is a $^{13}C$-NMR spectrum of the polymer obtained in Example 8.
Fig. 4 is a $^{13}C$-NMR spectrum of the polymer obtained in Example 9.
Fig. 5 is a $^{1}H$-NMR spectrum of the polymer obtained in Example 10.
Fig. 6 is a $^{13}C$-NMR spectrum of the polymer obtained in Example 10.
Fig. 7 is a $^{1}H$-NMR spectrum of the polymer obtained in Example 11.
Fig. 8 is a $^{13}C$-NMR spectrum of the polymer obtained in Example 11.
Fig. 9 is a $^{13}C$-NMR spectrum of the polymer obtained in Example 20.
Fig. 10 is a $^{1}H$-NMR spectrum of the polymer obtained in Example 28.
Fig. 11 is a $^{13}C$-NMR spectrum of the polymer obtained in Example 28.
Fig. 12 is a $^{1}H$-NMR spectrum of the polymer obtained in Example 29.
Fig. 13 is a $^{13}C$-NMR spectrum of the polymer obtained in Example 29.
Fig. 14 is a $^{1}H$-NMR spectrum of the polymer obtained in Example 30.
Fig. 15 is a $^{13}C$-NMR spectrum of the polymer obtained in Example 30.
Fig. 16 is a $^{1}H$-NMR spectrum of the polymer obtained in Example 31.
Fig. 17 is a $^{13}C$-NMR spectrum of the polymer obtained in Example 31.
Fig. 18 is a $^{1}H$-NMR spectrum of the polymer obtained in Example 32.
Fig. 19 is a $^{13}C$-NMR spectrum of the polymer obtained in Example 32.
Fig. 20 is a $^{13}C$-NMR spectrum of the polymer obtained in Example 34.
Fig. 21 is a $^{13}C$-NMR spectrum of the polymer obtained in Example 34.
Fig. 22 is a $^{1}H$-NMR spectrum of the polymer obtained in Example 35.
Fig. 23 is a $^{1}H$-NMR spectrum of the polymer obtained in Example 36.
Fig. 24 is a $^{1}H$-NMR spectrum of the polymer obtained in Example 37.

[EXAMPLES]

Hereinafter, the present invention will bemore specifically explained with reference to Examples, but the present invention is not limited by the following Examples.
The various physical properties of obtained polymers are measured and determined in the following manner.

(Molecular weight and Molecular weight Distribution)

The molecular weight and the molecular weight distribution of the obtained polymer were measured by using a high-temperature gel-permeation chromatography (GPC).

<Pretreatment of Sample>

30 mg of sample was completely dissolved in 20 mL of o-dichlorobenzene at 145 °C and the solution was filtered with a sintered filter having a pore diameter of 0.45 mm, to prepare an assay sample.

<Measuring Apparatus>

Gel Permeation Chromatography Alliance GPC 2000 type (manufactured by Waters Co., Ltd.)

<Analytical Apparatus>

Data processing software Empower Professional (manufactured by Waters Co., Ltd.)

<Measurement Conditions>

Column: TSKgel GMH6-HT $\times$ 2 + TSKgel GMH6-HTL $\times$ 2 (both of them are 7.5 mmI. D. x30cm, manufactured by Tosoh Corporation)
Column Temperature: 140 °C
Mobile phase: o-dichlorobenzene [ODCB] (containing 0.025% BHT)
Detector: differential refractive index meter
Flow rate: 1 mL/min
Molecular weight Conversion: PS calibration/ sample conversion method. Molecular weight relative to PE standards was calculated from molecular weight relative to PS standards with an universal calibration method using Mark-Houwink parameters (K=17.5 ($10^{-5}$, $\alpha$=0.670 for polystyrene; K=40.6 ($10^{-5}$, $\alpha$ = 0.725 for polyethylene).

(Intrinsic Viscosity [$\eta$])

The intrinsic viscosity [$\eta$] of polymer was determined in decalin at 135°C using Ubbelohde viscometer, and the viscosity-average molecular weight $M_v$ was calculated using the following expression.
[$\eta$]=6.2 ($10^{-4}$ $M_v^{0.7}$. (Chiang, R. J. Polym. Sci. 1959, 36 ,91.)

(Content of $\alpha$-olefin)

The content of $\alpha$-olefin in the obtained ethylene/$\alpha$-olefin copolymer was determined by IR or NMR.

(Amount of tri-substituted internal olefin)

The tri-substituted internal olefin in the obtained polymer was measured by using a $^1$H-NMR and determined by assigning the signals of the tri-substituted internal olefin with reference to the chemical shift of signals of the tri-substituted internal olefin in polypropylene which is disclosed in Polymer, 2004(45) ,2883, the chemical shift of signals of tri-substituted internal olefin in ethylene/1-octene copolymer which is disclosed in Macromolecules, 2005 ASAP (Vincenzo Busico et al.) or the like, and for the quantity of tri-substituted internal olefin, the content was calculated by using the following computational expression.

$$\text{Tri-substituted internal olefin (/1000C)} = (\text{D} / \text{total number of carbon atoms}) \times 1{,}000$$

$$\text{Total number of carbon atoms} = 2A / 3 + B + C + 2D + (E + F + G - B/2-D) /2$$

A to G each is the integration value of $^1$H-NMR spectrum signals derived from the following structures, respectively.

A (5.7-5.6, 4.9-4.7ppm): $R^1\underline{H}C=C\underline{H}_2$ (3H) vinyl
B (4.7-4.6ppm): $R^1R^2C=C\underline{H}_2$ (2H) vinylidene
C (5.4-5.2ppm): $R^1C\underline{H}=C\underline{H}R^2$ (2H) di-substituted internal olefin
D (5.2-5.0ppm): $R^1C\underline{H}=CR^2 R^3$ (1H) tri-substituted internal olefin
E (2.0-1.8ppm): $R^1C\underline{H}_2C=C$ (2H) methylene adjacent to olefin
F (1.3-1.1ppm): $R^1$-$C\underline{H}_2$-$R^2$ (2H) main-chain methylene
G (0.8-0.7ppm): $R^1$-$C\underline{H}_3$ (3H) methyl

(Amount of Regioirregular linkage)

The ratio of regioirregular linkage (head to head bonding and tail to tail bonding) between α-olefins to the total α-olefin chains, for the obtained polymer was determined by assigning the signals of the regioirregular linkage between α-olefins using $^{13}$C-NMR with reference to the chemical shift of signals derived from regioirregular linkages in PP which is disclosed in Macromolecules, 1992(25), 4876, the chemical shift of signals derived from regioirregular linkages in PB which is disclosed in Polymer, 1992(33) 650 or the like, and carrying out the quantitative estimation.

(Amount of Ethyl group and Alkyl group having 3 to 5 carbon atoms, positioning on Side Chain in Polymer)

The ethyl group (b1), alkyl group having 3 carbon atoms (b2), alkyl group having 4 carbon atoms (b3), or alkyl group having 5 carbon atoms (b4) (provided that, the alkyl groups derived from α-olefins having 3 or more carbon atoms are excluded) was assigned by using $^{13}$C-NMR with reference to the chemical shift of signals derived from the short-chain branches which is disclosed in JMS-REV. Macromol. Chem. Phys., 1989(C26(2&3)), 201; Macromolecules, 1999 (32),1620; Polymer , 1992(33), 650 or the like, to carry out the quantitative estimation.

(Amount of structural units (Uv) derived from vinylidene compound)

The quantitative determination of the structural units (Uv) derived from vinylidene compound in an olefin/vinylidene compound copolymer, in the obtained polymer was measured using $^1$H-NMR in accordance with the process disclosed in Macromolecules, 1998(31), 5145, J. Am. Chem. Soc. ,2003(125), 10788 or the like.

[Synthetic Example 1]

<<(2-{ Inden-1' -yl }-4, 6-$^tBu_2$-$C_6H_4O$) $TiCl_2$>>

[Synthesis of 2-(Inden-3'-yl)-4,6-di-tert-butylphenol; (2-{inden-3'-yl}-4,6-$^tBu_2$-$C_6H_2O)H_2$]

2-Bromo-4,6-di-tert-butylphenol (16.00 g, 56.10 mmol), 1-Indanone(7.41 g, 56.10 mmol), and n-butyllithium (1.57 M in hexane; 75.0 mL, 119 mmol) were used to carry out a reaction in accordance with the process disclosed in Dalton Trans., 2003 , 4580, and the resultant crude product was purified by flash silica gel column chromatography (eluant; hexane/methylene chloride = 4/1) to obtain 8.29 g of the targeted 2-(Inden-3'-yl)-4,6-di-tert-butylphenol (yield 46%, white solid).

The obtained product was analyzed with $^1$H, $^{13}$C NMR ($CDCl_3$) : $^1$H NMR ($C_6D_6$), and the results corresponded to the values disclosed in the above-mentioned document.

[Synthesis of (2-{Inden-1'-yl}-4,6-$^tBu_2$-$C_6H_4O)Ti(NMe_2)_2$]

2-(Inden-3'-yl)-4,6-di-tert-butylphenol (1.43 g, 4.46 mmol), and Ti $(NMe_2)_4$ (1.00 g, 4.46 mmol) were used to carry out a reaction in accordance with the process disclosed in Organometallics., 2004(23), 1576, and then from the

resultant solution, the solvent and the by-product were distilled off under reduced pressure to obtain 2.03 g of the targeted (2-{Inden-1'-yl}-4,6-$^tBu_2$-$C_6H_4O$)Ti($NMe_2$)$_2$ (quantitative, red solid).

The obtained product was analyzed with $^1H$ NMR ($C_6D_6$), and the results corresponded to the values disclosed in the above-mentioned document.

[Synthesis of (2-{Inden-1'-yl}-4,6-$^tBu_2$-$C_6H_4O$)$TiCl_2$]

To a Schlenk-type reactor thoroughly dried and purged with nitrogen, a rotator was placed, the (2-{Inden-1'-yl}-4,6-$^tBu_2$-$C_6H_4O$)Ti($NMe_2$)$_2$ (0.60 g, 1.32 mmol) obtained in the previous reaction was charged, and benzene (10 mL) was added, and then the mixture was stirred. $Me_3SiCl$ (0.84 mL, 6.60 mmol) was added thereto at room temperature, and then reacted under stirring at 50 °C for 3 hours. From the resultant solution, the solvent and the by-product were distilled off under reduced pressure to obtain 0.58 g of the targeted (2-{Inden-1'-yl}-4,6-$^tBu_2$-$C_6H_4O$)$TiCl_2$ (quantitative, red solid).

The obtained product was analyzed with Elemental Analysis, NMR and FD-MS and the following results were obtained.

Elemental Analysis: Calc: C, 63.18; H, 5.99.

Found: C, 63.00; H, 5.65.

$^1H$ NMR ($CDCl_3$) : d 7.87 (d, J=8.57 Hz, 1H, Ind-H-4), 7.54 (dd, J= 7.58, 7.57 Hz, 1H, Ind-H-5), 7.45 (d, J = 8.64 Hz, 1H, Ind-H-7), 7.39 (d, J = 1.99 Hz, 1H, phenoxy), 7.350 (dd, J = 7.58, 7.58 Hz, 1H, Ind-H-7), 7.346 (d, J = 2.30 Hz, 1H, phenoxy), 7.15 (d, J= 3.51 Hz, 1H, $\eta^5$-CH), 7.10 (d, J= 3.24 Hz, 1H, $\eta^5$-CH); 1.38 (s), 1.33 (s, 9H, $CMe_3$).

$^{13}C[^1H]$ NMR ($CDCl_3$) : d 173.2 (Ti-O-C); 147.1, 138.6, 137.5, 134.6, 132.2, 129.7, 129.1, 128.5, 127.9, 127.5, 124.1, 124.0, 123.8, 109.5 (unsaturated C); 35.1, 34.9 ($CMe_3$); 31.7, 29.6 ($CMe_3$).

$^1H$ NMR ($C_6D_6$) : d 7.52 (d, J = 2.31 Hz, 1H, phenoxy), 7.172 (d, J = 2.31 Hz, 1H, phenoxy), 7.170 (d, J = 8.58 Hz, 1H, Ind-H-4), 7.05 (d, J= 8.58 Hz, 1H, Ind-H-7), 6.96 (dd, J= 7.42, 7.18 Hz, 1H, Ind-H5), 6.72 (dd, J = 8.25, 7.27 Hz, 1H, Ind-H-6), 6.45 (d, J = 3.24 Hz, 1H), 6.44 (d, J = 3.24 Hz, 1H, $\eta^5$-CH); 1.42 (s), 1.33 (s, 9H, $CMe_3$).

$^{13}C$ [$^1H$] NMR ($C_6D_6$) : d 173.8 (Ti-O-C); 147.1, 138.5, 137.5, 135.3, 132.1, 129.6, 129.2, 129.2, 128.5, 127.5, 124.2, 124.1, 124.0, 109.7 (unsaturated C); 35.6, 35.1 ($CMe_3$); 32.0, 30.0 ($CMe_3$).

FD-MS: 436 (M+)

[Synthetic Example 2]

<<[(2-{Inden-1'-yl}-4,6-$^tBu_2$-$C_6H_4O$)$TiMe_2$]>>

To a screw-cap type NMR tube thoroughly dried and purged with nitrogen, (2-{Inden-1'-yl}-4,6-$^tBu_2$-$C_6H_4O$) $TiCl_2$ (0.026 g, 0.059 mmol) obtained in the previous reaction was charged, and benzene-$d_6$ (0.8 mL) was added. Subsequently, MeLi (1.02 M in diethyl ether; 0.116 mL, 0.118 mmol) was added using a micro syringe at room temperature, and then reacted while being shaken at room temperature for 2 minutes. The resultant suspension was filtered with a glass filter, the white powder was removed, and the filtrate was concentrated and dried to obtain 0.023 g of the targeted (2-{Inden-1'-yl}-4,6-$^tBu_2$-$C_6H_4O$)$TiMe_2$ (quantitative, brown solid).

When the obtained product was analyzed with NMR, the following results were obtained.

$^1H$ NMR ($CDCl_3$): d 7.55 (d, J = 2.64 Hz, 1H, phenoxy), 7.42 (d, J= 8.40 Hz, 1H, Ind-H-4), 7.28 (d, J= 2.64 Hz, 1H, phenoxy), 7.01-6.94 (m, 2H, Ind-H-7 and 6), 6.67 (dd, J = 7.64, 7.08 Hz, 1H, Ind-H-5), 6.59 (dd, J = 3.30, 0.66 Hz, 1H, $\eta^5$-CH-3), 6.21 (d, J= 2.97 Hz, 1H, $\eta^5$-CH-2); 1.68 (s), 1.37 (s, 9H, $CMe_3$) ; 1.08 (s), 0.20 (s, 3H, Ti-$Me_3$).

[Synthetic Example 3]

<<(2-{Inden-2'-yl}-4, 6-$^tBu_2$-$C_6H_4O$) $TiCl_2$>>

[Synthesis of 2-(Inden-2'-yl)-4,6-di-tert-butylphenol; (2-{Inden-2'-yl}-4, 6-$^tBu_2$-$C_6H_2O$) $H_2$]

2-Bromo-4,6-di-tert-butylphenol (15.00 g, 52.59 mmol), 2-Indanone(6.95 g, 52.95 mmol) and n-butyllithium (1.57 M in hexane; 70.3 mL, 110 mmol) were used to carry out a reaction in accordance with the process disclosed in Dalton Trans., 2003 , 4580, and the resultant crude product was purified by flash silica gel column chromatography (eluant; hexane/methylene chloride = 3/1) to obtain 4.79 g of the targeted 2-(Inden-2'-yl)-4,6-di-tert-butylphenol (yield 28%, white solid).

The obtained product was analyzed with Elemental Analysis, NMR and FD-MS and the following results were obtained.

Elemental Analysis: Clacl.: C, 86.20; H, 8.11

Found: C, 85.66; H, 8.75

$^1$H NMR ($CDCl_3$) : d 7.43 (d, J=7.25 Hz, 1H, Ind), 7.35 (d, J =6.92 Hz, 1H, Ind), 7.24 (dd, J=7.41, 7.39 Hz, 1H, Ind), 7.22 (d, J = 2.31 Hz, 1H, phenoxy), 7.15 (dd, J=7.23, 7.24 Hz, 1H, Ind), 7.08 (d, J = 2.31 Hz, 1H, phenoxy), 7.07 (s, 1H, CH), 5.77 (s, 1H, OH); 3.75 (s, 2H, CH2); 1.39 (s), 1.26 (s, 9H, $CMe_3$).

$^{13}$C[$^1$H] NMR ($CDCl_3$) : d 149.3 (O-C) ; 144.7, 144.3, 142.8, 141.9, 135.6, 129.4, 126.6, 125.0, 123.7, 123.5, 123.14, 123.05, 121.0 (unsaturatedC); 42.6 ($CH_2$); 35.2, 34.4 ($CMe_3$) ; 31.7, 29.8 ($CMe_3$).

$^1$H NMR ($C_6D_6$) : d7.49 (d, J=2.31Hz, 1H, phenoxy), 7.24-7.10 (m, 5H, aromatics), 6.75 (s, 1H, CH), 5.56 (s, 1H, OH); 3.34 (s, 2H, $CH_2$) ; 1.64 (s), 1.35 (s, 9H, $CMe_3$).

FD-MS: 320 (M+).

[Synthesis of (2-{Inden-2'-yl}-4,6-$^t$Bu$_2$-$C_6H_4O$)Ti($NMe_2$)$_2$]

2-(Inden-2'-yl)-4,6-di-tert-butylphenol (1.50 g, 4.68 mmol) obtained in the previous reaction and Ti($NMe_2$)$_4$ (1.05g, 4.68 mmol) were used to carry out a reaction in accordance with the process disclosed in Organometallics., 2004(23), 1576. And then from the resultant solution, the solvent and by-product having low-boiling point were distilled off under reduced pressure to obtain a red crude product. This product was analyzed with $^1$H NMR ($C_6D_6$) and it was observed to contain 59% of the target product, (2-{Inden-2'-yl}-4,6-$^t$Bu$_2$-$C_6H_4O$)Ti($NMe_2$)$_2$. The crude product was dissolved in benzene (6 mL), and concentrated slowly by vaporizing the solvent at room temperature under a nitrogen atmosphere. The red precipitated crystal was filtered with G3 glass filter, washed with benzene (0.5 mL), and then dried under a vacuum to obtain 0.80 g of the targeted (2-{Inden-2'-yl}-4,6-$^t$Bu$_2$-$C_6H_4O$)Ti($NMe_2$)$_2$ (17%, orange solid).

The obtained product was analyzed with Elemental Analysis and NMR, and the following results were obtained.

Elemental Analysis: Calc.: C, 71.36; H, 8.43.

Found: C, 70.96; H, 8.70.

$^1$H NMR ($CDCl_3$): d 7.64 (dd, J=6.43, 3.13 Hz, 2H, Ind-H-4, 7), 7.26 (d, J=2.64 Hz, 1H, phenoxy), 7.20 (d, J =2.64 Hz, 1H, phenoxy), 7.12 (m, 2H, Ind-H-5, 6), 6.53 (s, 2H, $\eta^5$-CH), 3.01 (s, 12H, $NMe_2$), 1.41 (s), 1.34 (s, 9H, $CMe_3$).

$^{13}$C[$^1$H] NMR ($CDCl_3$) : d 167.5 (Ti-O-C) ; 140.6, 137.9, 134.3, 127.9, 124.1, 123.6, 123.4, 122.9, 122.5, 108.0 (unsaturated C); 47.1 ($NMe_2$) ; 34.9, 34.4 ($CMe_3$) ; 31.8, 29.7 ($CMe_3$).

$^1$H NMR ($C_6D_6$): d 7.52 (d, J =2.31 Hz, 1H, phenoxy), 7.42 (d, J =2.31 Hz, 1H, phenoxy), 7.28 (dd, J =6.60, 2.97 Hz, 2H, Ind-H-4, 7), 6.85 (m, 2H, Ind-H-5, 6), 6.33 (s, 2H, $\eta^5$-CH), 2.98 (s, 12H, $NMe_2$), 1.67 (s), 1.42 (s, 9H, $CMe_3$).

[Synthesis of (2-{Inden-2'-yl}-4,6-$^t$Bu$_2$-$C_6H_9O$)$TiCl_2$]

To a Schlenk-type reactor thoroughly dried and purged with nitrogen, a rotator was placed, (2-{Inden-2'-yl}-4,6-$^t$Bu$_2$-$C_6H_4O$)Ti($NMe_2$)$_2$ (0.36 g, 0.80 mmol) obtained in the previous reaction was charged, and benzene (5 mL) was added, and then the mixture was stirred. $SiCl_4$ (0.202 mL, 1.76 mmol) was added using a micro syringe at room temperature, and then reacted under stirring at room temperature for 2 minutes. From the resultant solution, the solvent and the by-product were distilled off under reduced pressure to obtain 0.35 g of the targeted (2-{Inden-2'-yl}-4,6-$^t$Bu$_2$-$C_6H_9O$)$TiCl_2$ (quantitative, red solid).

The obtained product was analyzed with Elemental Analysis, NMR and FD-MS, and the following results were obtained.

Elemental Analysis: Calc.: C, 63.18; H, 5.99.

Found: C, 62.26; H, 5.64.

$^1$H NMR ($CDCl_3$) : d 7.84 (dd, J=6.59, 2.97 Hz, 2H, Ind-H-4, 7), 7.51 (m, 2H, Ind-H-5, 6), 7.38 (d, J =2.31 Hz, 1H, phenoxy), 7.30 (d, J=2.31 Hz, 1H, phenoxy), 7.19 (s, 2H, $\eta^5$-CH); 1.37 (s), 1.36 (s, 9H, $CMe_3$).

$^{13}$C[$^1$H] NMR ($CDCl_3$) : d 169.31 (Ti-O-C), 147.5, 145.2, 134.4, 130.3, 129.1, 126.7, 125.8, 124.2, 123.8, 122.8 (unsaturated C), 35.1, 34.9 ($CMe_3$); 31.6, 29.7 ($CMe_3$).

$^1$H NMR ($C_6D_6$) : d 7.49 (d, J =2.31 Hz, 1H, phenoxy), 7.32 (dd, J =6.59, 3.30 Hz, 2H, Ind-H-4, 7), 7.17 (d, J =2.31 Hz, 1H, phenoxy), 6.89 (m, 2H, Ind-H-5, 6), 6.43 (s, 2H, $\eta^5$-CH), 1.45 (s), 1.35 (s, 9H, $CMe_3$).

FD-MS: 436 (M+).

[Synthetic Example 4]

<<(2-{2-Me-inden-1'-yl}-4,6-$^t$Bu$_2$-$C_6H_4O$)$TiCl_2$>>

[Synthesis of (2-{2-Me-inden-1'-yl}-4,6-$^t$Bu$_2$-$C_6H_4O$)Ti($NMe_2$)$_2$]

2-(2-Methylinden-3'-yl)-4,6-di-tert-butylphenol (1.50 g, 4.48 mmol), and Ti($NMe_2$)$_4$ (1.01 g, 4.48 mmol) were used to carry out a reaction in accordance with the process disclosed in Organometallics., 2004(23),1576, and then

from the resultant solution, the solvent and the by-product were distilled off under reduced pressure to obtain 2.10 g of the targeted (2-{2-Me-inden-1'-yl}-4,6-$^{t}Bu_2$-$C_6H_4O$)Ti($NMe_2$)$_2$ (quantitative, red solid).

The obtained product was analyzed with $^1$H NMR ($CDCl_3$), and the results corresponding to the value disclosed in the above-mentioned document were obtained.

[Synthesis of [2-{2-Me-inden-1'-yl}-4,6-$^{t}Bu_2$-$C_6H_4O$)$TiCl_2$]

To a Schlenk-type reactor thoroughly dried and purged with nitrogen, a rotator was placed, (2-{2-Me-inden-1'-yl}-4,6-$^{t}Bu_2$-$C_6H_4O$)Ti($NMe_2$)$_2$ (2.10 g, 4.48 mmol) obtained in the previous reaction was charged and benzene (15 mL) was added, and then the mixture was stirred. $Me_3SiCl$ (2.85 mL, 22.41 mmol) was added thereto at room temperature, and reacted under stirring at 50 °C for 7 hours. From the resultant solution, the solvent and the by-product were distilled off under reduced pressure to obtain 2.02 g of the targeted (2-{2-Me-inden-1'-yl}-4,6-$^{t}Bu_2$-$C_6H_4O$)$TiCl_2$ (quantitative, red solid).

The obtained product was analyzed with NMR and FD-MS, and the following results were obtained.

$^1$H NMR ($C_6D_6$) : d 7.83 (d, J = 8.57 Hz, 1H, Ind-H-4), 7.50-7.25 (m, H, aromatics); 6.94 (s, 1H, η5-CH); 2.03 (s, 1H, Me); 1.39 (s), 1.35 (s, 9H, $CMe_3$).

$^{13}$C [$^1$H] NMR ($CDCl_3$) : d 172.9 (Ti-O-C) ; 148.4, 147.1, 138.8, 136.8, 134.7, 129.1, 128.5, 127.8, 127.4, 127.3, 124.3, 124.0, 123.9, 109.6 (unsaturated C); 35.1, 34.8 ($CMe_3$); 31.7, 29.6 ($CMe_3$); 16.2 ($Me_3$).

$^1$H NMR ($C_6D_6$): d 7.55 (d, J = 2.31 Hz, 1H, phenoxy), 7.27 (d, J= 8.57 Hz, 1H, Ind-H-4), 7.14 (d, J= 2.31 Hz, 1H, phenoxy), 7.05 (d, J= 8.57 Hz, 1H, Ind-H-7), 6.99 (dd, J = 8.49, 6.67 Hz, 1H, Ind-H-5), 6.75 (dd, J = 8.59, 6.92 Hz, 1H, Ind-H-6), 6.35 (s, 1H, $\eta^5$-CH), 2.03 (s, 1H, Me), 1.44 (s), 1.34 (s, 9H, $CMe_3$).

$^{13}$C[$^1$H] NMR ($C_6D_6$) : d 173.2 (Ti-O-C), 147.6, 146.7, 138.4, 136.3, 135.1, 128.8, 128.4, 128.0-127.3 (overlapped with $C_6D_6$ peaks), 127.1, 124.0, 123.9, 123.8, 109.5 (unsaturated C) ; 35.0, 34.5 ($CMe_3$); 31.5, 29.4 ($CMe_3$); 15.5 ($CMe_3$).

FD-MS: 450 (M+).

[Synthetic Example 5]

<<(2-{2-Me-4-Ph-inden-1'-yl}-4,6-$^{t}Bu_2$-$C_6H_4O$)$TiCl_2$>>

[Synthesis of 2-(2-Methyl-4-Phenylinden-3'-yl)-4,6-di-tert-butylphenol; (2-{2-Me-4-Ph-inden-3'-yl}-4,6-$^{t}Bu_2$-$C_6H_4O$)$H_2$]

2-Bromo-4,6-di-tert-butylphenol (15.00 g, 52.59 mmol), 2-Methyl-4-Phenyl-1-indanone (11.69 g, 52.59 mmol), which can be obtained in accordance with a process disclosed in Organometallics, 1994(13) ,954, and n-butyllithium (1.57 M in hexane; 70.34 mL, 110.44 mmol) were used to carry out a reaction in accordance with the process disclosed in Dalton Trans., 2003 , 4580, and the resultant crude product was purified by flash silica gel column chromatography (eluant; hexane/methylene chloride = 3/1) to obtain 9.05 g of the targeted 2-(2-Methyl-4-Phenylinden-3'-yl)-4,6-di-tert-butylphenol (yield 43%, white solid).

The obtained product was analyzed with Elemental Analysis, NMR and FD-MS, and the following results were obtained.

Elemental Analysis: Calc.: C, 87.76; H, 8.35.

Found: C, 87.41; H, 8.69.

$^1$H NMR ($CDCl_3$): d 7.58 (d, J = 8.24 Hz, 2H, aromatics), 7.46 (m, 2H, aromatics), 7.39-7.31 (m, 2H, aromatics), 7.36 (d, J=2.31 Hz, 1H, phenoxy), 7.22 (d, J = 7.25 Hz, 1H), 7.122 (d, J = 7.26 Hz, 1H, aromatic); 7.119 (d, J = 2.31 Hz, 1H, phenoxy), 5.15 (s, 1H, OH); 3.61 (s, 2H, $CH_2$) ; 2.08 (s, 3H, Me), 1.49 (s), 1.35 (s, 9H, $CMe_3$).

$^{13}$C[$^1$H] NMR ($CDCl_3$): d 149.3 (O-C); 146.4, 144.2, 141.7, 141.1, 140.2, 137.7, 135.1, 134.8, 128.48, 128.45, 127.3, 127.2, 125.3, 124.4, 123.5, 120.6, 119.0 (unsaturated C) ; 43.1, ($CH_2$); 35.1, 34.4 ($CMe_3$); 31.79, 31.75, 31.69, 29.74, 29.70, 29.65 ($CMe_3$); 15.1 (Me).

FD-MS: 410 (M+).

[Synthesis of (2-{2-Me-4-Ph-inden-1'-yl}-4,6-$^{t}Bu_2$-$C_6H_4O$)Ti($NMe_2$)$_2$]

2-(2-Methyl-4-phenylinden-3'-yl)-4,6-di-tert-butylphe nol (1.50 g, 3.65 mmol) obtained in the previous reaction and Ti ($NMe_2$)$_4$ (0.85 g, 3.78 mmol) were used to carry out a reaction in accordance with the process disclosed in Organometallics, 2004(23), 1576 and then from the resultant solution, the solvent and the by-product were distilled off under reduced pressure to obtain 2.06 g of the targeted (2-{2-Me-4-Ph-inden-1'-yl}-4, 6-$^{t}Bu_2$-$C_6H_4O$) Ti ($NMe_2$) (quantitative, red solid).

The obtained product was analyzed with NMR, and the following results were obtained.

$^{13}C[^1H]$ NMR ($CDCl_3$): d 171.4 (Ti-O-C), 141.1, 140.4, 137.4, 134.4, 133.5, 130.1, 128.7, 128.2, 127.5, 126.8, 125.4, 125.0, 124.0, 123.6, 122.6, 121.8, 119.7, 101.4 (unsaturated C), 48.93, 48.88,47.57,47.48 ($NMe_2$), 34.9, 34.4 ($CMe_3$), 32.01, 31.9, 29.8, 29.7 ($CMe_3$), 12.9 (Me).

$^1H$ NMR ($C_6D_6$) : d 7.72 (d, J = 6.93 Hz, 2H, phenyl-ortho H), 7.63 (d, J=2.64 Hz, 1H, phenoxy), 7.40 (d, J=2.31 Hz, 1H, phenoxy), 7.38-7.30 (m, 3H, Ind-H-7 and phenyl-meta H), 7.22 (t, J = 7.26 Hz, 1H, phenyl-para H), 6.99 (d, J = 6.92 Hz, 1H, Ind-H-5), 6.85 (dd, J = 8.26, 6.93 Hz, 1H, Ind-H-6), 6.55 (s, 1H, $\eta^5$-CH), 3.28, 2.58 (s, 6H, $NMe_2$); 2.01 (s, 3H, Me), 1.70, 1.4 6 (s, 9H, $CMe_3$).

[Synthesis of (2-{2-Me-4-Ph-inden-1'-yl}-4,6-$^tBu_2$-$C_6H_4O$)$TiCl_2$]

To a Schlenk-type reactor thoroughly dried and purged with nitrogen, a rotator was placed, (2-{2-Me-4-Ph-inden-1'-yl}-4,6-$^tBu_2$-$C_6H_9O$)$Ti(NMe_2)_2$ (1.83 g, 3.36 mmol) obtained in the previous reaction was charged and benzene (10 mL) was added, and then the mixture was stirred. $SiCl_4$ (0.77 mL, 6.72 mmol) was added thereto at room temperature, and then reacted under stirring for 5 minutes. From the resultant solution, the solvent and the by-product were distilled off under reduced pressure to obtain 1.77 g of the targeted (2-{2-Me-4-Ph-inden-1'-yl}-4,6-$^tBu_2$-$C_6H_4O$)$TiCl_2$ (quantitative, red solid).

The obtained product was analyzed with NMR and FD-MS, and the following results were obtained.

$^1H$ NMR ($CDCl_3$) : d 7.69 (d, J = 8.24 Hz, 2H, phenyl-ortho H), 7.58-7.32 (m, 8H, aromatics), 7.02 (s, 1H, $\eta^5$-CH), 2.30 (s, 3H, Me), 1.40, 1.36 (s, 9H, $CMe_3$).

$^{13}C[^1H]$ NMR ($CDCl_3$) : d 172.8 (Ti-O-C), 148.7, 147.1, 141.2, 139.1, 138.7, 137.1, 134.7, 129.2, 129.0, 128.7, 128.5, 128.3, 127.8, 125.8, 124.0, 123.9, 122.9, 109.4 (unsaturated C), 35.1, 34.8 ($CMe_3$), 31.8, 31.7, 29.7, 29.6 ($CMe_3$), 16.3 (Me).

$^1H$ NMR ($C_6D_6$): d 7.69 (d, J = 8.07 Hz, 2H, phenyl-ortho H), 7.58 (d, J=2.31 Hz, 1H, phenoxy), 7.31-7.25 (m, 2H, aromatics), 7.22 (d, J=2.31 Hz, 1H, phenoxy), 7.21 (d, J=7.25 Hz, 1H, Ind), 7.12-7.07 (m, 2H, aromatics), 6.85 (dd, J=8.73, 7.09 Hz, 1H, Ind-H-6), 6.81 (s, 1H, $\eta^5$-CH), 2.01 (s, 3H, Me), 1.46, 1.36 (s, 9H, $CMe_3$).

FD-MS: 526 (M+).

[Synthetic Example 6]

<<(2-{Inden-1'-yl}$C_6H_4O$)$TiCl_2$□

[Synthesis of 2-(Inden-3'-yl)phenol; (2-{inden-3'-yl}$C_6H_4O$)$H_2$]

3-Bromophenol (15.00g, 86.70 mmol), 1-Indanone(11.46g, 86.70 mmol) and n-butyllithium (1.57 M in hexane; 116.0 mL, 182 mmol) were used to carry out a reaction in accordance with the process disclosed in Dalton Trans., 2003, 4580, and the resultant crude product was purified by flash silica gel column chromatography (eluant; hexane/methylene chloride = 3/1) to obtain 5.39 g of the targeted 2-{ Inden-3'-yl }phenol (yield 30%, yellow oil).

The obtained product was analyzed with Elemental Analysis, NMR and FD-MS, and the following results were obtained.

Elemental Analysis: Calc.: C, 86.51; H, 5.81.

Found: C, 86.28; H, 5.74.

$^1H$ NMR ($CDCl_3$): d 7.59-7.55 (m, 1H), 7.40-7.26 (m, 5H), 7.06-6.97 (m, 2H, aromatics); 6.67 (t, J = 1.98 Hz, 1H, CH); 5.36 (s, 1H, OH); 3.60 (d, J=1.98 Hz, 2H, $CH_2$).

$^{13}C[^1H]$ NMR ($CDCl_3$): d 153.0 (O-C); 144.2, 1-4-3.7, 140.5, 132.7, 129.4, 129.2, 126.3, 125.4, 124.0, 121.6, 120.5, 120.3, 115.6 (unsaturated C); 38.7 ($CH_2$).

$^1H$ NMR ($C_6D_6$) : d 7.38-7.22 (m, 3H), 7.15-7.02 (m, 4H), 6.88-6.82 (m, 1H, aromatics); 6.16 (t, J = 1.98 Hz, 1H, CH); 5.11 (s, 1H, OH); 2.99 (d, J=1.98 Hz, 2H, $CH_2$).

FD-MS: 208 (M+).

[Synthesis of (2-{Inden-1'-yl}$C_6H_4O$)$Ti(NMe_2)_2$]

2- (Inden-3'-yl) phenol (1.50g, 7.20 mmol) obtained in the previous reaction and $Ti(NMe_2)_4$ (1.62 g, 7.20 mmol) were used to carry out a reaction in accordance with the process disclosed in Organometallics, 2004(23), 1576, and then from the resultant solution, the solvent and the by-product were distilled off under reduced pressure to obtain 2.47 g of the targeted (2-{Inden-1'-yl}$C_6H_4O$)$Ti(NMe_2)_2$ (quantitative, red oil).

The obtained product was analyzed with NMR, and the following results were obtained.

$^{13}C[^1H]$ NMR ($CDCl_3$) : d 175.7 (Ti-O-C) ; 129.2, 128.9, 128.6, 126.9, 126.1, 125.10, 125.06, 124.3, 122.6, 122.5, 120.7, 120.6, 118.5, 100.7 (unsaturated C); 49.7, 46.6 ($NMe_2$).

$^1H$ NMR ($C_6D_6$) : d 7.43 (dd, J=7.62, 1.65 Hz, 1H), 7.28-7.19 (m, 3H), 6.95-6.87 (m, 2H), 6.84-6.70 (m, 2H, aromatics); 6.43 (d, J = 2.97 Hz, 1H, $\eta^5$-CH-2), 6.30 (dd, J = 3.62, 0.82 Hz, 1H, $\eta^5$-CH-3); 3.19 (s), 2.44 (s, 6H, $NMe_2$).
$^{13}C$ [$^1H$] NMR ($C_6D_6$) : d 176.8 (-Ti-O-C) ; 129.8, 129.5, 129.2, 128.4-127.6 (overlaps with $C_6D_6$ peaks), 126.9, 125.4, 125.1, 124.6, 123.0, 122.8, 121.2, 119.1, 115.7, 101.1 (unsaturated C); 49.7, 46.7 ($NMe_2$).

[Synthesis of (2-{Inden-1'-yl}$C_6H_4O$)$TiCl_2$]

To a Schlenk-type reactor thoroughly dried and purged with nitrogen, a rotator was placed, (2-{Inden-1'-yl}$C_6H_4O$)Ti($NMe_2$)$_2$ (1.59 g, 4.65 mmol) obtained in the previous reaction was charged, and benzene (10 mL) was added, and then the mixture was stirred. $SiCl_4$ (1.17mL, 9.32 mmol) was added thereto at room temperature, and then reacted under stirring at room temperature for 10 minutes. From the resultant solution, the solvent and the by-product were distilled off under reduced pressure to obtain 1.51 g of the targeted (2-{Inden-1'-yl}$C_6H_4O$)$TiCl_2$ (quantitative, brown solid).
The obtained product was analyzed with NMR and FD-MS, and the following results were obtained.
$^1H$ NMR ($CDCl_3$): d 7.89 (d, J = 8.90 Hz, 1H), 7.57 (dd, J= 7.41, 7.41 Hz, 1H), 7.49-7.34 (m, 4H), 7.25-7.14 (m, 3H, aromatics and $\eta^5$-CH); 6.62 (d, J = 8.24 Hz, 1H, $\eta^5$-CH).
$^{13}C$[$^1H$] NMR ($CDCl_3$): d 176.7 (Ti-O-C); 138.5, 137.6, 132.1, 130.3, 130.1, 129.5, 129.1, 128.0, 127.9, 127.7, 124.1, 123.8, 113.6, 110.2 (unsaturated C).
$^1H$ NMR ($C_6D_6$): d 7.25-7.15 (m, 2H), 7.10-6.95 (m, 3H), 6.93-6.82 (m, 2H), 6.74-6.68 (m, 1H, aromatics); 6.42 (d, J = 4.32 Hz, 1H, $\eta^5$-CH), 6.40 (d, J= 3.51 Hz, 1H, $\eta^5$-CH).
FD-MS: 324 (M+).

[Synthetic Example 7]

<<(2-{2-iPr-4-(9-Phenanthryl)-5,6-Benzoinden-1'-yl}-4 , 6-$^tBu_2$-$C_6H_4O$)$TiCl_2$>>

[Synthesis of 3-(1-(9-phenanthryl)naphth-2-yl)-2-n-propylpropionic Acid]

To a 300 mL Schlenk-type reactor thoroughly dried and purged with nitrogen, a rotator was placed, Na (0.87 g, 37.75 mmol) was charged, and ethanol (21 mL) was added thereto, to obtain EtONa solution. A solution prepared by dissolving Diethyl-n-propylmalonate (7.63 g, 37.75 mmol) in ethanol (5 mL) was slowly added to the above EtONa solution at room temperature, and to this reaction solution, ethanol (10 mL), which was used to wash the flask once charged with the Diethyl-n-propylmalonate, was also added. Subsequently, to the reaction solution, an orange solution prepared by dissolving 2-Bromomethyl-1-(9-phenanthryl)naphthalene (15.00 g, 37.75 mmol) which can be obtained in accordance with a process disclosed in Bull. Chem. Soc. Jpn., 1986(59),2044 in ethanol(50 mL)/toluene(40 mL), was slowly added at room temperature (added for 5 minutes). The temperature of the obtained brown solution was elevated and refluxed for 3.5 hours. To a dark-brown solid obtained by distilling off the solvent from the reaction product, toluene (200 mL) was added, and aqueous solution of hydrochloric acid having pH=1 was added to the resultant dark-brown suspension. The temperature of the suspension was elevated and refluxed for 11.5 hours. The resultant dark-brown crude product obtained by distilling off the solvent from the reaction product was purified by flash silica gel column chromatography (eluant: methylene chloride) to obtain 8.69 g of the targeted 3-(1-(9-phenanthryl)naphth-2-yl)-2-n-propylpropionic Acid (yield 55%, white solid). The obtained product was analyzed with NMR and FD-MS, and the following results were obtained.
$^1H$ NMR ($CDCl_3$): d 8.79 (d, J = 8.58 Hz, 2H), 7.88-7.84 (m, 3H), 7.77-7.57 (m, 4H), 7.52 (dd, J = 8.57, 3.30 1H), 7.43-7.15 (m, 5H, aromatics) ; 2.90-2.72 (m), 2.64-2.45 (m, total 3H, CH and $CH_2$) ; 1.43-1. O1 (m, 2H, n-Pr-$CH_2$), 0.98-0.84 (m, 2H, n-Pr-$CH_2$) ; 0.59 (t, J = 7.26 Hz), 0.51 (t, J = 7.26 Hz, total 3H, Me).
$^{13}C$ [$^1H$] NMR ($CDCl_3$) : d 181.4, 136.7, 136.5, 135.8, 135.1, 133.5, 132.4, 132.3, 132.2, 132.0, 131.6, 131.5, 130.5, 130.3, 129.1, 129.1, 128.7, 128.0, 127.8, 127.6, 127.3, 126.8, 126.6, 126.1, 125.4, 122.9, 122.7, 122.9, 122.7, 46.7, 46.0, 36.3, 36.2, 34.3, 34.2, 20.2, 20.1, 13.6, 13.4.
FD-MS: 418 (M+).

[Synthesis of 2-Isopropyl-4-(9-Phenanthryl)-5,6-Benzo-1-indanone; {2-iPr-4-(9-Phen)-5,6-Bz-1-indanone}]

3-(1-(9-phenanthryl)naphth-2-yl)-2-n-propylpropionic Acid (6.89 g, 16.46 mmol) obtained in the previous reaction was used as a raw material to carry out a cyclization reaction in accordance with a similar process to the process disclosed in Organometallics,1994(13),954. The resultant crude product was purified by flash silica gel column chromatography (impurities were eluted with hexane/methylene chloride = 2/1, and subsequently a target product was eluted with hexane/methylene chloride = 1/1) to obtain 1.33 g of the mixture containing targeted 2-Isopropyl-4-(9-Phenanthryl)-5,6-Benzo-1-indanone at the ratio of 81% purity (light yellow solid). The mixture was repeatedly purified with a chromatography and then washed with diethyl ether to obtain pure 2-Isopropyl-4-(9-Phenanthryl)-5,6-Benzo-1-indanone (white solid).

The obtained pure 2-Isopropyl-4-(9-Phenanthryl)-5,6-Benzo-1-indanone was analyzed with NMR and FD-MS, and the following results were obtained.

$^1H$ NMR ($CDCl_3$): d 8.84 (t, J=7.91 Hz, 2H), 8.47 (s, 1H), 8.10 (d, J=8.24Hz, 1H), 7.92 (dd, J=7.74, 1.48 1H), 7.79-7.65 (m, 4H), 7.53-7.36 (m, 4H), 7.26 (d, J=6.60Hz, 2H, aromatics); 3.22 (dd, J=17.46, 8.57 Hz, 1H, Ind-CH-3), 2.79-2.65 (m, 1H, Ind-CH-2), 2.44 (dd, J=17.48, 4.95 Hz, 1H, Ind-CH-3), 1.97-1.85 (m, 1H, $CH_2$), 1.49-1.36 (m, 1H, $CH_2$), 1.35-1.18 (m, 2H, $CH_2$), 0.84 (t, J = 7.25 Hz, 3H, Me).

$^{13}C[^1H]$ NMR ($CDCl_3$) : d 209.7 (0=C) ; 146.1, 136.7, 135.1, 134.3, 133.8, 132.8, 131.6, 131.1, 130.7, 130.6, 130.4, 128.7, 128.7, 128.5, 128.4, 127.0, 126.8, 126.4, 126.2, 126.1, 124.4, 124.4, 123.1, 122.7, 48.0, 33.6, 31.9, 20.5, 20.4, 13.9.

FD-MS: 400 (M+).

[Synthesis of 2-(2-Isopropyl-4-(9-Phenanthryl)-5,6-Benzoinden-3'-yl)-4,6-di-tert-butylphenol; (2-{2-iPr-4-(9-Phen)-5,6-Bz-inden-3'-yl}-4,6-$^tBu_2$-$C_6H_2O)H_2$]

2-Bromo-4,6-di-tert-butylphenol (1.03 g, 3.60 mmol), 2-Isopropyl-4-(9-Phenanthryl)-5,6-Benzo-1-indanone at 81% purity (1.44 g, 3.59 mmol) obtained in the previous reaction and n-butyllithium (1.57 M in hexane; 4.81 mL, 7.55 mmol) were used to carry out a reaction in accordance with the process disclosed in Dalton Trans. , 2003, 4580, and the resultant crude product was purified by flash silica gel column chromatography (unreacted 2-Bromo-4,6-di-tert-butylphenol was eluted with hexane, and subsequently a target product was eluted with hexane/diethyl ether = 95/5) to obtain 0.92 g of the targeted 2-(2-Isopropyl-4-(9-Phenanthryl)-5,6-Benzoinden-3'-yl)-4,6-di-tert-butylphenol (yield 43%, white solid).

The obtained product was analyzed with Elemental Analysis, NMR and FD-MS, and the following results were obtained.

Elemental Analysis: Calc: C, 89.75; H, 7.53.

Found: C, 89.18; H, 6.92.

$^1H$ NMR ($CDCl_3$): d 8.83 (t, J = 7.09 Hz, 2H, aromatics), 7.94-7.86 (m, 2H), 7.81 (s, 1H), 7.77-7.64 (m, 3H), 7.60 (d, J= 1.98 Hz, 1H), 7.44-7.37 (m, 5H), 7.23-7.18 (m, 2H, aromatics) ; 5.26 (s), 5.21 (s, total 1H, OH); 3.45 (dd, J = 23.08, 3.30 Hz, 1H, Ind-CH-3), 3.16 (dd, J=23.09, 7.25 Hz, 1H, Ind-CH-3); 2.33 (t, 2H, $CH_2$); 1.511(s), 1.506 (s, total 9H, $CMe_3$); 1.46-1.42 (m, 2H, $CH_2$); 1.39(s), 1.38 (s, total 9H, $CMe_3$),; 0.80 (t, J - 7.42 Hz, 3H, Me).

$^{13}C[^1H]$ NMR ($CDCl_3$) : d 151.0, 149.5, 149.4 (O-C) ; 144.0, 141.9, 141.8, 140.4, 135.3, 135.3, 135.1, 134.72, 134.68, 133.5, 132.6, 132.5, 131.8, 131.5, 131.4, 130.7, 130.3, 128.7, 128.3, 126.9, 126.8, 126.7, 126.1, 125.2, 125.1, 124.8, 123.6, 123.0, 122.7, 120.8, 117.8 (unsaturated C) ; 39.7, (Ind-$CH_2$); 35.1, 34.4, 31.7, 29.7, 22.3 ($CH_2$ and $CMe_3$); 14.0 (Me).

FD-MS: 588 (M+).

[Synthesis of (2-{2-iPr-4-(9-Phenanthryl)-5,6-benzoinden-1'-yl}-4,6-$^tBu_2$-$C_6H_4O)TiCl_2$]

2-(2-Isopropyl-4-(9-Phenanthryl)-5,6-Benzoinden-3'-yl )-4,6-di-tert-butylphenol (0.052 g, 0.088 mmol) obtained in the previous reaction and $Ti(NMe_2)_4$ (0.020 g, 0.088 mmol) were used to carry out a reaction in accordance with the process disclosed in Organometallics, 2004 (23), 1576, and then from the resultant solution, the solvent and the by-product were distilled off under reduced pressure to obtain a brown solid. Subsequently, $CDCl_3$ was added to the solid and stirred. $SiCl_4$ (0.02 mL, 0.176 mmol) was added thereto at room temperature, and then reacted under stirring for 5 minutes. From the resultant solution, the solvent and the by-product were distilled off under reduced pressure to obtain 0.063 g of the targeted (2-{2-iPr-4-(9-Phenanthryl)-5,6-benzoinden-1'-yl}-4,6-$^tBu_2$-$C_6H_4O)TiCl_2$ (quantitative, brown solid).

The obtained product was analyzed with NMR and FD-MS, and the following results were obtained.

$^1H$ NMR ($CDCl_3$) : d 8.90-8.81 (m, 2H), 8.25-8.06, 7.89-7.55, 7.40-7.35, 7.26-7.20 (m, total 14H, aromatics) ; 6.65 (s), 6.50 (s, total 1H, $\eta^5$-CH); 1.66 (s, 2H, $CH_2$); 1.444 (s), 1.438 (s, total 9H, $CMe_3$); 1.39, 1.38, 1.37 (total 11H, $CMe_3$ and $CH_2$), 0.86-0.77 (m, 3H, Me). FD-MS: 704 (M+).

[Synthetic Example 8]

<<(2-{Fluoren-9'-yl}-4,6-$^{t}Bu_2$-$C_6H_4O$)$TiCl_2$>>

[Synthesis of 9-(2-Hydroxy-4,6-di-tert-butylphenyl)fluorenol]

To a Schlenk-type reactor thoroughly dried and purged with nitrogen, a rotator was placed, 2-Bromo-4,6-di-tert-butylphenol (5.00 g, 17.53 mmol) was charged, and THF (20 mL) was added, and then the mixture was dissolved under stirring. After completion of the n-butyllithium (1.57 M in hexane; 23.44 mL, 36.81 mmol) slow addition at 0 °C, the temperature was slowly elevated, and reacted under stirring at room temperature for 14 hours. The resultant mixture was cooled again to -78 °C, and a solution prepared by dissolving 9-Fluorenone (3.16 g, 17.53 mmol) in THF (20 mL) was slowly added. Thereafter, the temperature was slowly elevated, and reacted under stirring at room temperature for 22 hours. After the reaction, to the reaction liquid, water (20 mL) and conc. HCL (8 mL) were added to stop the reaction. The mixture was transferred to a separatory funnel, and diethyl ether was added and shaken, and the organic layer was separated. After the separation it was concentrated and dried to obtain 7.28 g of the targeted 9-(2-Hydroxy-4,6-di-tert-butylphenyl)fluorenol in a crude form (brown solid).

The obtained product was analyzed with FD-MS, and the following result was obtained.

FD-MS: 386 (M+)

[Synthesis of 9-(2-Hydroxy-4,6-di-tert-butylphenyl)fluorene]

To a Schlenk-type reactor thoroughly dried and purged with nitrogen, a rotator was placed, 9-(2-Hydroxy-4,6-di-tert-butylphenyl)fluorenol (7.28 g) obtained in the previous reaction was charged, and acetic acid (146 mL) and 57% hydrochloric acid (29 mL) were added, and stirred. The mixture was reacted under stirring at room temperature for 5 hours. The resultant brown suspension was poured into water and extracted with diethyl ether. The obtained organic layer was washed firstly with hydrogencarbonate aqueous solution and then with sodium hydrogensulfite aqueous solution (10 wt%, ca. 150 mL), and $Na_2SO_4$ was added to the washed organic layer, and dried. The filtrate obtained by filtration was concentrated and dried to obtain a brown solid. To the solid, hexane/diethyl ether mixed solution (=95/5, 350 mL) was added, then it was well stirred, washed and filtered. The obtained insoluble substance was dried to obtain 1.32 g of the targeted 9-(2-Hydroxy-4,6-di-tert-butylphenyl)fluorene (19%, light yellow solid). The composition dissolved in hexane/diethyl ether mixed solution (=95/5) was purified by flash silica gel column chromatography (eluant; hexane/diethyl ether = 95/5) to further obtain 0.61 g of the target product (9%, light yellow solid). The yield in total was 1.93 g (28%).

The obtained product was analyzed with Elemental Analysis, NMR and FD-MS, and the following results were obtained.

Elemental Analysis: Calc: C, 87.52; H, 8.16.

Found: C, 87.78; H, 7.55.

$^{1}H$ NMR ($CDCl_3$): d 7.85 (d, J =7.27 Hz, 2H, Flu-H-4, 5), 7.43 (t, J =7.26 Hz, 2H, Flu-H-3, 6), 7.42 (d, J =7.59 Hz, 2H, Flu-H-1, 8), 7.33-7.24 (m, 4H, aromatics), ; 5.14 (s, 1H, OH); 1.33 (br s, 9H, $CMe_3$), 1.28 (br, 9H, $CMe_3$).

$^{13}C[^{1}H]$ NMR ($CDCl_3$) : d150.6 (O-C) ; 145.6 (br), 142.1, 140.4, 127.8, 127.7, 125.4, 123.1, 120.2 (unsaturated C); 34.8, 34.3 ($CMe_3$) ; 31.7 ($CH_3$ and CH), 29.8 ($CH_3$).

FD-MS: 370 (M+).

[Synthesis of (2-{Fluoren-9'-yl}-4,6-$^{t}Bu_2$-$C_6H_4O$)$TiCl_2$]

To a Schlenk-type reactor thoroughly dried and purged with nitrogen, a rotator was placed, $TiCl_4$ (1.0 M in toluene; 0.98 mL, 0.98 mmol) was charged thereto, toluene (10 mL) was added. To the mixture, 9-(2-Hydroxy-9,6-di-tert-butylphenyl)fluorene (0.37 g, 0.98 mmol) obtained in accordance with the previous process was slowly added dropwise at room temperature under stirring, and after the addition, it was reacted under stirring at room temperature for 1 hour. The resultant red solution was cooled to -78 °C in a dry ice-acetone bath, and n-butyllithium (1.56 M in hexane; 1.26 mL, 1.97 mmol) was slowly added dropwise. After the addition, the temperature of the mixture was slowly changed back to room temperature, stirred for 10 hours at room temperature, and subsequently reacted under stirring at 100 °C for 3.5 hours, to obtain a brown suspension. The suspension was filtered with a glass filter, which is filled with celite, under a nitrogen atmosphere. The resultant black substance was washed with toluene (4 mL), and the wash liquid was mixed with the filtrate. The resultant solution was concentrated and dried, and recrystallized with toluene to obtain 0.13 g of brown solid containing the target product.

The obtained product was analyzed with NMR and FD-MS, and the following results were obtained.

$^{1}H$ NMR ($C_6D_6$): 7.70-6.05 (m, 10H, aromatics); 1.44 (s, 9H, $CMe_3$), 1.38 (s, 9H, $CMe_3$).

FD-MS: 486 (M+).

[Synthetic Example 9]

<<2-{1,1,4,4,7,7,10,10-octamethyl-1,2,3,4,7,8,9,10-oc tahydrodibenzo[b,h]fluorenyl}-4,6-$^tBu_2$-$C_6H_4OH$; 9-(2-Hydroxy-4,6-di-tert-butylphenyl)Octamethyloctahydrodib enzofluorene>>

[Synthesis of 1,1,4,4,7,7,10,10-octamethyl-1,2,3,4,7,8,9,10-octahydrodibe nzo[b,h]fluorenone; Octamethyloctahydrodibenzofluorenone]

1,1,4,4,7,7,10,10-octamethyl-1,2,3,4,7,8,9,10-octahyd rodibenzo[b,h]fluorene(Octamethyloctahydrodibenzofluorene; 5.00 g, 12.93 mmol) synthesized in accordance with a process disclosed in Organometallics., 2004 (23) 1777, was used to carry out the oxidation reaction in accordance with a similar process to a process disclosed in J. Org. Chem., 1997(62)8767. The resultant product was purified by flash silica gel column chromatography (eluant; hexane/methylene chloride = 1/1) to obtain 3.44 g of the target product (66%, yellow solid).

The obtained product was analyzed with Elemental Analysis, NMR and FD-MS, and the following results were obtained.

Elemental Analysis: Clacl.: C, 86.95; H, 9.06

Found: C, 86.90; H, 8.67

$^1H$ NMR ($CDCl_3$): d 7.61 (s, 2H, Flu), 7.41 (s, 2H, Flu); 1.70 (s, 8H, $CH_2$); 1.35 (s, 12H, $CMe_3$), 1.29 (s, 12H, $CMe_3$).

$^{13}C[^1H]$ NMR ($CDCl_3$): d 194.0 (O=C); 151.8, 145.4, 141.3, 132.6, 122.7, 117.9 (unsaturated C) ; 35.3, 34.92, 34.85, 34.7, 31.6 ($CH_3$ and $CH_2$). FD-MS: 400 (M+).

[Synthesis of 9-(2-Hydroxy-4,6-di-tert-butylphenyl)Octamethyloctahydrodib enzofluorenol]

To a Schlenk-type reactor thoroughly dried and purged with nitrogen, a rotator was placed, 2-Bromo-4,6-di-tert-butylphenol (2.36 g, 8.29 mmol) was charged and THF (30 mL) was added, and then the mixture was dissolved under stirring. After completion of the slow addition of n-butyllithium (1.56 M in hexane; 11.2 mL, 17.41 mmol) at 0 °C, the temperature was slowly elevated, and reacted under stirring at room temperature for 12 hours. The resultant mixture was cooled again to -78 °C, and a solution prepared by dissolving 9-Octamethyloctahydrodibenzofluorenone (2.36 g, 18.29 mmol) in THF (50 mL) was slowly added. After the addition, the temperature was slowly elevated, and reacted under stirring at room temperature for 16 hours. After the reaction, to the reaction liquid, water (100 mL) was added to stop the reaction. The mixture was transferred to a separatory funnel, and diethyl ether was added and shaken, and the organic layer was separated. It was dried over $MgSO_4$, and concentrated and dried to obtain the targeted 9-(2-Hydroxy-4,6-di-tert-butylphenyl)octamethyloctahydrodib enzofluorenol in a crude form (brown solid).

[Synthesis of 9-(2-Hydroxy-4,6-di-tert-butylphenyl)octamethyloctahydrodib enzofluorene]

To a Schlenk-type reactor thoroughly dried and purged with nitrogen, a rotator was placed, crude 9-(2-Hydroxy-4,6-di-tert-butylphenyl)octamethyloctahydrodib enzofluorenol (8.29 g) obtained in the previous reaction was charged, acetic acid (70 mL) and 57% hydroiodic acid (14 mL) were added, and stirred. The mixture was reacted under reflux at room temperature for 7 hours. The resultant brown suspension was poured into water (300 mL) and extracted with diethyl ether. The obtained organic layer was washed firstly with hydrogencarbonate aqueous solution and then with sodium hydrogensulfite aqueous solution (10 wt%, ca. 150 mL), $MgSO_4$ was added to the washed organic layer, dried, and filtered to obtain a yellow solution. The solution was slowly concentrated, and thus unreacted 9-Octamethyloctahydrodibenzofluorenone crystal precipitate was removed by filtration. The filtrate was first concentrated and dried, the resultant solid was dissolved by adding hexane/diethylether mixed solution (= 95/5,20 mL), and purified by flash silica gel column chromatography (eluant; hexane/diethyl ether = 95/5) to obtain 1.04 g of the targeted product as a rotamer mixture (sp- and ap-form) (21%, light yellow solid).

The obtained product was analyzed with NMR and FD-MS, and the following results were obtained.

$^1H$ NMR ($CDCl_3$) : d7.78-7.51 (m, 4H, fluorenyl); 6.70-6.36 (m, 2H, phenoxy) ; 5.59(s), 5.26 (s, total 1H, Flu-H-9) ; 5.51(br), 5.02 (br, total 1H, OH); 1.70 (br, 8H, $CH_2$); 1.38-1.03 (m, 30H, $CH_3$ and $CMe_3$).

FD-MS: 590 (M+).

[Synthetic Example 10]

<<(1-{Inden-1'-yl}-2-$C_{10}H_6O$)$TiCl_2$) [Synthesis of 1-(Inden-3'-yl)-2-naphthol;(1-{inden-3'-yl}-2-$C_{10}H_6O$)$H_2$]

3-Bromo-2-naphthol(10.00 g, 44.83 mmol), 1-Indanone(5.92 g, 44.83 mmol) and n-butyllithium (1.57 M in hexane; 60.0 mL, 94.1 mmol) were used to carry out a reaction in accordance with the process disclosed in Dalton

Trans. , 2003 , 4580, and the resultant crude product was purified by flash silica gel column chromatography (eluant; hexane/methylene chloride = 1/1) to obtain 3.69 g of the targeted 1-(Inden-3'-yl)-2-naphthol (yield 32%, white solid).

The obtained product was analyzed with Elementary Analysis, NMR and FD-MS, and the following results were obtained.

Elementary Analysis: Calc.: C, 88.34; H, 5.46.

Found: C, 88.02; H, 5.28.

$^1$H NMR ($CDCl_3$): d 7.83-7.80 (m, 2H), 7.61 (d, J =7.02 Hz, 1H), 7.52-7.47 (m, 1H), 7.36-7.18 (m, 5H), 6.96 (d, J=7.29 Hz, 1H, aromatics); 6.78 (t, J= 2.16 Hz, 1H, CH); 5.46 (s, 1H, OH); 3.75 (d, J =1.35 Hz, 2H, $CH_2$).

$^{13}$C[$^1$H] NMR ($CDCl_3$): d 150.9 (O-C); 144.4, 144.1, 138.7, 135.8, 132.9, 129.7, 128.9, 128.1, 126.5, 126.3, 125.6, 125.0, 124.0, 123.3, 121.2, 117.3, 114.3 (unsaturatedC); 39.1 ($CH_2$).

FD-MS: 258 (M+).

[Synthesis of (1-{Inden-1'-yl}-2-$C_{10}H_6O$)Ti($NMe_2$)$_2$]

1-(Inden-3'-yl)-2-naphthol (1.00 g, 3.87 mmol) obtained in the previous reaction and Ti ($NMe_2$) $_4$ (0.87 g, 3.87 mmol) were used to carry out a reaction in accordance with the process disclosed in Organometallics., 2004(23), 1576, and then from the resultant solution, the solvent and the by-product were distilled off under reduced pressure to obtain 1.52 g of the targeted (1-{Inden-1'-yl}-2-$C_{10}H_6O$)Ti($NMe_2$)$_2$ (quantitative, red solid).

The obtained product was analyzed with NMR, and the following results were obtained.

$^1$H NMR ($C_6D_6$) : d 7.72 (dd, J = 7.58, 7.58 Hz, 2H), 7.65 (d, J = 8.91 Hz, 1H), 7.33-7.15 (m, 4H), 7.09 (dd, J = 8.64, 1.08 Hz, 1H), 6.83 (dd, J= 7.50, 3.75 Hz, 1H), 6.69 (dd, J = 12.11, 7.58 Hz, 1H, aromatics); 6.48 (d, J = 2.97 Hz, 1H, $\eta^5$-CH-2), 6.40 (dd, J= 3.11, 0.95 Hz, 1H, $\eta^5$-CH-3); 3.22 (s), 2.45 (s, 6H, $NMe_2$).

$^{13}$C [$^1$H] NMR ($C_6D_6$) : d 174.2 (Ti-O-C); 135.4, 130.5, 130.1, 129.0, 128.5, 126.65, 126.58, 125.4, 125.3, 124.7, 123.9, 123.23, 123.17, 122.7, 122.6, 119.3, 118.8, 101.7 (unsaturated C) ; 49.8, 46.7 ($NMe_2$).

[Synthesis of (1-{Inden-1'-yl}-2-$C_{10}H_6O$)$TiCl_2$]

To a Schlenk-type reactor thoroughly dried and purged with nitrogen, a rotator was placed, (1-{Inden-1'-yl}-2-$C_{10}H_6O$)Ti($NMe_2$)$_2$ (1.47 g, 3.74 mmol) obtained in the previous reaction was charged, and benzene (5 mL) was added, and then the mixture was stirred. $Me_3SiCl$ (2.38 mL, 18.67mmol) was added thereto at room temperature, and after the addition reacted under stirring at 50 °C for 6 hours. From the resultant solution, the solvent and the by-product were distilled off under reduced pressure to obtain 1.40 g of the targeted (1-{Inden-1'-yl}-2-$C_{10}H_6O$)$TiCl_2$ (quantitative, brown solid).

The obtained product was analyzed with NMR and FD-MS, and the following results were obtained.

$^1$H NMR ($CDCl_3$) : d 7.95-7.86 (m, 3H), 7.61-7.23 (m, 8H, aromatics and $\eta^5$-CH); 6.86 (d, J = 8.91 Hz, 1H, $\eta^5$-CH).

$^{13}$C [$^1$H] NMR ($CDCl_3$) : d 174.2 (Ti-O-C) ; 139.5, 137.9, 134.3, 133.8, 131.1, 130.5, 130.2, 129.5, 128.6, 128.3, 128.0, 127.5, 125.1, 124.1, 122.8, 121.9, 115.8, 110.7 (unsaturated C).

$^1$H NMR ($C_6D_6$) : d 7.59 (d, J=8.64, 1H), 7.45 (dd, J = 8.91, 1.62 Hz, 1H), 7.24-7.11 (m, 4H), 6.98 (dd, J = 7.56, 7.56 Hz, 1H), 6.78 (d, J = 8.91 Hz, 1H), 6.67 (m, 2H, aromatics); 6.58 (d, J = 3.24 Hz, 1H, $\eta^5$-CH-2), 6.54 (dd, J = 3.38, 0.68 Hz, 1H, $\eta^5$-CH-3).

FD-MS: 374 (M+).

[Synthetic Example 11]

<<(2-{5,6-$(MeO)_2$-inden-1'-yl}-4,6-$^tBu_2$-$C_6H_4O$)$TiCl_2$>>

[Synthesis of 2-(5,6-Dimethoxyinden-3'-yl)-4,6-di-tert-butylphenol; (2-{5,6-$(MeO)_2$-inden-1'-yl}-4,6-di-tert-butyl-$C_6H_2O$) $H_2$]

2-Bromo-4,6-di-tert-butylphenol (7.41 g, 26.01 mmol), 5,6-Dimethoxy-1-Indanone(5.00 g, 26.01 mmol) and n-butyllithium (1.57 M in hexane; 54.6 mL, 52.0 mmol) were used to carry out a reaction in accordance with the process disclosed in Dalton Trans., 2003, 4580, and the resultant crude product was repeatedly purified (1st time: eluant; hexane/methylene chloride = 1/1, 2nd time: eluant; methylene chloride) by flash silica gel column chromatography (eluant; hexane/methylene chloride = 1/1) to obtain 2.91 g of the targeted 2-(5,6-Dimethoxyinden-3'-yl)-4,6-di-tert-butylphenol (yield 11%, white solid).

The obtained product was analyzed with Elementary Analysis, NMR and FD-MS, and the following results were obtained.

Elementary Analysis: Calc.: C, 78.91; H, 8.48.

Found: C, 78.12; H, 8.68.

$^{1}H$ NMR ($CDCl_3$): d 7.32 (d, J =2.43 Hz, 1H), 7.21 (d, J =2.70 Hz, 1H, aromatics); 7.13 (s), 6.88 (s, 1H, Ind); 6.56 (t, J = 2.03 Hz, 1H, CH); 5.67 (s, 1H, OH); 3.92 (s), 3.82 (s, 3H, OMe) ; 3.53 (d, J =1.62 Hz, 2H, $CH_2$) ; 1.45 (s), 1.32 (s, 9H, $CMe_3$).

$^{13}C$ [$^{1}H$] NMR ($CDCl_3$) : d 149.3 (O-C) ; 148.4, 147.9, 141.6, 141.2, 136.9, 136.8, 135.3, 130.7, 123.7, 123.5, 121.2, 108.0, 104.3, (unsaturatedC); 56.2, 55.9 (OMe); 38.5 ($CH_2$); 35.1, 34.3 ($CMe_3$); 31.6, 29.6 ($CMe_3$).

FD-MS: 380 (M+).

[Synthesis of (2-{5,6-$MeO_2$-inden-1'-yl}-4,6-$^{t}Bu_2$-$C_6H_4O$)Ti($NMe_2$)$_2$]

2-(5,6-Dimethoxyinden-3'-yl)-4,6-di-tert-butylphenol (0.53 g, 1.41 mmol) obtained in the previous reaction and Ti ($NMe_2$)$_4$ (0.32 g, 1.41 mmol) were used to carry out a reaction in accordance with the process disclosed in Organometallics, 2004(23), 1576, and then from the resultant solution, the solvent and by-product were distilled off under reduced pressure to obtain 0.72 g of the targeted (2-{5,6-MeO2-inden-1'-yl}-4,6-$^{t}Bu_2$-$C_6H_4O$)Ti($NMe_2$)$_2$ (quantitative, red solid).

The obtained product was analyzed with NMR, and the following results were obtained.

$^{1}H$ NMR ($CDCl_3$) : d 7.29 (d, J =2.64 Hz, 1H, phenoxy), 7.24 (d, J =2.31 Hz, 1H, phenoxy) ; 6.82 (s), 6.58 (s, 1H, Ind); 6.49 (d, J = 2.96 Hz, 1H, $\eta^5$-CH-2), 6.44 (d, J= 2.97 Hz, 1H, $\eta^5$-CH-3); 3.89 (s), 3.78 (s, 3H, OMe) ; 3.31 (s), 2.48 (s, 6H, $NMe_2$); 1.41 (s), 1.36 (s, 9H, $CMe_3$).

$^{13}C$ [$^{1}H$] NMR ($CDCl_3$) : d 171.8 (Ti-O-C) ; 150.8, 150.1, 140.5, 134.5, 127.1, 126.3, 125.2, 123.8, 122.8, 119.7, 117.4, 101.7, 100.6, 100.1 (unsaturated C); 56.1, 55.8 (OMe); 49.2, 46.3 ($NMe_2$); 34.9, 34.4 ($CMe_3$) ; 31.9, 29.6 ($CMe_3$).

$^{1}H$ NMR ($C_6D_6$) : d 7.58 (d, J =2.64 Hz, 1H, phenoxy), 7.54 (d, J=2.31 Hz, 1H, phenoxy); 6.69 (s), 6.43 (s, 1H, Ind); 6.38 (d, J = 3.30 Hz, 1H, $\eta^5$-CH-2), 6.27 (d, J = 2.96 Hz, 1H, $\eta^5$-CH-3); 3.37 (s, 3H, OMe), 3.36 (s, 6H, $NMe_2$), 3.03 (s, 3H, OMe), 2.59 (s, 6H, $NMe_2$), 1.72 (s), 1.43 (s, 9H, $CMe_3$).

$^{13}C$ [$^{1}H$] NMR ($C_6D_6$) : d 172.7 (Ti-O-C); 152.3, 151.3, 141.3, 135.1, 128.4-127.5 (overlapped with $C_6D_6$), 127.3, 126.2, 124.1, 123.4, 120.1, 117.8, 102.1, 101.2, 100.6 (unsaturated C) ; 55.2, 54.9 (OMe); 49.5, 46.6 ($NMe_2$); 35.3, 34.6 ($CMe_3$); 32.2, 30.2 ($CMe_3$).

[Synthesis of (2-{5,6-$MeO_2$-inden-1'-yl}-4,6-$^{t}Bu_2$-$C_6H_4O$)$TiCl_2$]

To a Schlenk-type reactor thoroughly dried and purged with nitrogen, a rotator was placed, (2-{5,6-$MeO_2$-inden-1'-yl}-4,6-$^{t}Bu_2$-$C_6H_4O$)Ti($NMe_2$)$_2$ (0.67 g, 1.29 mmol) obtained in the previous reaction was charged, and benzene (5 mL) was added, and then the mixture was stirred. $Me_3SiCl$ (0.99 mL, 7.76 mmol) was added thereto at room temperature, and after the addition reacted under stirring at 50 °C for 10 hours. From the resultant solution, the solvent and the by-product were distilled off under reduced pressure to obtain 0.64 g of the targeted (2-{5,6-(MeO)$_2$ -inden-1'-yl}-4,6-$^{t}Bu_2$-$C_6H_4O$)$TiCl_2$ (quantitative, brown solid).

The obtained product was analyzed with NMR and FD-MS, and the following results were obtained.

$^{1}H$ NMR ($CDCl_3$) : d 7.41 (d, J =2.31 Hz, 1H, phenoxy), 7.31 (d, J =1.98 Hz, 1H, phenoxy); 7.05 (s, 1H, Ind), 6.95 (d, J = 3.29 Hz, 1H, $\eta^5$-CH-2), 6.92 (dd, J=3.29, 0.66Hz, 1H, $\eta^5$-CH-3), 6.61 (s, 1H, Ind), 4.01 (s), 3.84 (s, 3H, OMe); 1.39 (s), 1.35 (s, 9H, $CMe_3$).

$^{13}C$ [$^{1}H$] NMR ($CDCl_3$) : d 172.9 (Ti-O-C) ; 154.7, 154.0, 146.6, 137.2, 135.1, 134.6, 131.8, 128.5, 124.6, 124.0, 123.8, 108.7, 103.7, 100.7 (unsaturated C); 56.4, 56.3 (OMe); 35.1, 34.8 ($CMe_3$); 31.7, 29.6 ($CMe_3$).

$^{1}H$ NMR ($C_6D_6$): d 7.57 (d, J =2.31 Hz, 1H, phenoxy), 7.32 (d, J =2.31 Hz, 1H, phenoxy); 6.54 (s, 1H, Ind), 6.51 (d, J = 3.30 Hz, 1H, $\eta^5$-CH), 6.49 (d, J = 2.96 Hz, 1H, $\eta^5$-CH), 6.42 (s, 1H, Ind), 3.32 (s), 2.83 (s, 3H, OMe); 1.50 (s), 1.36 (s, 9H, $CMe_3$).

FD-MS: 497 (M+).

[Synthetic Example 12]

<<(2-{Inden-1'-yl}-4,6-$^{t}Bu_2$-$C_6H_4O$)$ZrCl_2$>>

To a screw-cap type NMR tube thoroughly dried and purged with nitrogen, (2-{Inden-1'-yl}-4,6-$^{t}Bu_2$-$C_6H_4O$)Zr ($NMe_2$)$_2$ (0.030 g, 0.054 mmol) obtained in accordance with the process disclosed in Organometallics, 2004(23), 1576, was charged, and benzene-d6 (0.8 mL) was added. Subsequently, $SiCl_4$ (0.012 mL, 0.11 mmol) was added using a micro syringe at room temperature, and after the addition reacted while being shaken at room temperature for 2 minutes. From the resultant solution, the solvent and the by-product were distilled off under reduced pressure to obtain 0.026 g of the targeted (2-{Inden-1'-yl}-4,6-$^{t}Bu_2$-$C_6H_4O$)$ZrCl_2$ (quantitative, yellow solid).

The obtained product was analyzed with NMR and FD-MS, and the following results were obtained.

$^{1}H$ NMR ($C_6D_6$): d 7.44 (d, J = 2.31 Hz, 1H, phenoxy), 7.41 (d, J = 8.10 Hz, 1H, Ind), 7.32 (d, J= 2.31 Hz, 1H,

phenoxy), 7.06 (d, 1H, J= 6.48 Hz, Ind); 6.92 (d, J = 3.30 Hz, 1H, $\eta^5$-CH), 6.91-6.84 (m, 2H, aromatics), 5.25 (d, J=3.30 Hz, 1H, $\eta^5$-CH); 1.41 (s), 1.33 (s, 9H, $CMe_3$).

FD-MS: 480 (M+).

[Comparative Reference Example 1]

<<(2-{Inden-1'-yl}-4,6-$^tBu_2$-$C_6H_4O$)$TiCl_2$>>

To a Schlenk-type reactor thoroughly dried and purged with nitrogen, a rotator was placed, 2-(Inden-3'-yl)-4,6-di-tert-butylphenol (0.90 g, 2.81 mmol) which can be obtained in accordance with a process disclosed in Dalton Trans. , 2003, 4580 was charged, ether (20 mL) was added, and the mixture was stirred. The reactor was cooled to -78 °C in a dry ice-acetone bath. N-butyllithium (1.57 M in hexane; 3.58 mL, 5.62 mmol) was slowly added dropwise, and after the dropwise addition, the temperature was slowly elevated to room temperature, and reacted under stirring at room temperature for 15 hours. Again, the reactor was cooled to -78 °C, and $TiCl_4$ (1.0M in toluene; 2.81mL, 2.81mmol) was slowly added dropwise under stirring. After the dropwise addition, the temperature was slowly changed back to room temperature, and reacted under stirring at room temperature for 94 hours, to obtain a brown suspension. The suspension was concentrated and dried. The resultant was analyzed with $^1H$ NMR ($CDCl_3$), and the targeted titanium compound was not observed.

[Comparative Reference Example 2]

<<(2-{Inden-1'-yl}-4,6-$^tBu_2$-$C_6H_4O$)$TiCl_2$>>

2-(Inden-3'-yl)-4,6-di-tert-butylphenol (1.00 g, 3.12 mmol), $TiCl_4$ (1.0 M in toluene; 3.12 mL, 3.12 mmol), and n-butyllithium (1.57 M in hexane; 3.97 mL, 6.24 mmol) were used to carry out a reaction in accordance with the process disclosed in Organometallics., 2004(23), 540, and a brown suspension was obtained. The suspension was concentrated and dried. The resultant was analyzed with $^1H$ NMR ($CDCl_3$), and only 1% of the targeted titanium compound was observed.

[Comparative Reference Example 3]

<<(2-{Inden-1'-yl}-4,6-$^tBu_2$-$C_6H_4O$)$ZrCl_2$>>

To a Schlenk-type reactor thoroughly dried and purged with nitrogen, a rotator was placed, 2-(Inden-3'-yl)-4,6-di-tert-butylphenol (0.90 g, 2.81 mmol) which can be obtained in accordance with a process disclosed in Dalton Trans. , 2003, 4580 was charged, ether (20 mL) was added, and the mixture was stirred. The reactor was cooled to -78 °C in a dry ice-acetone bath. n-Butyllithium (1.57 M in hexane; 3.58 mL, 5.62 mmol) was slowly added dropwise, and after the dropwise addition, the temperature was slowly changed back to room temperature, and reacted under stirring at room temperature for 15 hours. This suspension was concentrated and dried, and $ZrCl_4$ (0.65 g, 2.81 mmol) was added as a solid form under a nitrogen atmosphere. Again, the reactor was cooled to -78 °C, and 25 mL of toluene cooled to -78 °C was added under intensive stirring. After completion of the toluene addition, the temperature was slowly changed back to room temperature, and reacted under stirring at room temperature for 15 hours, to obtain a brown suspension. The suspension was concentrated and dried. The resultant was analyzed with $^1H$ NMR ($CDCl_3$), and only 1% of the targeted zirconium compound was observed.

[Comparative Reference Example 4]

<<(2-{Inden-1'-yl}-4,6-$^tBu_2$-$C_6H_4O$)$ZrCl_2$>>

2-(Inden-3'-yl)-4,6-di-tert-butylphenol (1.00 g, 3.12 mmol),

$ZrCl_4$ (0.73g, 3.12 mmol), and n-butyllithium (1.57 M in hexane; 3.97 mL, 6.24 mmol) were used to carry out a reaction in accordance with the process disclosed in Organometallics., 2004(23), 540, and a brown suspension was obtained. The suspension was concentrated and dried. The resultant was analyzed with $^1H$ NMR ($CDCl_3$), and the targeted titanium compound was not observed.

[Comparative Reference Example 5]

<<(2-{$Me_4Cp$}-4-Me-$C_6H_4O$) $TiCl_2$>>

To a Schlenk-type reactor thoroughly dried and purged with nitrogen, a rotator was placed, 2-(Tetramethylcyclopentadien-3'-yl)-4-methylphenol (2.61 g, 11.45 mmol) which can be obtained in accordance with a process disclosed in Organometallics., 1997(16), 5958 was charged, ether (100 mL) was added, and the mixture was stirred. The reactor was cooled to -78 °C in a dry ice-acetone bath. n-Butyllithium (1.57 M in hexane; 14.6 mL, 22.9 mmol) was slowly added dropwise, and after the dropwise addition, the temperature was slowly changed back to room temperature, and reacted under stirring at room temperature for 14 hours. This suspension was concentrated and dried, and then dissolved by adding 100 mL of toluene. Again it was cooled to -78 °C. $TiCl_4$ (1.0 M in toluene; 11.5 mL, 11.45 mmol) was slowly added dropwise under stirring, and after completing of the dropwise addition, the temperature was slowly changed back to room temperature and reacted under stirring at room temperature for 66 hours to obtain a brown suspension. The suspension was filtered with G3 glass filter, which is filled with celite, under a nitrogen atmosphere. The resultant black substance was washed with hexane (10 mL), and the wash liquid was mixed with the filtrate. The resultant dark-brown solution thus obtained was concentrated up to 3 mL, hexane (3 mL) was added to form a layer on a top of the solution, and left at room temperature, to precipitate a brown crystal. The crystal was separated by filtration with a glass filter, washed with toluene, and dried under reduced pressure, to obtain 57 mg of the targeted titanium compound as brown powder. After the filtrate was concentrated and dried, added with 2 mL of hexane, and cooled to -10 °C, to further precipitate brown crystal. The supernatant was removed, the crystal was washed with hexane (1 mL), dried under reduced pressure, to further obtain 57 mg of the targeted titanium compound as brown powder (total 123 mg, yield 3%).

The obtained product was analyzed with NMR and FD-MS, and the following results were obtained.

$^1H$ NMR ($CDCl_3$) : d7.15 (dd, J = 8.39, 1.32 Hz, 1H, Ph-H-5), 7.06 (s, 1H, Ph-H-3), 6.53 (d, J = 8.24 Hz, 1H, Ph-H-6), 2.43 (s), 2.01(s, 6H, $C_5Me_4$).

FD-MS: 344 (M+).

[Comparative Reference Example 6]

<<(2-{$Me_4Cp$}-4,6-$^tBu_2$-$C_6H_4O$)$TiCl_2$>>

To a Schlenk-type reactor thoroughly dried and purged with nitrogen, a rotator was placed, 2-(Tetramethylcyclopentadien-3'-yl)-4,6-di-tert-butylphenol (0.70 g, 2.14 mmol) which can be obtained in accordance with a process disclosed in Organometallics., 2004(23), 540 was charged, ether (20 mL) was added, and the mixture was stirred. The reactor was cooled to -78 °C in a dry ice-acetone bath. N-butyllithium (1.57 M in hexane; 2.73 mL, 4.29 mmol) was slowly added dropwise, and after the dropwise addition, the temperature was slowly changed back to room temperature, and reacted under stirring at room temperature for 15 hours. Again, the reactor was cooled to -78 °C, and $TiCl_4$ (1.0M in toluene; 2.14 mL, 2.14 mmol) was slowly added dropwise under stirring. Thereafter, the temperature was slowly changed back to room temperature, and reacted under stirring at room temperature for 15 hours, to obtain a brown suspension. The suspension was concentrated and dried. The resultant was analyzed with $^1H$ NMR ($CDCl_3$), and only 3% of the targeted titanium compound (in comparison with the analysis data disclosed in Organometallics. ,2004(23), 540) was observed.

EXAMPLE 1

<Polymerization of Ethylene using (2-{Inden-1'-yl}-4,6-$^tBu_2$-$C_6H_4O$)$TiCl_2$>

To a glass reactor having an internal volume of 500 mL thoroughly purged with nitrogen, 250 mL of a toluene solution was charged, and a liquid phase and a gas phase were saturated with ethylene gas (= 100 liter/hr) at 25 °C. Thereafter, 0.25 mmol of triisobutylaluminum and 1.0 mL of a toluene solution (5 mmol/L) of (2-{Inden-1'-yl}-4,6-$^tBu_2$-$C_6H_4O$)$TiCl_2$ synthesized in Synthetic Example 1 were added, subsequently, triphenylcarbeniumtetrakis(pentafluorophenyl)borate was added in an amount of 1.2 equivalent to Ti, to initiate polymerization. After carrying out the reaction under ethylene (= 100 liter/hr) atmosphere of normal pressure for 10 minutes at 25 °C, small amount of isobutanol was added to stop the polymerization. After completion of the polymerization, the reaction product was poured into a large amount of methanol to precipitate all the polymers, and after addition of hydrochloric acid, filtered with a glass filter. The polymer was well washed with methanol and dried under reduced pressure at 80 °C for 10 hours to obtain polyethylene. The Tm of the obtained product was 112.9 °C.

EXAMPLE 2

<Polymerization of Ethylene using (2-{Inden-1'-yl}-4,6-$^tBu_2$-$C_6H_4O$)$TiCl_2$>

The polymerization and the post-treatment were carried out in the same manner as in EXAMPLE 1 to obtain polyethylene, except that 0.05 mmol of triisobutylaluminum and 0.2 mL of a toluene solution (5 mmol/L) of (2-{Inden-1'-yl}-4,6-$^tBu_2$-$C_6H_4O$)$TiCl_2$ synthesized in Synthetic Example 1 were used, triphenylcarbeniumtetrakis(pentafluorophenyl) borate was added in an amount of 1.2 equivalent to Ti and the reaction time was changed to 15 minutes. The Tm of the obtained polymer was 113.3 °C.

EXAMPLE 3

<Polymerization of Ethylene using (2-{Inden-2'-yl}-4,6-$^tBu_2$-$C_6H_4O$)$TiCl_2$>

The polymerization and the post-treatment were carried out in the same manner as in EXAMPLE 1 to obtain polyethylene, except that 0.05 mmol of triisobutylaluminum and 0.2 mL of a toluene solution (5 mmol/L) of (2- {Inden-2'-yl} -4, 6-$^tBu_2$-$C_6H_4O$) $TiCl_2$ synthesized in Synthetic Example 3 instead of (2-{Inden-1'-yl}-4,6-$^tBu_2$-$C_6H_4O$)$TiCl_2$ were used, and triphenylcarbeniumtetrakis(pentafluorophenyl)borate was added in an amount of 1.2 equivalent to Ti. The Tm of the obtained polymer was 121.8 °C.

As a result of $^{13}$C-NMR (ODCB-$d_{4/}C_6D_6$=4/1 v/v, 120 °C) measurement of the polymer, there is observed a signal derived from ethyl branch at 10.9 ppm, 26.5 ppm and 39.5 ppm, a signal derived from propyl branch at 14.3 ppm, 20.1 ppm, 36.7 ppm and 36.9 ppm, a signal derived from terminal ethyl vinylidene at 12.4 ppm, 28.1 ppm and 36.3 ppm, and a signal derived from a methyl group of ethyl branch which bonds to quaternary carbon at 7.5 ppm. A $^{13}$C-NMR spectrum of the polymer is shown in Fig. 1.

EXAMPLE 4

<Polymerization of Ethylene using (2-{Inden-2'-yl}-4,6-$^tBu_2$-$C_6H_4O$)$TiCl_2$>

The polymerization and the post-treatment were carried out in the same manner as in EXAMPLE 3 to obtain polyethylene, except that the reaction temperature was changed to 80 °C. The Tm of the obtained polymer was 123.3 °C.

As a result of $^{13}$C-NMR (ODCB-$d_{4/}C_6D_6$=4/1 v/v, 120 °C) measurement of the polymer, there is observed a signal derived from ethyl branch at 10.9 ppm, 26.5 ppm and 39.5 ppm, a signal derived from propyl branch at 14.3 ppm, 20.1 ppm, 36.7 ppm and 36.9 ppm, a signal derived from terminal ethyl vinylidene at 12.4 ppm, 28.1 ppm and 36.3 ppm, and a signal derived from a methyl group of ethyl branch which bonds to quaternary carbon at 7.5 ppm. A $^{13}$C-NMR spectrum of the polymer is shown in Fig. 2.

EXAMPLE 5

<Polymerization of Ethylene using (2-{2-Me-Inden-1'-yl}-4,6-$^tBu_2$-$C_6H_4O$)$TiCl_2$>

The polymerization and the post-treatment were carried out in the same manner as in EXAMPLE 1 to obtain polyethylene, except that (2-{2-Me-Inden-1'-yl}-4,6-$^tBu_2$-$C_6H_4O$)$TiCl_2$ synthesized in Synthetic Example 4 was used instead of 2-{Inden-1'-yl}-4, 6-$^tBu_2$-$C_6H_4O$)$TiCl_2$, and the reaction time was changed to 5 minutes. The Tm of the obtained polymer was 124.1 °C.

EXAMPLE 6

<Polymerization of Ethylene using (2-{2-Me-Inden-1'-yl}-4,6-$^tBu_2$-$C_6H_4O$)$TiCl_2$>

The polymerization and the post-treatment were carried out in the same manner as in EXAMPLE 5 to obtain polyethylene, except that the reaction time was changed to 80 °C. The Tm of the obtained polymer was 125.6 °C.

EXAMPLE 7

<Polymerization of Ethylene using (2-{2-Me-4-Ph-Inden-1'-yl}-4,6-$^tBu_2$-$C_6H_4O$)$TiCl_2$>

The polymerization and the post-treatment were carried out in the same manner as in EXAMPLE 1 to obtain

polyethylene, except that (2-{2-Me-4-Ph-Inden-1'-yl}-4,6-$^tBu_2$-$C_6H_4O$)$TiCl_2$ synthesized in Synthetic Example 5 was used instead of 2-{Inden-1'-yl}-4,6-$^tBu_2$-$C_6H_4O$)$TiCl_2$, and the reaction time was changed to 5 minutes. The Tm of the obtained polymer was 126.6 °C.

EXAMPLE 8

<Polymerization of Ethylene using (2-{2-Me-4-Ph-Inden-1'-yl}-4,6-$^tBu_2$-$C_6H_4O$)$TiCl_2$>

The polymerization and the post-treatment were carried out in the same manner as in EXAMPLE 7 to obtain polyethylene, except that 0.05 mmol of triisobutylaluminum and 0.2 mlL of a toluene solution (5 mmol/L) of (2-{2-Me-4-Ph-Inden-1'-yl}-4,6-$^tBu_2$-$C_6H_4O$)$TiCl_2$ synthesized in Synthetic Example 5 were used, triphenylcarbeniumtetrakis(pentafluorophenyl)borate was added in an amount of 1.2 equivalent to Ti, and the reaction time was changed to 10 minutes. The Tm of the obtained polymer was 124.9 °C.

As a result of $^{13}$C-NMR (ODCB-$d_4$/$C_6D_6$=4/1 v/v, 120 °C) measurement of the polymer, there is observed a signal derived from ethyl branch at 10.9 ppm, 26.5 ppm and 39.5 ppm, a signal derived from propyl branch at 14.3 ppm, 20.1 ppm, 36.7 ppm and 36.9 ppm, a signal derived from terminal ethyl vinylidene at 12.4 ppm, 28.1 ppm and 36.3 ppm, and a signal derived from a methyl group of ethyl branch which bonds to quaternary carbon, at 7.5 ppm. A $^{13}$C-NMR spectrum of the polymer is shown in Fig. 3.

EXAMPLE 9

<Polymerization of Ethylene using (2-{2-Me-4-Ph-Inden-1'-yl}-4,6-$^tBu_2$-$C_6H_4O$)$TiCl_2$>

The polymerization and the post-treatment were carried out in the same manner as in EXAMPLE 8 to obtain polyethylene, except that the reaction temperature and the reaction time were changed to 80 °C and 30 minutes, respectively. The Tm of the obtained polymer was 125.9 °C.

As a result of $^{13}$C-NMR (ODCB-$d_4$/$C_6D_6$=4/l v/v, 120 °C) measurement of the polymer, there is observed a signal derived from ethyl branch at 10.9 ppm, 26.5 ppm and 39.5 ppm, a signal derived from propyl branch at 14.3 ppm, 20.1 ppm, 36.7 ppm and 37.7 ppm, a signal derived from terminal ethyl vinylidene at 12.4 ppm, 28.1 ppm and 36.3 ppm, and a signal derived from a methyl group of ethyl branch which bonds to quaternary carbon at 7.5 ppm. A $^{13}$C-NMR spectrum of the polymer is shown in Fig. 4.

EXAMPLE 10

To a reactor [a parallel-pressure catalytic reaction apparatus (Trade Name: Endeavor) manufactured by Argonaut, equipped with 8-channel parallel reactor system] having an internal volume of 15 mL thoroughly purged with nitrogen, toluene and 0.005 mmol of triisobutylaluminum were charged, and a liquid phase and a gas phase were saturated with ethylene 8 kg/cm$^2$·G (Hereinafter, there may be a case where the unit kg/cm$^2$·G is abbreviated as KG) at 60 °C.

Thereafter, 0.25 mL of a toluene solution (0.8 mmol/L) of (2-{Inden-2'-yl}-4,6-$^tBu_2$-$C_6H_4O$)$TiCl_2$ synthesized in Synthetic Example 3 was added, and subsequently, a toluene solution (0.4 mmol/L) of triphenylcarbeniumtetrakis(pentafluorophenyl)borate was added in an amount of 1.2 equivalent to Ti, to initiate polymerization. The toluene was fed to give a final volume of 5 mL in total. An ethylene gas was continuously fed to maintain the total pressure of 8 KG. After carrying out the reaction at 60 °C for 20 minutes, small amount of methanol was added to stop the polymerization. After completion of the polymerization, the post-treatment was carried out in the same manner as in EXAMPLE 1, and the resultant was dried under reduced pressure at 80 °C for 10 hours to obtain polyethylene.

As a result of $^1$H-NMR (ODCB-$d_4$) measurement of the polymer, there is observed a signal (A) derived from terminal vinyl at 5.7 to 5.6 ppm and 4.9 to 4.7 ppm, a signal (B) derived from terminal vinylidene at 4.7 to 4.6 ppm, a signal (C) derived from disubstituted internal olefin at 5.4 to 5.2 ppm and a signal (D) derived from tri-substituted internal olefin at 5.2 to 5.0 ppm.

A $^1$H-NMR spectrum of the polymer is shown in Fig. 5.

As a result of $^{13}$C-NMR (TCE-$d_2$) measurement of the polymer, there is observed a signal derived from ethyl branch at 10.9 ppm, 26.5 ppm and 39.5 ppm, a signal derived from propyl branch at 14.3 ppm, 20.1 ppm, 36.7 ppm and 36.9 ppm, a signal derived from terminal ethyl vinylidene at 12.4 ppm, 28.1 ppm and 36.3 ppm and a signal derived from a methyl group of ethyl branch which bonds to quaternary carbon at 7.5 ppm. A $^{13}$C-NMR spectrum of the polymer is shown in Fig. 6.

EXAMPLE 11

The polymerization and the post-treatment were carried out in the same manner as in EXAMPLE 10 to obtain polyethylene, except that the triisobutylaluminum quantity and the polymerization temperature were changed to 0.03 mmol and 80 °C, respectively.

As a result of $^{1}H$-NMR (ODCB-$d_4$) measurement of the polymer, there is observed a signal (A) derived from terminal vinyl at 5.7 to 5.6 ppm and 4.9 to 4.7 ppm, a signal (B) derived from terminal vinylidene at 4.7 to 4.6 ppm, a signal (C) derived from disubstituted internal olefin at 5.4 to 5.2 ppm, and a signal (D) derived from tri-substituted internal olefin at 5.2 to 5.0 ppm.

A $^{1}H$-NMR spectrum of the polymer is shown in Fig. 7.

As a result of $^{13}C$-NMR (TCE-$d_2$) measurement of the polymer, there is observed a signal derived from ethyl branch at 10.9 ppm, 26.5 ppm and 39.5 ppm, a signal derived from propyl branch at 14.3 ppm, 20.1 ppm, 36.7 ppm and 36.9 ppm, a signal derived from terminal ethyl vinylidene at 12.4 ppm, 28.1 ppm and 36.3 ppm and a signal derived from a methyl group of methyl branch which bonds to quaternary carbon at 7.5 ppm. A $^{13}C$-NMR spectrum of the polymer is shown in Fig. 8.

EXAMPLE 12

<Copolymerization of Ethylene/Propylene using (2-{Inden-1'-yl}-4,6-$^{t}Bu_2$-$C_6H_4O$)$TiCl_2$>

To a glass reactor having an internal volume of 500 mL thoroughly purged with nitrogen, 250 mL of a hexane solution was charged, and a liquid phase and a gas phase were saturated with ethylene/propylene gas (= 60/40 liter/hr) at 25 °C.

Thereafter, 0.05 mmol of triisobutylaluminum and 0.2 mL of a toluene solution (5 mmol/L) of (2-{Inden-1'-yl}-4, 6-$^{t}Bu_2$-$C_6H_4O$) $TiCl_2$ synthesized in Synthetic Example 1 were added, subsequently, triphenylcarbeniumtetrakis(pentafluorophenyl)borate was added in an amount of 1.2 equivalent to Ti, to initiate polymerization. After carrying out the reaction under ethylene/propylene mixed gas (= 60/40 liter/hr) atmosphere of normal pressure for 15 minutes at 25 °C, small amount of isobutanol was added to stop the polymerization. After completion of the polymerization, the reaction product was extracted with hexane, washed with diluted hydrochloric acid, concentrated, and dried under reduced pressure at 80 °C for 10 hours, to obtain ethylene/propylene copolymer.

EXAMPLE 13

<Copolymerization of Ethylene/Propylene using (2-{Inden-2'-yl}-4,6-$^{t}Bu_2$-$C_6H_4O$)$TiCl_2$>

The polymerization and the post-treatment were carried out in the same manner as in EXAMPLE 12 to obtain ethylene/propylene copolymer, except that (2-{Inden-2'-yl}-4,6-$^{t}Bu_2$-$C_6H_4O$)$TiCl_2$ synthesized in Synthetic Example 3 was used instead of 2-{Inden-1'-yl}-4,6-$^{t}Bu_2$-$C_6H_4O$)$TiCl_2$, and the reaction time was changed to 10 minutes.

EXAMPLE 14

<Copolymerization of Ethylene/Propylene using (2-{2-Me-Inden-1'-yl}-4,6-$^{t}Bu_2$-$C_6H_4O$)$TiCl_2$>

The polymerization and the post-treatment were carried out in the same manner as in EXAMPLE 12 to obtain ethylene/propylene copolymer, except that 0.05 mmol of triisobutylaluminum and 0.2 mL of a toluene solution (5 mmol/L) of (2-{2-Me-Inden-1'-yl}-4,6-$^{t}Bu_2$-$C_6H_4O$)$TiCl_2$ synthesized in Synthetic Example 4 instead of (2-{Inden-1'-yl}-4,6-$^{t}Bu_2$-$C_6H_4O$)$TiCl_2$ were used, triphenylcarbeniumtetrakis(pentafluorophenyl)borate was added in an amount of 1.2 equivalent to Ti, and the reaction time was changed to 5 minutes.

EXAMPLE 15

<Copolymerization of Ethylene/Propylene using (2-{2-Me-4-Ph-Inden-1'-yl}-4,6-$^{t}Bu_2$-$C_6H_4O$)$TiCl_2$>

The polymerization and the post-treatment were carried out in the same manner as in EXAMPLE 12 to obtain ethylene/propylene copolymer, except that (2-{2-Me-4-Ph-Inden-1'-yl}-4,6-$^{t}Bu_2$-$C_6H_4O$)$TiCl_2$ synthesized in Synthetic Example 5 was used instead of 2-{Inden-1'-yl}-4,6-$^{t}Bu_2$-$C_6H_4O$)$TiCl_2$, and the reaction time was changed to 10 minutes.

EXAMPLE 16

<Copolymerization of Ethylene/1-butene using 2-{Inden-2'-yl }-4,6-$^tBu_2$-$C_6H_4O)TiCl_2$>

The polymerization and the post-treatment were carried out in the same manner as in EXAMPLE 13 to obtain ethylene/1-butene copolymer, except that an ethylene/1-butene mixed gas (= 95/5 liter/hr) was used instead of the ethylene/propylene mixed gas (= 60/40 liter/hr).

EXAMPLE 17

<Copolymerization of Ethylene/1-butene using (2-{2-Me-4-Ph-Inden-1'-yl}-4,6-$^tBu_2$-$C_6H_4O)TiCl_2$>

The polymerization and the post-treatment were carried out in the same manner as in EXAMPLE 15 to obtain ethylene/1-butene copolymer, except that an ethylene/1-butene mixed gas (= 60/40 liter/hr) was used instead of the ethylene/propylene mixed gas (= 60/40 liter/hr).

EXAMPLE 18

<Copolymerization of Ethylene/1-butene using (2-{2-Me-4-Ph-Inden-1'-yl}-4,6-$^tBu_2$-$C_6H_4O)TiCl_2$>

The polymerization and the post-treatment were carried out in the same manner as in EXAMPLE 17 to obtain ethylene/1-butene copolymer, except that an ethylene/1-butene mixed gas (= 80/20 liter/hr) was used instead of the ethylene/1-butene mixed gas (= 60/40 liter/hr).

EXAMPLE 19

<Copolymerization of Etylene/1-butene using (2-{2-Me-4-Ph-Inden-1'-yl}-4,6-$^tBu_2$-$C_6H_4O)TiCl_2$>

The polymerization and the post-treatment were carried out in the same manner as in EXAMPLE 18 to obtain ethylene/1-butene copolymer, except that an ethylene/1-butene mixed gas (= 95/5 liter/hr) was used instead of the ethylene/1-butene mixed gas (= 80/20 liter/hr).

EXAMPLE 20

<Copolymerization of Ethylene/Isobutene using (2-{Inden-2'-yl}-4,6-$^tBu_2$-$C_6H_4O)TiCl_2$>

To a reactor [a parallel-pressure catalytic reaction apparatus (Trade Name: Endeavor) manufactured by Argonaut, equipped with 8-channel parallel reactor system] having an internal volume of 15 mL thoroughly purged with nitrogen, toluene and 0.02 mmol of triisobutylaluminum were charged, and a liquid phase and a gas phase were saturated with isobutene 1 kg/cm$^2$·G at 30 °C. Subsequently, pressure of ethylene was increased and the liquid phase and the gas phase were saturated to give a total pressure of 2 KG.

Thereafter, 0.25 mL of a toluene solution (0.8 mmol/L) of (2-{Inden-2'-yl}-4,6-$^tBu_2$-$C_6H_4O)TiCl_2$ synthesized in Synthetic Example 3 was added, and subsequently, a toluene solution (0.4 mmol/L) of triphenylcarbeniumtetrakis(pentafluorophenyl)borate was added in an amount of 1.2 equivalent to Ti, to initiate polymerization. The toluene was fed to give a final volume of 5 mL in total. The ethylene gas was continuously fed to maintain the total pressure of 2 KG. After carrying out the reaction at 30 °C for 20 minutes, small amount of methanol was added to stop the polymerization. After completion of the polymerization, the reaction solution was concentrated and dried, and dried under reduced pressure at 80 °C for 10 hours to obtain ethylene/isobutene copolymer.

A $^{13}$C-NMR (TCE-$d_2$) spectrum of the polymer is shown in Fig. 9.

EXAMPLE 21

<Copolymerization of Ethylene/Isobutene using (2-{Inden-2'-yl}-4,6-$^tBu_2$-$C_6H_4O)TiCl_2$>

The polymerization and the post-treatment were carried out in the same manner as in EXAMPLE 20 to obtain ethylene/isobutene copolymer, except that the feed pressure of ethylene gas was changed to give a total pressure of 9 KG instead of 2 KG.

EXAMPLE 22

<Copolymerization of Ethylene/Isobutene using (2-{Inden-2'-yl}-4,6-$^{t}Bu_2$-$C_6H_9O$)$TiCl_2$>

The polymerization and the post-treatment were carried out in the same manner as in EXAMPLE 20 to obtain ethylene/isobutene copolymer, except that 0.25 mL of a toluene solution (0.4 mmol/L) of (2-{Inden-2'-yl}-4,6-$^{t}Bu_2$-$C_6H_4O$)$TiCl_2$ was used, a toluene solution (0.4 mmol/L) of triphenylcarbeniumtetrakis(pentafluorophenyl)borate was changed to 1.0 equivalent to Ti and the polymerization temperature was changed to 40 °C.

EXAMPLE 23

<Copolymerization of Ethylene/Isobutene using (2-{Inden-2'-yl}-4,6-$^{t}Bu_2$-$C_6H_4O$)$TiCl_2$>

The polymerization and the post-treatment were carried out in the same manner as in EXAMPLE 20 to obtain ethylene/isobutene copolymer, except that 0.25 mL of a toluene solution (0.4 mmol/L) of (2-(Inden-2'-yl)-4, 6-$^{t}Bu_2$-$C_6H_4O$)$TiCl_2$ was used, a toluene solution (0.4 mmol/L) of triphenylcarbeniumtetrakis(pentafluorophenyl)borate was changed to 1.0 equivalent to Ti, the polymerization temperature was changed to 40 °C and the feed pressure of ethylene gas was changed to give a total pressure of 11 KG instead of 2 KG.

EXAMPLE 24

<Copolymerization of Ethylene/Isobutene using (2-{$Me_4Cp$}-4,6-$^{t}Bu_2$-$C_6H_4O$)$TiCl_2$>

The polymerization and the post-treatment were carried out in the same manner as in EXAMPLE 20 to obtain ethylene/isobutene copolymer, except that 0.25 mL of a toluene solution (0.4 mmol/L) of (2-{$Me_4Cp$}-4,6-$^{t}Bu_2$-$C_6H_4O$)$TiCl_2$ synthesized in accordance with a process disclosed in Organometallics., 2004(23), 540 was used, a toluene solution (0.4 mmol/L) of triphenylcarbeniumtetrakis(pentafluorophenyl)borate was changed to 1.0 equivalent to Ti and the polymerization temperature was changed to 40 °C.

EXAMPLE 25

<Copolymerization of Ethylene/Isobutene using (2-{$Me_4Cp$}-4,6-$^{t}Bu_2$-$C_6H_4O$)$TiCl_2$>

The polymerization and the post-treatment were carried out in the same manner as in EXAMPLE 20 to obtain ethylene/isobutene copolymer, except that 0.25 mL of a toluene solution (0.4 mmol/L) of (2-{$Me_4Cp$}-4,6-$^{t}Bu_2$-$C_6H_9O$)$TiCl_2$ synthesized in accordance with a process disclosed in Organometallics., 2004(23), 540 was used, a toluene solution (0.4 mmol/L) of triphenylcarbeniumtetrakis(pentafluorophenyl)borate was changed to 1.0 equivalent to Ti, the polymerization temperature was changed to 40 °C and the feed pressure of ethylene gas was changed to give a total pressure of 11 KG instead of 2 KG.

EXAMPLE 26

<Copolymerization of Ethylene/1,3-butadiene using (2-{Inden-2'-yl}-4,6-$^{t}Bu_2$-$C_6H_4O$)$TiCl_2$>

To a reactor [a parallel-pressure catalytic reaction apparatus (Trade Name: Endeavor) manufactured by Argonaut, equipped with 8-channel parallel reactor system] having an internal volume of 15 mL thoroughly purged with nitrogen, toluene and 0.2 mmol of triisobutylaluminum were charged, and a liquid phase and a gas phase were saturated with 1, 3-butadiene 1 $kg/cm^2 \cdot G$ at 30 °C. Subsequently, pressure of ethylene was increased and the liquid phase and the gas phase were saturated to give a total pressure of 2 KG.

Thereafter, 0.25 mL of a toluene solution (8 mmol/L) of (2-{Inden-2'-yl}-4,6-$^{t}Bu_2$-$C_6H_4O$)$TiCl_2$ synthesized in Synthetic Example 3 was added, and subsequently, a toluene solution (0.4 mmol/L) of triphenylcarbeniumtetrakis(pentafluorophenyl)borate was added in an amount of 1.0 equivalent to Ti, to initiate polymerization. The toluene was fed to give a final volume of 5 mL in total. The ethylene gas was continuously fed to maintain the total pressure of 2 KG. After carrying out the reaction at 30 °C for 20 minutes, small amount of methanol was added to stop the polymerization. After completion of the polymerization, the post-treatment was carried out in the same manner as in EXAMPLE 12, and the resultant was dried under reduced pressure at 80 °C for 10 hours to obtain ethylene · 1, 3-butadiene copolymer.

EXAMPLE 27

<Copolymerization of Ethylene/Norbornene using (2-{2-Me-4-Ph-Inden-1'-yl}-4,6-$^tBu_2$-$C_6H_4O$)$TiCl_2$>

To a glass reactor having an internal volume of 500 mL thoroughly purged with nitrogen, 250 mL of a toluene solution and 1 g of norbornene were charged, and a liquid phase and a gas phase were saturated with ethylene gas (= 50 liter/hr). Thereafter, 0.05 mmol of triisobutylaluminum and 0.2 mL of a toluene solution (5 mmol/L) of (2-{2-Me-4-Ph-Inden-1'-yl}-4,6-$^tBu_2$-$C_6H_4O$)$TiCl_2$ synthesized in Synthetic Example 5 were added, and subsequently, triphenylcarbeniumtetrakis(pentafluorophenyl)borate was added in an amount of 1.2 equivalent to Ti, to initiate polymerization. After carrying out the reaction under ethylene gas (= 50 liter/hr) atmosphere of normal pressure for 10 minutes at 25 °C, small amount of methanol was added to stop the polymerization. After completion of the polymerization, the post-treatment was carried out in the same manner as in EXAMPLE 10, and the resultant was dried under reduced pressure at 80 °C for 10 hours to obtain ethylene/ norbornene copolymer. The Tm of the obtained polymer was 81 °C.

EXAMPLE 28

<Copolymerization of Ethylene/Oligoethylene containing a terminal vinyl group using (2-{Inden-2'-yl}-4,6-$^tBu_2$-$C_6H_4O$) $TiCl_2$ >

To a glass reactor having an internal volume of 500 mL thoroughly purged with nitrogen, oligoethylene containing a terminal vinyl group [(3.00g; Mw/Mn (MWD) relative to polyethylene standards = 1547/668 (2.3), Mw/Mn (MWD) relative to polystyrene standards = 3790/1500 (2.5), Tm = 119.6 °C) and 250 mL of a toluene solution were charged, and the mixture was dissolved by heating at 90 °C under stirring. Then, a liquid phase and a gas phase were saturated with ethylene gas (= 100 liter/hr).

Thereafter, 0.05 mmol of triisobutylaluminum and 0.2 mL of a toluene solution (5 mmol/L) of (2-{Inden-2'-yl}-4,6-$^tBu_2$-$C_6H_4O$)$TiCl_2$ synthesized in Synthetic Example 3 were added, and subsequently, triphenylcarbeniumtetrakis (pentafluorophenyl)borate was added in an amount of 1.2 equivalent to Ti, to initiate polymerization. After carrying out the reaction under ethylene gas (= 100 liter/hr) atmosphere of normal pressure for 10 minutes at 90 °C, small amount of isobutanol was added to stop the polymerization. After completion of the polymerization, the reaction product was concentrated and dried, and dried under reduced pressure at 80 °C for 10 hours to obtain ethylene/oligoethylene containing a terminal vinyl group copolymer. The Tm of the obtained polymer was 116.5 °C.

As a result of $^1H$-NMR (ODCB-$d_4$) measurement of the polymer, there is observed a signal (A) derived from terminal vinyl at 5.7 to 5.6 ppm and 4.9 to 4.7 ppm, a signal (B) derived from terminal vinylidene at 4.7 to 4.6 ppm, a signal (C) derived from disubstituted internal olefin at 5.4 to 5.2 ppm, and a signal (D) derived from tri-substituted internal olefin at 5.2 to 5.0 ppm.

A $^1H$-NMR spectrum of the polymer is shown in Fig. 10.

As a result of $^{13}C$-NMR (TCE-$d_2$) measurement of the polymer, there is observed a signal derived from ethyl branch at 10.9 ppm, 26.5 ppm and 39.5 ppm, a signal derived from butyl branch at 23.3 ppm and 33.8 ppm, a signal derived from amyl branch at 32.5 ppm and a signal derived from branches of C6 or more at 22.6 ppm, 31.9 ppm and 33.8 ppm. A $^{13}C$-NMR spectrum of the polymer is shown in Fig. 11.

EXAMPLE 29

<Polymerization of propylene using 2-{Inden-2'-yl}-4,6-$^tBu_2$-$C_6H_4O$)$TiCl_2$>

To a glass reactor having an internal volume of 500 mL thoroughly purged with nitrogen, 250 mL of a toluene solution was charged, and a liquid phase and a gas phase were saturated with propylene gas (= 100 liter/hr) of normal pressure at 25 °C. Thereafter, 0.05 mmol of triisobutylaluminum and 0.2 mL of a toluene solution (5 mmol/L) of (2-{Inden-2'-yl}-4,6-$^tBu_2$-$C_6H_4O$)$TiCl_2$ synthesized in Synthetic Example 3 were added, and subsequently, triphenylcarbeniumtetrakis(pentafluorophenyl)borate was added in an amount of 1.2 equivalent to Ti, to initiate polymerization. After carrying out the reaction under propylene gas (= 100 liter/hr) atmosphere of normal pressure for 10 minutes at 25 °C, small amount of isobutanol was added to stop the polymerization. After completion of the polymerization, the reaction product was extracted with hexane, washed with diluted hydrochloric acid, concentrated, and dried under reduced pressure at 80 °C for 10 hours, to obtain polypropylene.

As a result of $^1H$-NMR (ODCB-$d_4$) measurement of the polymer, there is observed a signal (B) derived from terminal vinylidene at 4.7 to 4.6 ppm, a signal (C) derived from disubstituted internal olefin at 5.4 to 5.2 ppm, and a signal (D) derived from tri-substituted internal olefin at 5.2 to 5.0 ppm.

A $^1H$-NMR spectrum of the polymer is shown in Fig. 12.

The amount of regioirregular linkage in the polymer quantitated with $^{13}C$-NMR of polymer was 31 mol%. A $^{13}C$-NMR spectrum of the polymer is shown in Fig. 13.

EXAMPLE 30

<Polymerization of Propylene using (2-{2-Me-Inden-1'-yl}-4,6-$^tBu_2$-$C_6H_4O$)$TiCl_2$>

The polymerization and the post-treatment were carried out in the same manner as in EXAMPLE 29 to obtain polypropylene, except that 0.25 mmol of triisobutylaluminum and 1.0 mL of a toluene solution (5 mmol/L) of (2-{2-Me-Inden-1'-yl}-4,6-$^tBu_2$-$C_6H_4O$)$TiCl_2$ synthesized in Synthetic Example 4 were used.

As a result of $^1H$-NMR (ODCB-$d_4$) measurement of the polymer, there is observed a signal (B) derived from terminal vinylidene at 4.7 to 4.6 ppm, a signal (C) derived from disubstituted internal olefin at 5.4 to 5.2 ppm and a signal (D) derived from tri-substituted internal olefin at 5.2 to 5.0 ppm.

A $^1H$-NMR spectrum of the polymer is shown in Fig. 14.

The amount of regioirregular linkage in the polymer quantitated with $^{13}C$-NMR of polymer was 31 mol%. A $^{13}C$-NMR spectrum of the polymer is shown in Fig. 15.

EXAMPLE 31

<Polymerization of propylene using (2-{2-Me-4-Ph-Inden-1'-yl}-4,6-$^tBu_2$-$C_6H_4O$)$TiCl_2$>

The polymerization was carried out in the same manner as in EXAMPLE 29, and then the post-treatment was carried out also in the same manner as in EXAMPLE 29, to obtain polypropylene, except that 0.2 mL of a toluene solution (5 mmol/L) of (2-{2-Me-4-Ph-Inden-1'-yl}-4,6-$^tBu_2$-$C_6H_4O$)$TiCl_2$ synthesized in Synthetic Example 5 was used.

As a result of $^1H$-NMR (ODCB-$d_4$) measurement of the polymer, there is observed a signal (B) derived from terminal vinylidene at 4.7 to 4.6 ppm, a signal (C) derived from disubstituted internal olefin at 5.4 to 5.2 ppm and a signal (D) derived from tri-substituted internal olefin at 5.2 to 5.0 ppm.

A $^1H$-NMR spectrum of the polymer is shown in Fig. 16.

The amount of regioirregular linkage in the polymer quantitated with $^{13}C$-NMR of polymer was 36 mol%. A $^{13}C$-NMR spectrum of the polymer is shown in Fig. 17.

EXAMPLE 32

<Polymerization of Propylene using (2-{2-iPr-4-(9-Phenanthryl)-5,6-Benzoinden-1'-yl}-4,6-$^tBu_2$-$C_6H_4O$) $TiCl_2$>

The polymerization and the post-treatment were carried out in the same manner as in EXAMPLE 29 to obtain polypropylene, except that 0.25 mmol of triisobutylaluminum and 1.0 mL of a toluene solution (5 mmol/L) of (2-{2-iPr-4-(9-Phenanthryl)-5,6-Benzoinden-1'-yl}-4,6-$^tBu_2$-$C_6H_4O$)$TiCl_2$ synthesized in Synthetic Example 7 were used.

As a result of $^1H$-NMR (ODCB-$d_4$) measurement of the polymer, there is observed a signal (B) derived from terminal vinylidene at 4.7 to 4.6 ppm, a signal (C) derived from disubstituted internal olefin at 5.4 to 5.2 ppm, and a signal (D) derived from tri-substituted internal olefin at 5.2 to 5.0 ppm.

A $^1H$-NMR spectrum of the polymer is shown in Fig. 18.

The amount of regioirregular linkage in the polymer quantitated with $^{13}C$-NMR of polymer was 43 mol%. A $^{13}C$-NMR spectrum of the polymer is shown in Fig. 19.

EXAMPLE 33

<Polymerization of butene using 2-Inden-2'-yl)-4,6-$^tBu_2$-$C_6H_4O$)$TiCl_2$>

To a glass reactor having an internal volume of 500 mL thoroughly purged with nitrogen, 250 mL of a toluene solution was charged, and a liquid phase and a gas phase were saturated with 1-butene gas (= 90 liter/hr) of normal pressure at 25 °C. Thereafter, 0.05 mmol of triisobutylaluminum and 0.2 mL of a toluene solution (5 mmol/L) of (2-{Inden-2'-yl}-4,6-$^tBu_2$-$C_6H_4O$)$TiCl_2$ synthesized in Synthetic Example 3 were added, and subsequently, triphenylcarbeniumtetrakis(pentafluorophenyl)borate was added in an amount of 1.2 equivalent to Ti, to initiate polymerization. After carrying out the reaction under 1-butene gas (= 90 liter/hr) atmosphere of normal pressure for 10 minutes at 25 °C, small amount of isobutanol was added to stop the polymerization. After completion of the polymerization, the reaction product was extracted with hexane, washed with diluted hydrochloric acid, concentrated and dried under reduced pressure at 80 °C for 10 hours, to obtain polybutene.

EXAMPLE 34

<Polymerization of butene using (2-{2-Me-4-Ph-Inden-1'-yl}-4,6-$^tBu_2$-$C_6H_4O$)$TiCl_2$>

The polymerization and the post-treatment were carried out in the same manner as in EXAMPLE 33 to obtain polybutene, except that 0.2 mL of a toluene solution (5 mmol/L) of (2-{2-Me-4-Ph-Inden-1'-yl}-4,6-$^tBu_2$-$C_6H_4O$)$TiCl_2$ synthesized in Synthetic Example 5 was used instead of the toluene solution (5 mmol/L) of (2-{Inden-2'-yl}-4,6-$^tBu_2$-$C_6H_4O$)$TiCl_2$. As a result of $^{13}C$-NMR measurement of the polymer, NMR chart showing a same signal pattern as the regioirregular polybutene disclosed in Polymer, 1992(33), 650 was obtained, and thus confirmed that it has a remarkable regioirregular structure. Further, there is observed a terminal group signal derived from a head to head bonding at 16.2 ppm and 17.8 ppm, and a signal derived from an internal olefin 122 to 142 ppm. $^{13}C$-NMR spectrums of the polymer are shown in Figs. 20 and 21.

EXAMPLE 35

<Polymerization of 1-decene using (2-{2-Me-4-Ph-Inden-1'-yl}-4,6-$^tBu_2$-$C_6H_4O$)$TiCl_2$>

To a glass reactor having an internal volume of 1000 mL thoroughly purged with nitrogen, 500 mL of dried 1-decene was charged, stirred under flow of nitrogen, and maintained at 50 °C for 30 minutes. Thereafter, 0.125 mmol of triisobutylaluminum and 0.5 mL of a toluene solution (5 mmol/L) of (2-{2-Me-4-Ph-Inden-1'-yl}-4,6-$^tBu_2$-$C_6H_4O$)$TiCl_2$ synthesized in Synthetic Example 5 were added, and subsequently, triphenylcarbeniumtetrakis(pentafluorophenyl)borate was added in an amount of 1.2 equivalent to Ti, to initiate polymerization. After being stirred under flow of nitrogen and being left for the reaction for 30 minutes at 50 °C, small amount of isobutanol was added to stop the polymerization. After completion of the polymerization, the post-treatment was carried out in the same manner as in EXAMPLE 12, and the resultant was dried under reduced pressure at 80 °C for 10 hours, to obtain polydecene.

As a result of $^1H$-NMR (ODCB-$d_4$) measurement of the polymer, there is observed a signal (B) derived from terminal vinylidene at 4.7 to 4.6 ppm, a signal (C) derived from disubstituted internal olefin at 5.4 to 5.2 ppm and a signal (D) derived from tri-substituted internal olefin at 5.2 to 5.0 ppm.

A $^1H$-NMR spectrum of the polymer is shown in Fig. 22.

EXAMPLE 36

<Polymerization of butene using (2-{Inden-1'-yl}-4,6-$^tBu_2$-$C_6H_4O$)$TiCl_2$>

To an autoclave having an internal volume of 2000 mL thoroughly purged with nitrogen, 250 mL of a toluene solution and 250 mL of 1-decene were charged, and then heated to 70 °C with stirring. Thereafter, 0.2mmol of triisobutylaluminum and 1.0 mL of a toluene solution (2 mmol/L) of (2-{Inden-1'-yl}-4,6-$^tBu_2$-$C_6H_4O$)$TiCl_2$ synthesized in Synthetic Example 1 were added, and subsequently, triphenylcarbeniumtetrakis(pentafluorophenyl)borate was added in an amount of 4 equivalent to Ti, to initiate polymerization. After carrying out the reaction for 180 minutes at 70 °C, small amount of isobutanol was added to stop the polymerization. After completion of the polymerization, the reaction product was extracted with hexane, washed with diluted hydrochloric acid, concentrated and dried under reduced pressure at 80 °C for 10 hours, to obtain polybutene.

As a result of $^1H$-NMR (ODCB-$d_4$) measurement of the polymer, there is observed a signal (B) derived from terminal vinylidene at 4.7 to 4.6 ppm, a signal (C) derived from disubstituted internal olefin at 5.4 to 5.2 ppm and a signal (D) derived from tri-substituted internal olefin at 5.2 to 5.0 ppm.

A $^1H$-NMR spectrum of the polymer is shown in Fig. 23.

EXAMPLE 37

<Polymerization of 1-decene using (2-{2-Me-4-Ph-Inden-1'-yl}-4,6-$^tBu_2$-$C_6H_4O$)$TiCl_2$>

The polymerization and the post-treatment were carried out in the same manner as in EXAMPLE 36 to obtain polybutene, except that 1 mL of a toluene solution (2 mmol/L) of (2-{2-Me-4-Ph-Inden-1'-yl}-4,6-$^tBu_2$-$C_6H_4O$)$TiCl_2$ synthesized in Synthetic Example 5 was used instead of 1 mL of the toluene solution (2 mmol/L) of (2-{Inden-1'-yl}-4,6-$^tBu_2$-$C_6H_4O$)$TiCl_2$.

As a result of $^1H$-NMR (ODCB-$d_4$) measurement of the polymer, there is observed a signal (B) derived from terminal vinylidene at 4.7 to 4.6 ppm, a signal (C) derived from disubstituted internal olefin at 5.4 to 5.2 ppm and a signal (D) derived from tri-substituted internal olefin at 5.2 to 5.0 ppm.

A $^1H$-NMR spectrum of the polymer is shown in Fig. 24.

EXAMPLE 38

<Polymerization of 1,3-butadiene using (2-{Inden-2'-yl}-4,6-$^tBu_2$-$C_6H_4O$)$TiCl_2$>

To a reactor [a parallel-pressure catalytic reaction apparatus (Trade Name: Endeavor) manufactured by Argonaut, 8-channel parallel reactor system] having an internal volume of 15 mL thoroughly purged with nitrogen, toluene and 0.2 mmol of triisobutylaluminum were charged, and a liquid phase and a gas phase were saturated with 1,3-butadiene gas 1 kg/cm$^2$·G at 30 °C.
Thereafter, 0.25 mL of a toluene solution (8 mmol/L) of (2-{Inden-2'-yl}-4,6-$^tBu_2$-$C_6H_4O$)$TiCl_2$ synthesized in Synthetic Example 3 was added, and subsequently, a toluene solution (0.4 mmol/L) of triphenylcarbeniumtetrakis(pentafluorophenyl)borate was added in an amount of 1.0 equivalent to Ti, to initiate polymerization. The toluene was fed to give a final volume of 5 mL in total. 1,3-butadiene gas was continuously fed to maintain a pressure of 1 KG. After carrying out the reaction at 30 °C for 30 minutes, small amount of methanol was added to stop the polymerization. After completion of the polymerization, the post-treatment was carried out in the same manner as in EXAMPLE 1, and the resultant was dried under reduced pressure at 80 °C for 10 hours to obtain 1, 3-butadiene copolymer.
$^{13}C$-NMR (TCE-$d_2$) of the polymer was measured and the constituent unit was examined, and as a result, 1,4-trans/1,4-cis/1,2- = 67/24/9 was obtained.

EXAMPLE 39

<Polymerization of 1,3-butadiene using (2-{2-Me-4-Ph-Inden-1'-yl}-4,6-$^tBu_2$-$C_6H_4O$)$TiCl_2$>

The polymerization and the post-treatment were carried out in the same manner as in EXAMPLE 38 to obtain polybutadiene, except that (2-{2-Me-4-Ph-Inden-1'-yl}-4,6- synthesized in Synthetic Example 5 was used instead of the toluene solution of (2-{Inden-2'-yl}-4,6-$^tBut_2$-$C_6H_4O$)$TiCl_2$.
$^{13}C$-NMR (TCE-$d_2$) of the polymer was measured and the constituent unit was examined, and as a result, 1,4-trans/1,4-cis/1,2- = 30/47/23 was obtained.

EXAMPLE 40

<Polymerization of 1,3-butadiene using (2-{2-Me-4-Ph-Inden-1'-yl}-4,6-$^tBu_2$-$C_6H_4O$)$TiCl_2$>

To a reactor [a parallel-pressure catalytic reaction apparatus (Trade Name: Endeavor) manufactured by Argonaut, equipped with 8-channel parallel reactor system] having an internal volume of 15 mL thoroughly purged with nitrogen, toluene was placed, and then 3.00 mmol of dry MAO was added. A liquid phase and a gas phase were saturated with 1, 3-butadiene (0.8 KG) at 30 °C.
Thereafter, 0.25 mL of a toluene solution (1.2 mmol/L) of (2-{2-Me-4-Ph-Inden-1'-yl}-4,6-$^tBu_2$-$C_6H_4O$)$TiCl_2$ synthesized in Synthetic Example 5 was added to initiate polymerization. The toluene was fed to give a final volume of 5 mL in total. After carrying out the reaction at 30 °C for 60 minutes, small amount of methanol was added to stop the polymerization. After completion of the polymerization, the post-treatment was carried out in the same manner as in EXAMPLE 1, and the resultant was dried under reduced pressure at 80 °C for 10 hours to obtain polybutadiene.

EXAMPLE 41

<Polymerization of styrene using (2-{2-Me-4-Ph-Inden-1'-yl}-4,6-$^tBu_2$-$C_6H_4O$)$TiCl_2$>

To a reactor [a parallel-pressure catalytic reaction apparatus (Trade Name: Endeavor) manufactured by Argonaut, equipped with 8-channel parallel reactor system] having an internal volume of 15 mL thoroughly purged with nitrogen, toluene was placed, 3.00 mmol of dry MAO was added, and maintained at 70 °C for 10 minutes. Thereafter, 0.25 mL of a toluene solution (1.2 mmol/L) of (2-{2-Me-4-Ph-Inden-1'-yl}-4,6-$^tBu_2$-$C_6H_4O$)$TiCl_2$ synthesized in Synthetic Example 5 was added, and then 2 mL of styrene was added, to initiate polymerization. The toluene was fed to give a final volume of 5 mL in total. After carrying out the reaction at 70 °C for 60 minutes, small amount of methanol was added to stop the polymerization. After completion of the polymerization, the post-treatment was carried out in the same manner as in EXAMPLE 1, and the resultant was dried under reduced pressure at 80 °C for 10 hours to obtain polystyrene. The Tm of the obtained product was 261 °C.

[Comparative Example 1]

<Polymerization of ethylene using (2-{Inden-1'-yl}$C_6H_4O$)$TiCl_2$>

The polymerization and the post-treatment were carried out in the same manner as in EXAMPLE 1 to obtain polyethylene, except that (2-{Inden-1'-yl}$C_6H_4O$)$TiCl_2$ synthesized in Synthetic Example 6 was used instead of 2-{Inden-1'-yl}-4,6-$^tBu_2$-$C_6H_4O$)$TiCl_2$, and the reaction time was changed to 30 minutes.

[Comparative Example 2]

<Polymerization of ethylene using (2-{Inden-1'-yl}$C_6H_4O$)$TiCl_2$>

The polymerization and the post-treatment were carried out in the same manner as in EXAMPLE 1 to obtain polyethylene, except that (2-{Inden-1'-yl}$C_6H_4O$)$TiCl_2$ synthesized in Synthetic Example 6 was used instead of 2-{Inden-1'-yl}-4,6-$^tBu_2$-$C_6H_4O$)$TiCl_2$, and the reaction temperature and the reaction time were changed to 80 °C and 30 minutes, respectively.

[Comparative Example 3]

<Polymerization of ethylene using (2-{Inden-1'-yl}-4,6-$^tBu_2$-$C_6H_4O$)Ti($NMe_2$)$_2$>

The polymerization and the post-treatment were carried out in the same manner as in EXAMPLE 1 to obtain polyethylene, except that (2-{Inden-1'-yl}-4,6-$^tBu_2$-$C_6H_4O$)Ti($NMe_2$)$_2$ obtained in accordance with a process disclosed in Organometallics., 2004(23), 1576 was used instead of 2-{Inden-1'-yl}-4,6-$^tBu_2$-$C_6H_4O$)$TiCl_2$, and the reaction time was changed to 30 minutes.

[Comparative Example 4]

<Polymerization of Ethylene using $Cp_2TiCl_2$>

The polymerization and the post-treatment were carried out in the same manner as in EXAMPLE 4 to obtain polyethylene, except that $Cp_2TiCl_2$ was used instead of 2-{Inden-2'-yl}-4,6-$^tBu_2$-$C_6H_4O$)$TiCl_2$, 1.25 mmol of dry MAO was used instead of triisobutylaluminum and triphenylcarbeniumtetrakis(pentafluorophenyl)borate, and the reaction temperature and the reaction time were changed to 75 °C and 5 minutes, respectively.

[Comparative Example 5]

<Polymerization of Ethylene/Propylene using (2-{Inden-1'-yl}-4,6-$^tBu_2$-$C_6H_4O$)Ti($NMe_2$)$_2$>

The polymerization and the post-treatment were carried out in the same manner as in EXAMPLE 12 to obtain ethylene/propylene copolymer, except that 1.0 mL of a toluene solution (5 mmol/L) of (2-{Inden-1'-yl}-4,6-$^tBu_2$-$C_6H_4O$) Ti($NMe_2$)$_2$ obtained in accordance wit a process disclosed in Organometallics., 2004(23), 1576 was used instead of (2-{Inden-1'-yl}-4,6-$^tBu_2$-$C_6H_4O$)$TiCl_2$, 0.25 mmol of triisobutylaluminum and triphenylcarbeniumtetrakis(pentafluorophenyl)borate in an amount of 1.2 equivalent to Ti were used, and the reaction time was changed to 30 minutes.

[Comparative Example 6]

<Polymerization of Ethylene/Propylene using Cp*$TiCl_3$>

The polymerization and the post-treatment were carried out in the same manner as in EXAMPLE 14 to obtain ethylene/propylene copolymer, except that Cp*$TiCl_3$ was used instead of (2-{2-Me-Inden-1'-yl}-4,6-$^tBu_2$-$C_6H_4O$)$TiCl_2$, ethylene/propylene mixed gas (= 60/40 liter/hr) of normal pressure was changed to ethylene/propylene mixed gas (= 100/100 liter/hr), and the reaction time was changed to 30 minutes.

[Comparative Example 7]

<Polymerization of Ethylene/Propylene using $Cp_2TiCl_2$>

The polymerization and the post-treatment were carried out in the same manner as in EXAMPLE 15 to obtain ethylene/propylene copolymer, except that $Cp_2TiCl_2$ was used instead of (2-{2-Me-4-Ph-Inden-1'-yl}-4,6-$^tBu_2$-$C_6H_4O$)$TiCl_2$, 1.25 mmol of dry MAO was used instead of triisobutylaluminum and triphenylcarbeniumtetrakis(pentafluorophenyl) borate, ethylene/propylene mixed gas (= 50/150 liter/hr) was used instead of ethylene/propylene mixed gas (= 60/40 liter/hr) of normal pressure, and the reaction time was changed to 30 minutes.

[Comparative Example 8]

<Polymerization of Ethylene/Propylene using bis[N-(3-tert-butylsalicylidene)anilinato]$TiCl_z$>

The polymerization and the post-treatment were carried out in the same manner as in EXAMPLE 14 to obtain ethylene/propylene copolymer, except that bis[N-(3-tert-butylsalicylidene)anilinato]$TiCl_2$ was used instead of (2-{2-Me-Inden-1'-yl}-4,6-$^tBu_2$-$C_6H_4O$)$TiCl_2$, 1.25 mmol of dry MAO was used instead of triisobutylaluminum and triphenylcarbeniumtetrakis(pentafluorophenyl)borate, ethylene/propylene mixed gas (= 50/150 liter/hr) was used instead of ethylene/propylene mixed gas (= 60/40 liter/hr) of normal pressure, and the reaction time was changed to 30 minutes.

[Comparative Example 9]

<Copolymerization of Ethylene/Isobutene using [$Me_2Si(Me_4Cp)(N^tBu)$]$TiCl_2$>

The polymerization and the post-treatment were carried out in the same manner as in EXAMPLE 20 to obtain ethylene/isobutene copolymer, except that [$Me_2Si(Me_4Cp)(N^tBu)$]$TiCl_2$ was used instead of (2-{Inden-2'-yl}-4,6-$^tBu_2$-$C_6H_4O$)$TiCl_2$.

[Comparative Example 10]

<Copolymerization of Ethylene/Isobutene using [$Me_2Si(Me_4Cp)(N^tBu)$]$TiCl_2$>

The polymerization and the post-treatment were carried out in the same manner as in EXAMPLE 22 to obtain ethylene/isobutene copolymer, except that [$Me_2Si(Me_4Cp)(N^tBu)$]$TiCl_2$ was used instead of (2-{Inden-2'-yl}-4,6-$^tBu_2$-$C_6H_4O$)$TiCl_2$, and the polymerization temperature was changed to 60 °C.

[Comparative Example 11]

<Polymerization of Ethylene/Isobutene using $Cp^*TiCl_3$>

The polymerization and the post-treatment were carried out in the same manner as in EXAMPLE 20 to obtain ethylene/isobutene copolymer, except that $Cp^*TiCl_3$ was used instead of (2-{Inden-2'-yl}-4,6-$^tBu_2$-$C_6H_4O$)$TiCl_2$.

[Comparative Example 12]

<Polymerization of Ethylene/Isobutene using $Cp_2TiCl_2$>

The polymerization and the post-treatment were carried out in the same manner as in EXAMPLE 20 to obtain ethylene/isobutene copolymer, except that $Cp_2TiCl_2$ was used instead of (2-{Inden-2'-yl}-4,6-$^tBu_2$-$C_6H_4O$)$TiCl_2$.

[Comparative Example 13]

<Copolymerization of Ethylene/1,3-butadiene using $Cp^*TiCl_3$>

The polymerization and the post-treatment were carried out in the same manner as in EXAMPLE 26 to obtain ethylene/butadiene copolymer, except that [$Me_2Si(Me_4Cp)(N^tBu)$]$TiCl_2$ was used instead of (2-{ Inden-2' -yl }-4, 6-$^tBu_2$-$C_6H_4O$) $TiCl_2$.

[Comparative Example 14]

<Polymerization of Propylene using (2-{Inden-1'-yl}-4,6-$^tBu_2$-$C_6H_4O$)Ti($NMe_2$)$_2$>

The polymerization and the post-treatment were carried out in the same manner as in EXAMPLE 29 to obtain polypropylene, except that 1.0 mL of a toluene solution (5 mmol/L) of 2-{Inden-1'-yl}-4,6-$^tBu_2$-$C_6H_4O$)Ti($NMe_2$)$_2$ obtained in accordance with a process disclosed in Organometallics., 2004(23), 1576 was used instead of 2-{Inden-2'-yl}-4,6-$^tBu_2$-$C_6H_4O$)$TiCl_2$, 0.25 mmol of triisobutylaluminum and triphenylcarbeniumtetrakis(pentafluorophenyl)borate in an amount of 1.2 equivalent to Ti were used, and the reaction time was changed to 30 minutes.

[Comparative Example 15]

<Polymerization of Propylene using Ethyliene(Indenyl)$_2$$ZrCl_2$>

The polymerization and the post-treatment were carried out in the same manner as in EXAMPLE 31 to obtain polypropylene, except that 4.0 mL of a toluene solution (0.5 mmol/L) of Ethyliene(Indenyl)$_2$$ZrCl_2$ was used instead of (2-{2-Me-4-Ph-Inden-1'-yl}-4,6-$^tBu_2$-$C_6H_4O$)$TiCl_2$, 1.25 mmol of dry MAO was used instead of triisobutylaluminum and triphenylcarbeniumtetrakis(pentafluorophenyl)borate, and the reaction time was changed to 30 minutes.

[Comparative Example 16]

<Polymerization of 1,3-butadiene using Cp*$TiCl_3$>

The polymerization and the post-treatment were carried out in the same manner as in EXAMPLE 38 to obtain 1, 3-butadiene polymer, except that Cp*$TiCl_3$ was used instead of (2-{Inden-2'-yl}-4,6-$^tBu_2$-$C_6H_4O$)$TiCl_2$.

$^{13}C$ -NMR (TCE-$d_2$) of the polymer was measured and the constituent unit was examined, and as a result, 1,4-trans/1,4-cis/1,2- = 11/66/23 was obtained.

The above-mentioned results are shown in the following tables 1 to 4.

[Table 1]

| | catalyst | TIBA | Borate | monomer (ethylene) | Time | temperature | Activity | Mw (MWD) (relative to PE standards) | Mw (MWD) (relative to PS standards) | tri-substituted internal olefin ($^1$H-NMR) | total SCB ($^{13}$C-NMR)[a] |
|---|---|---|---|---|---|---|---|---|---|---|---|
| | ·mol | mmol | ·mol | | min | °C | Kg/ mmol·h | $\times 10^3$ | $\times 10^3$ | (/1000C) | (/1000C) |
| Example | | | | | | | | | | | |
| 1 | 5 | 0.25 | 6 | 100 L/h | 10 | 25 | 1.25 | 4.3 (2.5) | 11.1 (2.7) | | |
| 2 | 1 | 0.05 | 1.2 | 100 L/h | 15 | 25 | 1.77 | 17.1 (9.9) | 55.4 (13.5) | | |
| 3 | 1 | 0.05 | 1.2 | 100 L/h | 10 | 25 | 1.51 | 46.1 (5.0) | 139.0 (6.0) | | 4.8 (b1/b2/c4<=2.5/0.2/2.1) |
| 4 | 1 | 0.05 | 1.2 | 100 L/h | 10 | 80 | 7.48 | 10.5 (2.3) | 28.6 (2.5) | | 5.9 (b1/b2/c4<=2.4/0.3/3.2) |
| 5 | 5 | 0.25 | 6 | 100 L/h | 5 | 25 | 3.51 | 33.6 (4.4) | 63.3 (3.3) | | |
| 6 | 5 | 0.25 | 6 | 100 L/h | 5 | 80 | 0.17 | 27.7 (4.5) | 88.0 (5.7) | | |
| 7 | 5 | 0.25 | 6 | 100 L/h | 5 | 25 | 1.07 | 326 (22.5) | 1140.0 (30.5) | | |
| 8 | 1 | 0.05 | 1.2 | 100 L/h | 10 | 25 | 4.79 | 56.9 (4.3) | 169.0 (5.0) | | 3.2 (b1/b2/c4<=1.8/0.4/1.0) |
| 9 | 1 | 0.05 | 1.2 | 100 L/h | 30 | 80 | 2.24 | 19.9 (2.0) | 55.3 (2.2) | | 3.1 (b1/b2/c4<=1.8/0.3/1.0) |
| 10 | 0.2 | 0.005 | 0.24 | 8 KG | 30 | 60 | 2.97 | 11.1 (2.2) | 30.1 (2.3) | 0.3 | 6.2 (b1/b2/c4<=3.1/0.3/2.8) |
| 11 | 0.2 | 0.03 | 0.24 | 8 KG | 30 | 80 | 2.18 | 8.0 (2.0) | 21.2 (2.1) | 0.3 | 7.1 (b1/b2/c4<=3.4/0.4/3.3) |
| Comparative Example | | | | | | | | | | | |
| 1 | 5 | 0.25 | 6 | 100 L/h | 30 | 25 | 0.026 | - | - | | |

(continued)

| | | | | | | | | | | | |
|---|---|---|---|---|---|---|---|---|---|---|---|
| Comparative Example | | | | | | | | | | | |
| 2 | 5 | 0.25 | 6 | 100 L/h | 30 | 80 | 0.012 | 355.5 (20.2) | 1210.0 (27.2) | | |
| 3 | 5 | 0.25 | 6 | 100 L/h | 30 | 25 | 0.021 | 90.9 (50.3) | 318.7 (74.5) | | |
| 4 | 1 | DMAO 1.25 | - | 100 L/h | 5 | 75 | 0.78 | Mw=70.9 | | | |

[a] SCB: number of short chain branch (/1000 carbon), C4<: Sum of number of branches more than 4 carbon.

[Table 2-a]

| | catalyst | TIBA | Borate | $C^{2-}$/comonomer | Time | temperature | Activity | Comonomer content | Ci/Pi | Mw (MWD) (relative to PE standards) | Mw (MWD) (relative to PS standards) |
|---|---|---|---|---|---|---|---|---|---|---|---|
| | ·mol | mmol | ·mol | (L/h)/(L/h) | min | °C | Kg/mmol· h | mol% | | $\times 10^3$ | $\times 10^3$ |
| Example | | | | | | | | | | | |
| 12 | 1 | 0.05 | 1.2 | $C_2^=/C_2^=$ =60/40 | 15 | 25 | 1.21 | 61 | 1.24 | 0.3 (1.8) | 0.8 (1.8) |
| 13 | 1 | 0.05 | 1.2 | $C_2^=/C_3^=$ =60/40 | 10 | 25 | 14.85 | 80 | 0.94 | 0.5 (2.0) | 1.3 (2.0) |
| 14 | 5 | 0.25 | 6 | $C_2^=/C_3^=$ =60/40 | 5 | 25 | 3.22 | 58 | 1.30 | 1.2 (2.5) | 3.0 (2.5) |
| 15 | 1 | 0.05 | 1.2 | $C_2^=/C_3^=$ =60/40 | 10 | 25 | 26.03 | 58 | 1.31 | 1.5 (2.8) | 3.6 (2.7) |
| 16 | 1 | 0.05 | 1.2 | $C_2^=$/1-$C_4^=$ =95/5 | 10 | 25 | 25.54 | 71 | 0.65 | 0.5 (2.3) | 1.1 (2.3) |
| 17 | 1 | 0.05 | 1.2 | $C_2^=$/1-$C_4^=$ =60/40 | 10 | 25 | 85.56 | 82 | 1.11 | 1.3 (2.5) | 3.1 (2.5) |
| 18 | 1 | 0.05 | 1.2 | $C_2^=$/1-$C_4^=$ =80/20 | 10 | 25 | 29.66 | 71 | 1.13 | 1.1 (2.5) | 2.8 (2.5) |
| 19 | 1 | 0.05 | 1.2 | $C_2^=$/1-$C_4^=$ =95/5 | 10 | 25 | 18.50 | 61 | 0.75 | 1.3 (2.4) | 3.1 (2.3) |
| 20 | 0.2 | 0.02 | 0.24 | $C_2^=$/iso$C_4^=$ =1/1 (KG/KG) | 20 | 30 | 12.72 | 36 | - | 23.4 (2.3) | 55.8 (2.2) |
| 21 | 0.2 | 0.02 | 0.24 | $C_2^=$/iso$C_4^=$ =8/1 (KG/KG) | 20 | 30 | 24.57 | 16 | - | 19.5 (2.5) | 46.4 (2.4) |
| 22 | 0.1 | 0.02 | 0.1 | $C_2^=$/iso$C_4^=$ =1/1 (KG/KG) | 20 | 40 | 3.29 | 44 | - | - | 24.8 (2.1) |
| 23 | 0.1 | 0.02 | 0.1 | $C_2^=$/iso$C_4^=$ =10/1 (KG/KG) | 20 | 40 | 15.50 | 30 | - | - | 41.6 (2.0) |
| 24 | 0.1 | 0.02 | 0.1 | $C_2^=$/iSO$C_4^=$ =1/1 (KG/KG) | 20 | 40 | 10.78 | 37 | - | - | 68.4 (2.7) |
| 25 | 0.1 | 0.02 | 0.1 | $C_2^=$/iso$C_4^=$ =10/1 (KG/KG) | 20 | 40 | 28.84 | 19 | - | - | 153.0 (3.1) |

[a] SCB: number of short chain branch (/1000 carbon), C4<: Sum of number of branches more than 4 carbon.

[Table 2-b]

| | catalyst | TIBA | Borate | $C^{2=}$/comonomer | Time | temperature | Activity | Comonomer content | Ci/Pi | Mw (MWD) (relative to PE standards) | Mw (MWD) (relative to PS standards) | tri-substituted internal olefin ($^1$H-NMR) | total SCB. ($^{13}$C-NMR)[a] |
|---|---|---|---|---|---|---|---|---|---|---|---|---|---|
| | ·mol | mmol | ·mol | (L/h)/ (L/h) | min | °C | Kg/ mmol·h | mol% | | ×$10^3$ | ×$10^3$ | (/1000C) | (/1000C) |
| Example | | | | | | | | | | | | | |
| 26 | 2 | 0.2 | 2 | $C_2^=$/BD =1/1 (KG/KG) | 20 | 30 | 0.58 | 52 | - | - | 6.7 (3.6) | | |
| 27 | 1 | 0.05 | 1.2 | $C_2^=$/NB =50/1 {(L/h)/(g)} | 10 | 25 | 6.94 | - | | - | 41.6 (4.9) | | |
| 28 | 1 | 0.05 | 1.2 | $C_2^=$/ OligoEt =100/3 {(L/h)/(g)} | 10 | 90 | Yield 3.89 g | - | - | 4.2 (2.5) | 10.8 (2.7) | 0.1 | 4.3 (b1/b2/b3/b4/C6<=0.4/0/1.2/0.3/2.3) |
| Comparative Example | | | | | | | | | | | | | |
| 5 | 5 | 0.25 | 6 | $C_2^=/C_3^=$ =60/40 | 30 | 25 | 0.004 | - | | - | - | | |
| 6 | 5 | 0.25 | 6 | $C_2^=/C_3^=$ =100/100 | 30 | 25 | 0.13 | 40 | 2.09 | Mv =76.9 | | | |
| 7 | 1 | DMAO1.25 | - | $C_2^=/C_3^=$ =50/150 | 30 | 25 | 0.58 | 42 | 2.26 | | 242.0 (2.2) | | |
| 8 | 5 | DMAO 1.25 | - | $C_2^=/C_3^=$ =50/150 | 10 | 50 | 0.56 | 7 | 12.8 | Mv =78.3 | | | |
| 9 | 0.2 | 0.02 | 0.24 | $C_2^=$/iso$C_4^=$ =1/1 (KG/KG) | 20 | 30 | 0.20 | - | - | - | | | |
| 10 | 0.1 | 0.02 | 0.1 | $C_2^=$/iso$C_4^=$ =1/1 (KG/KG) | 20 | 60 | 0.68 | 17 | - | - | 29.9 (11.9) | | |
| 11 | 0.2 | 0.01 | 1.2 | $C_2^=$/iso$C_4^=$ =1/1 (KG/KG) | 20 | 30 | 1.37 | 3 | - | 131.2 (3.4) | 305.0 (3.3) | | |
| 12 | 0.2 | 0.01 | 1.2 | $C_2^=$/iso$C_4^=$ =1/1 (KG/KG) | 20 | 30 | 1.54 | 0 | - | 437.8 (4.1) | 1000.0 (4.0) | | |
| 13 | 2 | 0.2 | 2 | $C_2^=$/BD =1/1 (KG/KG) | 20 | 30 | 0.41 | 96 | - | | 391.2 (1.9) | | |

[a] SCB: number of short chain branch (/1000 carbon), C4<: Sum of number of branches more than 4 carbon.

[Table 3]

| | catalyst | TIBA | Borate | propylene | Time | temperature | Activity | Mw (MWD) (relative to PE standards) | Mw (MWD) (relative to PS standards) | tri-substituted internal olefin ($^1$H-NMR) | regioregularit y (HT/HH/TT) ($^{13}$C-NMR) | stereoregularity (mm/mr/rr) ($^{13}$C-NMR) |
|---|---|---|---|---|---|---|---|---|---|---|---|---|
| | ·mol | mmol | ·mol | L/h | min | °C | Kg/ mmol·h | $\times 10^3$ | $\times 10^3$ | (/1000C) | % | % |
| Example | | | | | | | | | | | | |
| 29 | 1 | 0.05 | 1.2 | 100 | 10 | 25 | 16.50 | 1.2 (2.0) | 1.7 (2.3) | 0.7 | 69/15/16 | 12/55/33 |
| 30 | 5 | 0.25 | 6 | 100 | 5 | 25 | 6.46 | 6.0 (2.1) | 9.1 (2.4) | 3.0 | 69/18/13 | 14/48/38 |
| 31 | 1 | 0.05 | 1.2 | 100 | 10 | 25 | 21.25 | 9.6 (2.3) | 15.3 (2.6) | 2.3 | 64/23/13 | 18/46/36 |
| 32 | 5 | 0.25 | 6 | 100 | 30 | 25 | 0.45 | 14.4 (3.6) | 24.0 (4.5) | 0.7 | 57/28/15 | 23/43/34 |
| Comparative Example | | | | | | | | | | | | |
| 14 | 5 | 0.25 | 6 | 100 | 30 | 25 | trace | | | | | |
| 15 | 2 | DMAO 1.25 | - | 100 | 30 | 25 | 1.1 | $M_V$= 23.7 | | | | |

[a]SCB: number of short chain branch (/1000 carbon), C4<: Sum of number of branches more than 4 carbon.

[Table 4]

| | catalyst | TIBA | Borate | monomer | Time | temperature | Activity | Mw (MWD) (relative to PE standards) | Mw (MWD) (relative to PS standards) | tri-substituted internal olefin ($^1$H-NMR) |
|---|---|---|---|---|---|---|---|---|---|---|
| | ·mol | mmol | ·mol | | min | °C | Kg/mmol·h | $\times 10^3$ | $\times 10^3$ | (/1000C) |
| Example | | | | | | | | | | |
| 33 | 1 | 0.05 | 1.2 | 1-butene 90 L/h | 10 | 25 | 32.76 | 0.7 (1.9) | 1.0 (2.1) | |
| 34 | 1 | 0.05 | 1.2 | 1-butene 90 L/h | 10 | 25 | 4.09 | 3.3 (2.1) | 4.8 (2.3) | |
| 35 | 2.5 | 0.13 | 3.0 | 1-decene 500 mL | 30 | 50 | 135.9 | - | 6.3 (1.8) | 2.7 |
| 36 | 2 | 0.2 | 8.0 | 1-decene 250 mL | 180 | 70 | 2.86 | | 1.3 (1.3) | 7.3 |
| 37 | 2 | 0.2 | 8.0 | 1-decene 250 mL | 180 | 70 | 4.23 | | 6.5 (1.6) | 1.7 |
| 38 | 2 | 0.2 | 2 | Butadiene 1 KG | 30 | 30 | 0.12 | - | 41.1 (1.7) | - |
| 39 | 2 | 0.2 | 2.4 | Butadiene 0.8 KG | 30 | 30 | 0.11 | - | 17.6 (2.0) | - |
| 40 | 0.3 | DMAO 3.0 | - | 1,3-butadiene 0.8 KG | 60 | 30 | 0.04 | - | 72.1 (3.1) | - |
| 41 | 0.3 | DMAO 3.0 | - | Styrene 2 mL | 60 | 70 | 0.11 | - | 68.0 (5.3) | |
| Comparative Example | | | | | | | | | | |
| 16 | 2 | 0.2 | 2 | 1,3-butadiene 1.0 KG | 30 | 30 | 0.53 | - | 923.5 (2.1) | - |

[a] SCB: number of short chain branch (/1000 carbon), C4<: Sum of number of branches more than 4 carbon.

## Claims

1. A catalyst for olefin polymerization comprising:

   (A) a transition metal compound represented by the following general formula (1); and
   (B) at least one compound selected from the group consisting of

      (B-1) organometallic compound,
      (B-2) organoaluminum oxy compound, and
      (B-3) compounds capable of reacting with the transition metal compound (A) to form an ion pair,

[Chem. 1]

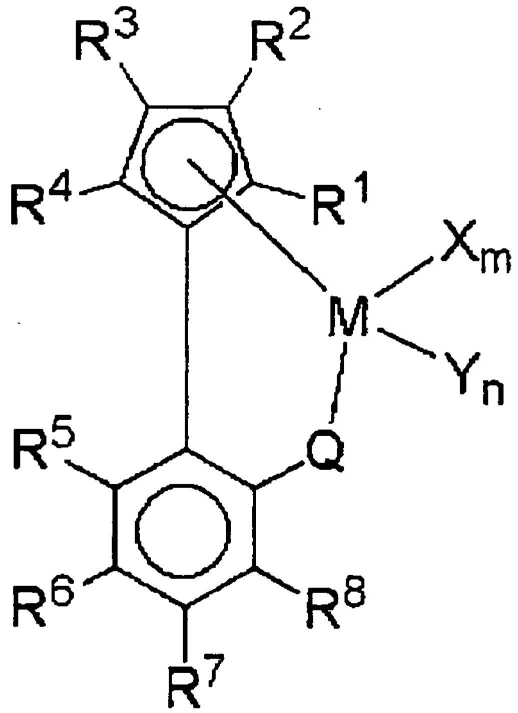

· · · (1)

wherein, M is a transition metal atom selected from Groups 4 to 6 of the periodic table; X represents an atom or a group selected from a hydrogen atom, a halogen atom, a hydrocarbon group, a halogenated hydrocarbon group, an oxygen-containing group, and a nitrogen-containing group; Q is -O-, -S-, -$NR^a$-, or -$PR^b$- (wherein, $R^a$ and $R^b$ are each a hydrogen atom or a hydrocarbon group); Y is a neutral ligand having an electron-donating group; m is a number satisfying the valence of M, and when m is 2 or more, a plurality of atoms or groups represented by X may be the same as or different from each other, the plurality of groups represented by X may be bonded to each other, it may form a conjugated straight-chain diene residue, a conjugated branched-chain diene residue, a non-conjugated straight-chain diene residue or a non-conjugated branched-chain diene residue, and the plurality of groups represented by X may be bonded to each other to form a ring; n is an integer of 0 to 3; two of $R^1$ to $R^4$ which are adjacent to each other may be combined to form an aromatic ring or an aliphatic ring with the carbon atoms to which the two are bonded, and groups of not forming a ring which may be the same as or different from each other, are each an atom, or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group; and $R^5$ to $R^8$ which may be the same as or different from each other, are each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and two of $R^5$ to $R^8$ which are adjacent to each other may be combined to form an aromatic ring, an aliphatic ring, or a hetero ring, with the carbon atoms to which the two are bonded.

**2.** The catalyst for olefin polymerization according to Claim 1, wherein in the general formula (1), $R^1$ and $R^2$ are combined to form one aromatic ring with the carbon atoms to which the two are bonded, and $R^3$ and $R^4$ are combined to form one aromatic ring with the carbon atoms to which the two are bonded.

**3.** The catalyst for olefin polymerization according to Claim 1, wherein in the general formula (1), $R^2$ and $R^3$ are combined to form one aromatic ring with the carbon atoms to which the two are bonded.

**4.** The catalyst for olefin polymerization according to Claim 1, wherein in the general formula (1), $R^3$ and $R^9$ are combined to form one aromatic ring with the carbon atoms to which the two are bonded, and M is a titanium atom.

**5.** The catalyst for olefin polymerization according to any one of Claims 1 to 4, wherein, in the general formula (1), $R^8$ is a group selected from (a) a hydrocarbon group selected from a tertiary alkyl group, an arylalkyl group, an aryl group, and an alicyclic group, (b) a halogenated hydrocarbon group selected from a halogenated alkyl group and a halogen-containing aromatic group, and (c) a tertiary silyl group, and is a group having 1 to 20 carbon atom(s) in total.

**6.** A process for producing an olefin polymer, the process comprising polymerizing one or more kinds of olefins in the presence of the catalyst for olefin polymerization of any one of claims 1 to 5.

**7.** The process for producing an olefin polymer according to Claim 6, comprising copolymerizing two or more kinds of olefins.

**8.** The process for producing an olefin polymer according to Claim 7, wherein the two or more kinds of olefins are olefins selected from α-olefins having 2 to 20 carbon atoms, and any olefin satisfies the relationship of the following formula (Eq-1):

$$0.33 \leq Ci/Pi \leq 1.50 \quad (Eq\text{-}1)$$

when assumed that a ratio (mol%) of a concentration of any one olefin (Mi) among the olefins in the copolymerization system to the sum of concentrations of all olefins is Ci and an abundance ratio (mol%) of structural units derived from an olefin (Mi) in the obtained copolymer to the total structural units is Pi.

**9.** A process for producing an olefin-vinylidene compound copolymer, comprising steps of:

copolymerizing one or more kinds of olefins selected from α-olefins having 2 to 20 carbon atoms and a vinylidene compound in the presence of a catalyst for olefin polymerization including (A) a transition metal compound represented by the following general formula (1), and (B) at least one compound selected from the group consisting of (B-1) organometallic compound,(B-2) organoaluminum oxy compound, and (B-3) compounds capable of reacting with the transition metal compound (A) to form an ion pair; and
producing a copolymer having a content ratio (Uo/Uv) of the structural units (Uo) derived from the olefin to the structural units (Uv) derived from the vinylidene compound of 50/50 to 99/1 (molar ratio),

[Chem. 2]

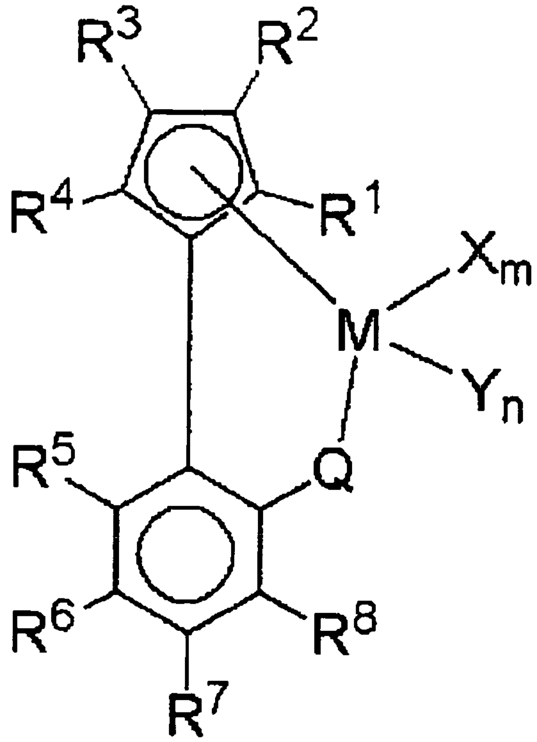

• • • (1)

(wherein, M is a transition metal atom selected from Groups 4 to 6 of the periodic table; X represents an atom or a group - selected from a hydrogen atom, a halogen atom, a hydrocarbon group, a halogenated hydrocarbon group, an oxygen-containing group, and a nitrogen-containing group; Q represents -O-, -S-, $-NR^a-$ or $-PR^b-$ (wherein, $R^a$ and $R^b$ are each a hydrogen atom or a hydrocarbon group)); Y is a neutral ligand having an electron-donating group; m is a number satisfying the valence of M, and when m is 2 or more, a plurality of atoms or groups represented by X may be the same as or different from each other, the plurality of groups represented by X may be bonded to each other, it may form a conjugated straight-chain diene residue, a conjugated branched-chain diene residue, a non-conjugated straight-chain diene residue, or a non-conjugated branched-chain diene residue, and the plurality of groups represented by X may be bonded to each other to form a ring; n is an integer of 0 to 3; $R^1$ to $R^4$, which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and the two of $R^1$ to $R^4$ which are adjacent to each other may be combined to form an aromatic ring or an aliphatic ring with the carbon atoms to which the two are bonded; and $R^5$ to $R^8$ which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and the two of $R^5$ to $R^8$ which are adjacent to each other may be combined to form an aromatic ring, an aliphatic ring, or a hetero ring, with the carbon atoms to which the two are bonded.).

**10.** An olefin copolymer comprising structural units derived from one or more kinds of olefin selected from α-olefins having 2 or more carbon atoms, wherein the tri-substituted internal olefin quantity is 0.1 or more per 1000 carbon atoms when measured by $^1$H-NMR.

**11.** The olefin copolymer according to Claim 10, which is a copolymer of two or more kinds of olefins selected from α-olefins having 2 to 20 carbon atoms or a polymer of α-olefin of one or more kind(s) selected from α-olefins having 3 to 20 carbon atoms, wherein the constituent ratio of regioirregular linkage (head-head bonding and tail-tail bonding) of the α-olefins having 3 to 20 carbon atoms in the total α-olefin chains measured by $^{13}$C-NMR is 10 mol% or more.

**12.** An olefin polymer which can be obtained by supplying the olefin selected from α-olefins having 2 to 20 carbon atoms,

having on its side chain two or more alkyl groups selected from an ethyl group (b1), an alkyl group having 3 carbon atoms (b2), an alkyl group having 4 carbon atoms (b3), and an alkyl group having 5 carbon atoms (b4)(provided that, when the number of carbon atoms of α-olefin having 3 or more carbon atoms supplied in a polymerization is t, side chains having t-2 carbon atoms are not included in the alkyl group selected from (b1) to (b4)), wherein the content of the total b1 to b4 alkyl groups is 1.0 or more per 1000 carbon atoms.

**13.** An olefin-vinylidene compound copolymer, which is a copolymer of at least one olefin selected from α-olefins having 2 to 20 carbon atoms and a vinylidene compound, wherein the ratio (Uo/Uv) of the total content of structural units derived from the olefin (Uo) to the content of structural units derived from the vinylidene compound (Uv) is from 50/50 to 99/1 (molar ratio).

**14.** A transition metal compound represented by the following general formula (1):

[Chem. 3]

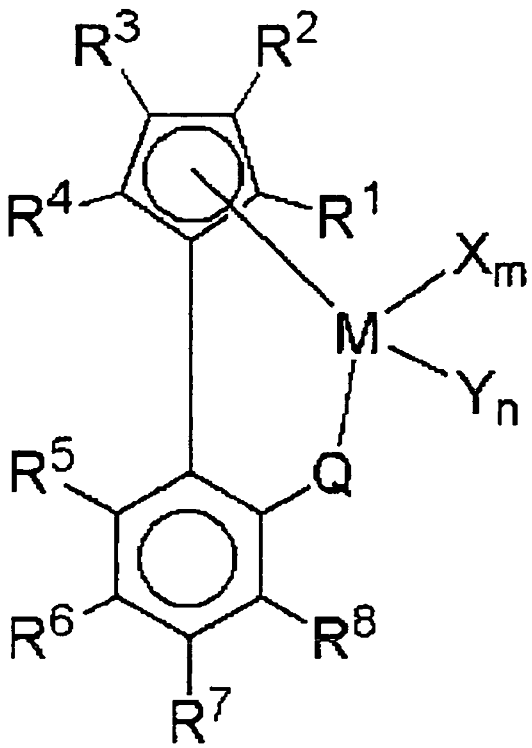

・・・(1)

wherein, M is a transition metal atom selected from Groups 4 to 6 of the periodic table; X represents an atom or a group selected from a hydrogen atom, a halogen atom, a hydrocarbon group, a halogenated hydrocarbon group, an oxygen-containing group, and a nitrogen-containing group; Q represents -O-, -S-, $-NR^a-$ or $-PR^b-$ (wherein, $R^a$ and $R^b$ are each a hydrogen atom or a hydrocarbon group)); Y represents a neutral ligand having an electron-donating group; m is a number satisfying the valence of M, and when m is 2 or more, a plurality of atoms or groups represented by X may be the same as or different from each other, the plurality of groups represented by X may be bonded to each other, they may form a conjugated straight-chain diene residue, a conjugated branched-chain diene residue, a non-conjugated straight-chain diene residue, or a non-conjugated branched-chain diene residue, and the plurality of groups represented by X may be bonded to each other to form a ring; n is an integer of 0 to 3; the two of $R^1$ to $R^4$, which are adjacent to each other may be combined to form an aromatic ring or an aliphatic ring with the carbon atoms to which the two are bonded, and the groups not forming a ring which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group, and a nitrogen-containing group; and $R^5$ to $R^8$, which may be the same as or different from each other, represent each an atom or a group selected from a hydrogen atom, a halogen

atom, a hydrocarbon group, a halogenated hydrocarbon group, a silyl group-substituted hydrocarbon group, a hydrocarbon group-substituted silyl group, an oxygen-containing group, and a nitrogen-containing group and the two of $R^5$ to $R^8$, which are adjacent to each other, may be combined to form an aromatic ring, an aliphatic ring, or a hetero ring with the carbon atoms to which the two are bonded.

**15.** The transition metal compound according to Claim 14, wherein the transition metal compound is a compound represented by the following general formula (2):

[Chem. 4]

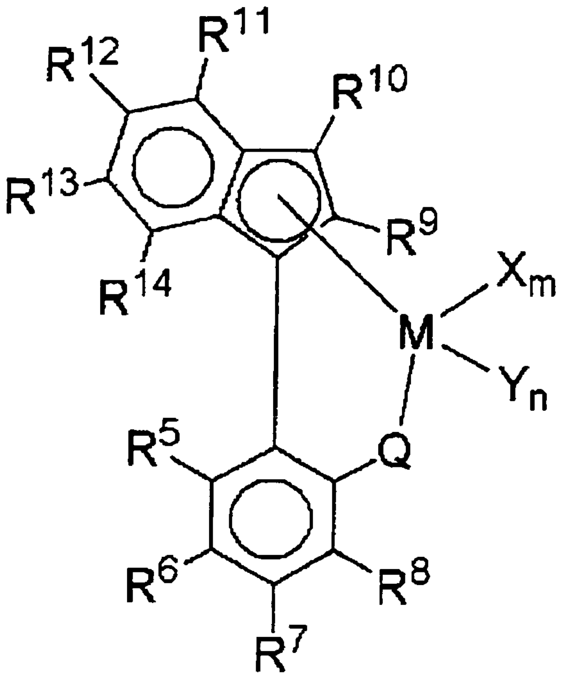

・・・(2)

wherein, $R^9$ to $R^{14}$, which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and the two of $R^9$ to $R^{14}$, which are adjacent to each other, may be combined to form an aromatic ring, an aliphatic ring, or a hetero ring, with the carbon atoms to which the two are bonded.

**16.** The transition metal compound according to Claim 15, wherein among the atoms or groups represented by $R^9$ to $R^{14}$, at least one of $R^9$ and $R^{10}$ is a halogen atom, a hydrocarbon group having 1 to 20 carbon atom(s), a halogenated hydrocarbon group having 1 to 20 carbon atom(s), a silyl group-substituted hydrocarbon group having 1 to 20 carbon atom(S), or a hydrocarbon group-substituted silyl group having 1 to 20 carbon atom(s) in total, and $R^9$ and $R^{10}$ may be the same as or different from each other.

**17.** The transition metal compound according to Claim 15, wherein among the atoms or groups represented by $R^9$ to $R^{14}$, $R^{11}$ is a halogen atom, a hydrocarbon group having 1 to 20 carbon atom (s), a halogenated hydrocarbon group having 1 to 20 carbon atom(s), a silyl group-substituted hydrocarbon group having 1 to 20 carbon atom(s) or a hydrocarbon group-substituted silyl group having 1 to 20 carbon atom(s) in total.

**18.** The transition metal compound according to Claim 15, wherein the two atoms or groups of $R^{11}$ to $R^{14}$ adjacent to each other combines to form an expanded aromatic ring.

**19.** The transition metal compound according to Claim 14, wherein the transition metal compound is a compound represented by the following general formula (3):

[Chem. 5]

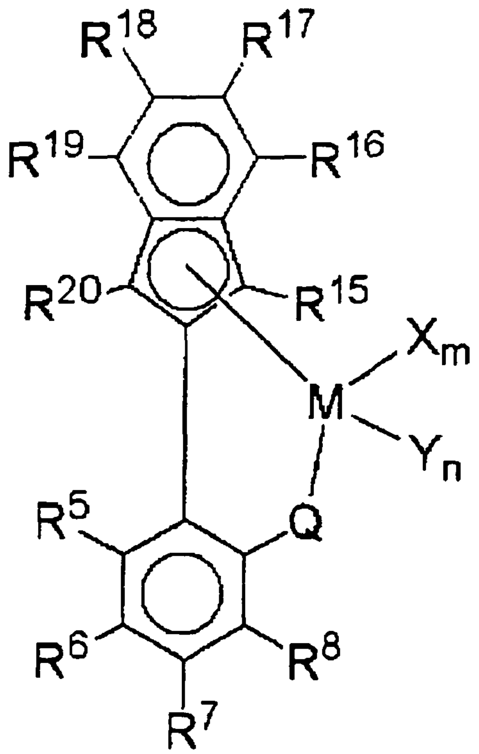

• • • (3)

wherein, $R^{15}$ to $R^{20}$, which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group, and a nitrogen-containing group, and the two of $R^{15}$ to $R^{20}$, which are adjacent to each other, may be combined to form an aromatic ring, an aliphatic ring or a hetero ring, with the carbon atoms to which the two are bonded.

**20.** The transition metal compound according to Claim 14, wherein the transition metal compound has a structure represented by the following general formula (4):

[Chem. 6]

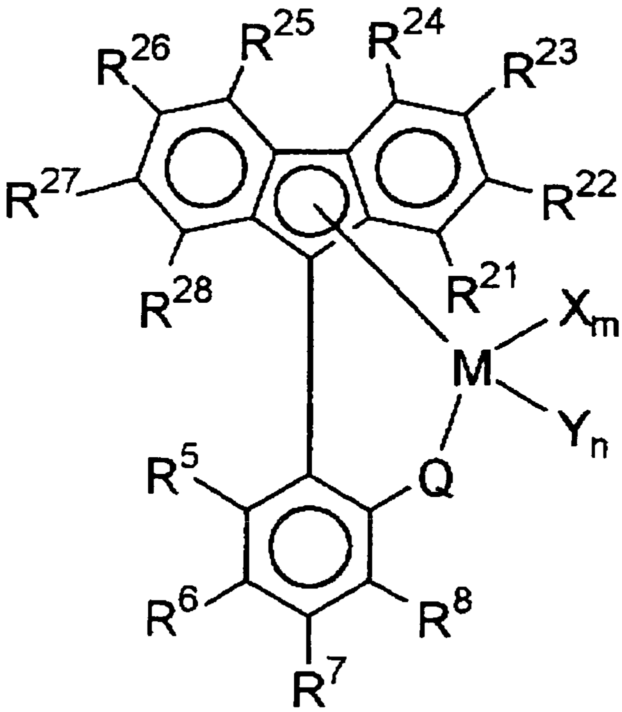

... (4)

wherein, $R^{21}$ to $R^{28}$, which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group and a nitrogen-containing group, and the two of $R^{21}$ to $R^{28}$, which are adjacent to each other, may be combined to form an aromatic ring, an aliphatic ring, or a hetero ring, with the carbon atoms to which the two are bonded.

**21.** A process for producing a novel transition metal compound comprising Process 1 and Process 2:

Process 1: reacting an amide complex represented by the following general formula (10) with an anion ligand (L) having a structure represented by the following general formula (11) or with a neutral organic compound in which the anion ligand (L) is hydrogenated, and converting it into a reaction product containing an amide complex represented by the following general formula (12):

$$MW_p(NZZ')_{ml}Y_n \qquad (10)$$

[Chem. 7]

L= 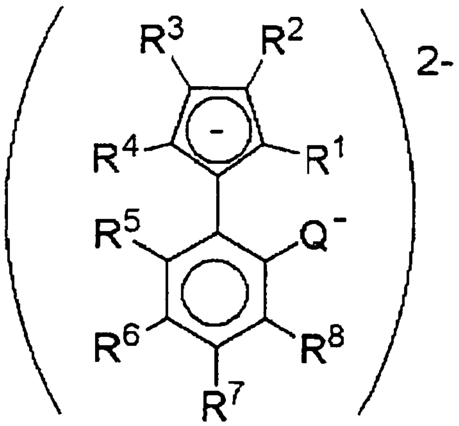 · · · (11)

$LM(NZZ')_mY_n$ (12);

and

Process 2: reacting the reaction product obtained from the Process 1 with a compound represented by the following general formula (13), and preparing the novel transition metal compound represented by the following general formula (1):

$VX^1$ (13)

[Chem. 8]

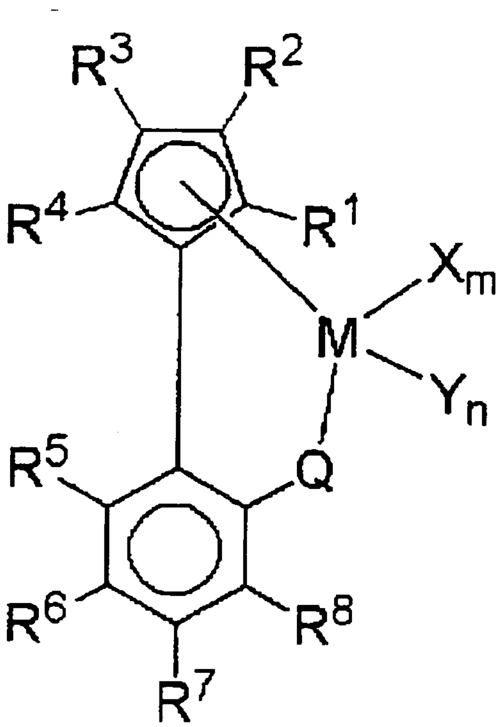 · · · (1)

wherein: in the general formulae (1), (10), and (12), M represents a transition metal atom selected from Groups 4 to 6 of the periodic table; in the general formula (12), L is the anion ligand represented by the above general formula (11) ; in the general formulae (1) and (11), $R^1$ to $R^4$, which may be the same as or different from each other, represent

each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group, and a nitrogen-containing group, and the two of $R^1$ to $R^4$, which are adjacent to each other, may be combined to form an aromatic ring, an aliphatic ring, or a hetero ring, with the carbon atoms to which the two are bonded; and $R^5$ to $R^8$, which may be the same as or different from each other, represent each an atom or a group selected from a hydrogen atom, a halogen atom, a hydrocarbon group, a halogenated hydrocarbon group, a silyl group-substituted hydrocarbon group, a hydrocarbon group-substituted silyl group, an oxygen-containing group, and a nitrogen-containing group, and the two of $R^5$ to $R^8$, which are adjacent to each other, may be combined to form an aromatic ring or an aliphatic ring with the carbon atoms to which the two are bonded; in the general formula (10), W represents a halogen atom; p is an integer of 0 to 2; and p and ml are determined to satisfy the valence of M; in the general formula (1), X represents an atom or a group selected from a hydrogen atom, a halogen atom, a hydrocarbon group, a halogenated hydrocarbon group, an oxygen-containing group, and a nitrogen-containing group; in the general formula (11), Q represents -O-, -S, -$NR^a$-or -$PR^b$- (wherein, $R^a$ and $R^b$ represent each a hydrogen atom or a hydrocarbon group); in the general formula (10) and (12), Z and Z' which may be the same as or different from each other, represent each a hydrocarbon group having 1 to 20 carbon atom(s) or a silicon-containing group; and the two groups represented by NZZ' which are adjacent to each other may be bonded via Z or Z', and in the case where those are bonded, bridging groups of those may have a chiral structure; in the general formula (13), V represents a metal atom selected from Group 1 of the periodic table, a hydrogen atom, a hydrocarbon group having 1 to 20 carbon atom(s), a halogenated hydrocarbon group having 1 to 20 carbon atom(s), a silicon-containing group, a nitrogen-containing group or an oxygen-containing group; and $X^1$ represents a halogen atom; in the general formulae (1), (10), and (12), Y represents a neutral ligand having an electron-donating group; in the general formula (12), m is a number satisfying the valence of M, and when m is 2 or more, a plurality of groups represented by NZZ' may be the same as or different from each other; in the general formula (1), m is a number satisfying the valence of M, and when m is 2 or more, a plurality of atoms or groups represented by X may be the same as or different from each other, the plurality of groups represented by X may be bonded to each other, they may form a conjugated straight-chain diene residue, a conjugated branched-chain diene residue, a non-conjugated straight-chain diene residue or a non-conjugated branched-chain diene residue, and the plurality of groups represented by X may be bonded to each other to form a ring; in the general formulae (1), (10), and (12), n represents an integer of 0 to 3.

Fig.1

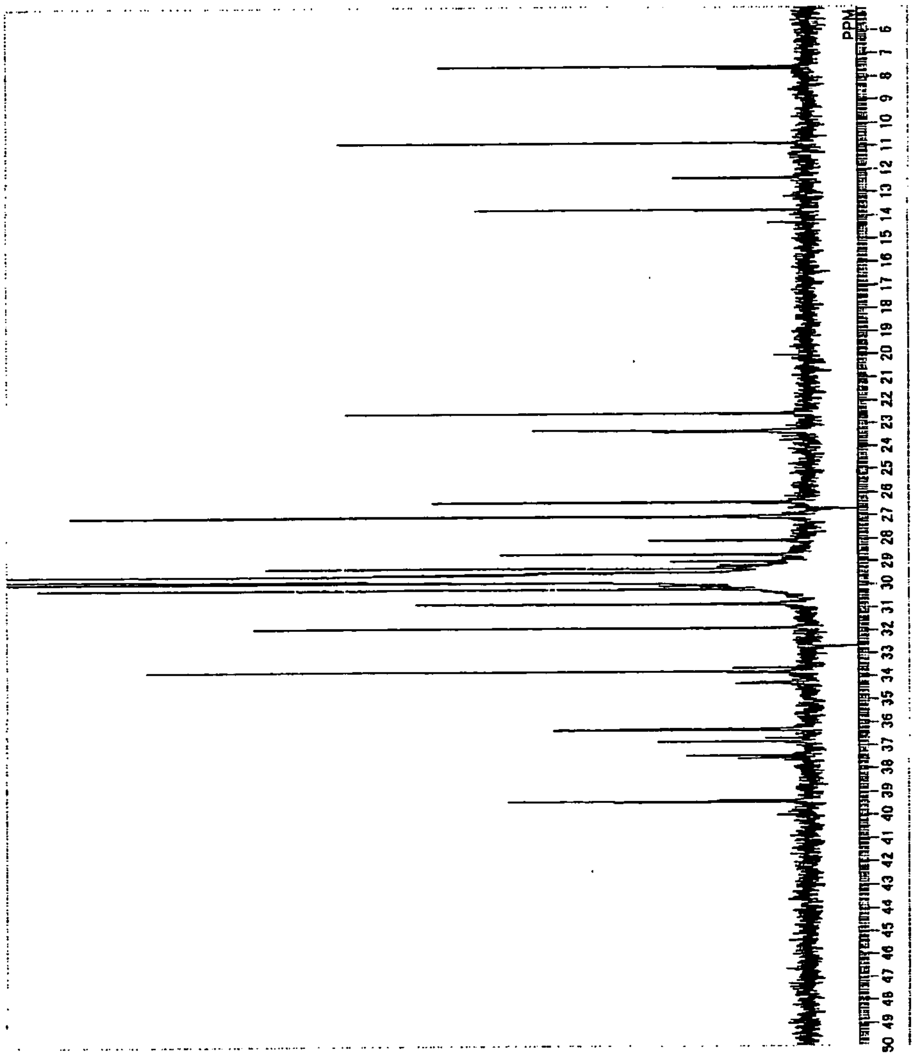
PPM
6 7 8 9 10 11 12 13 14 15 16 17 18 19 20 21 22 23 24 25 26 27 28 29 30 31 32 33 34 35 36 37 38 39 40 41 42 43 44 45 46 47 48 49 50

Fig.2

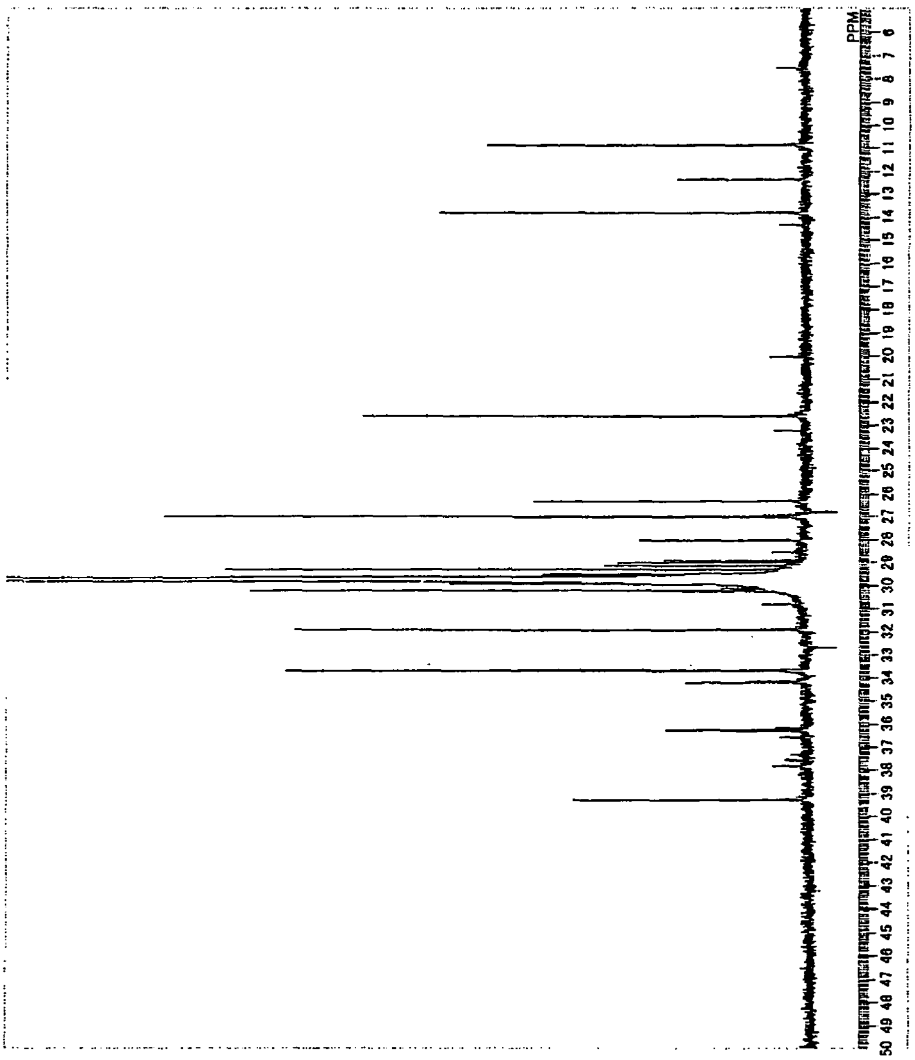

Fig.3

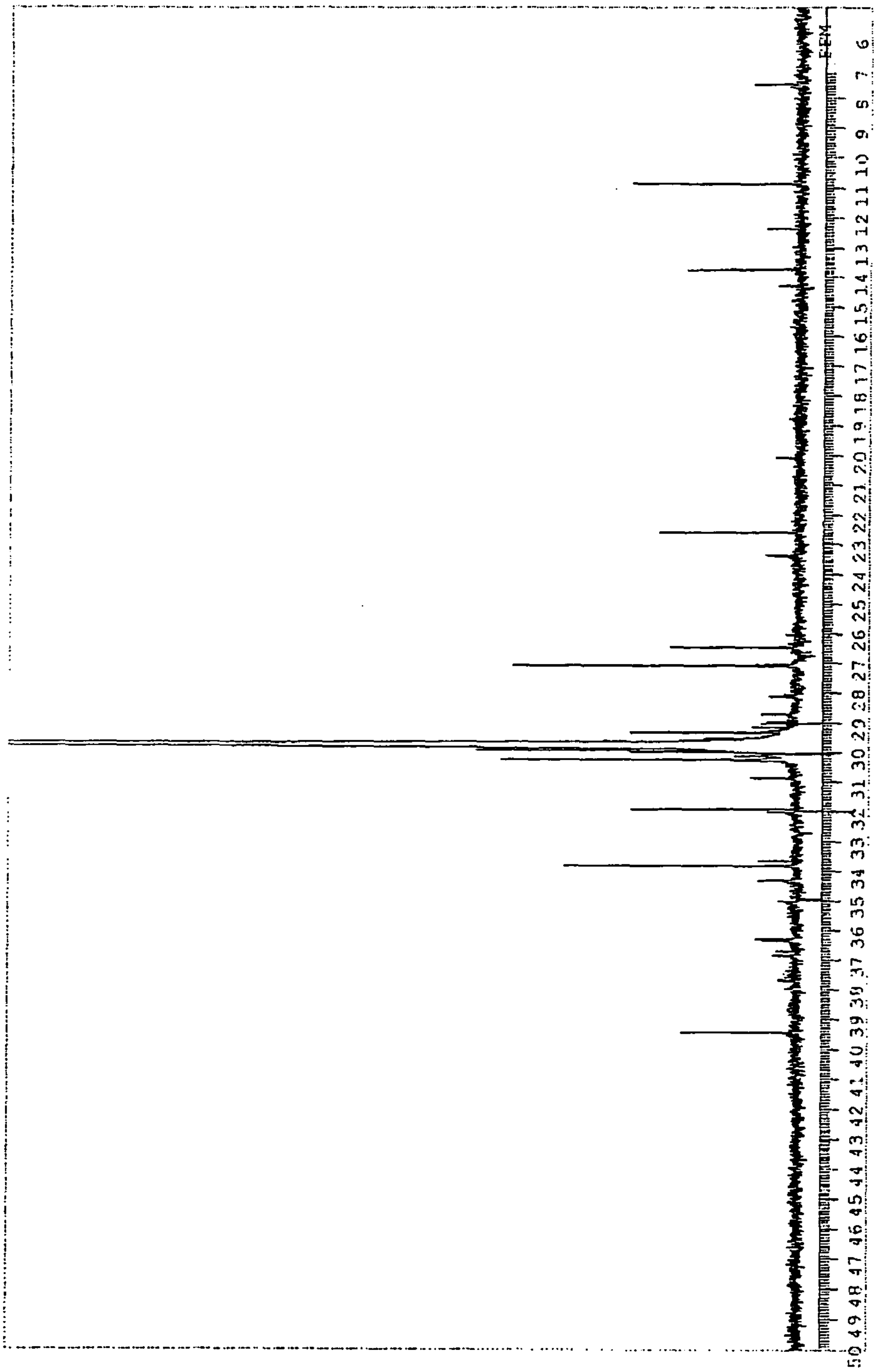

Fig.4

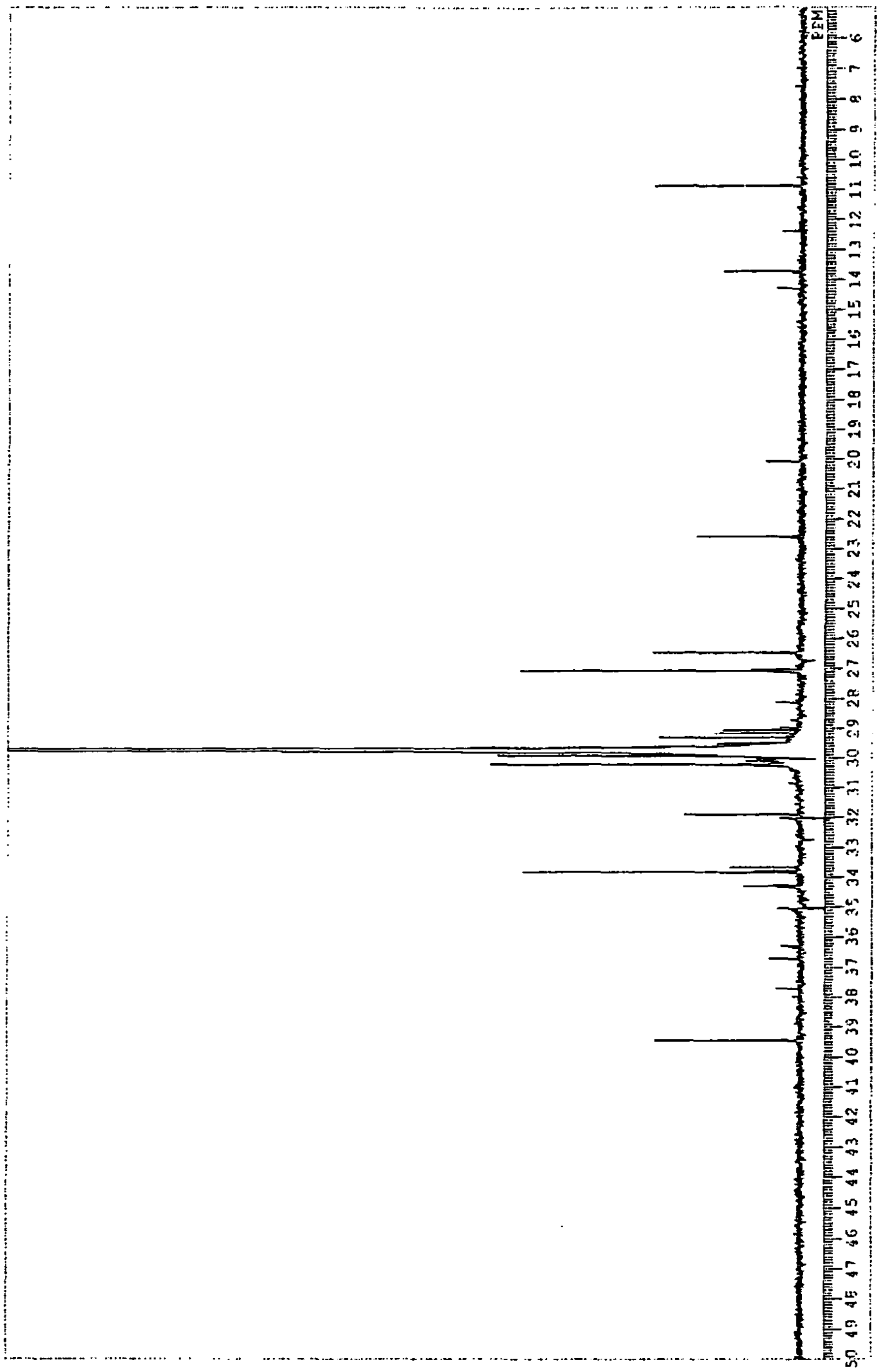
PPM
6 7 8 9 10 11 12 13 14 15 16 17 18 19 20 21 22 23 24 25 26 27 28 29 30 31 32 33 34 35 36 37 38 39 40 41 42 43 44 45 46 47 48 49 50

Fig.5

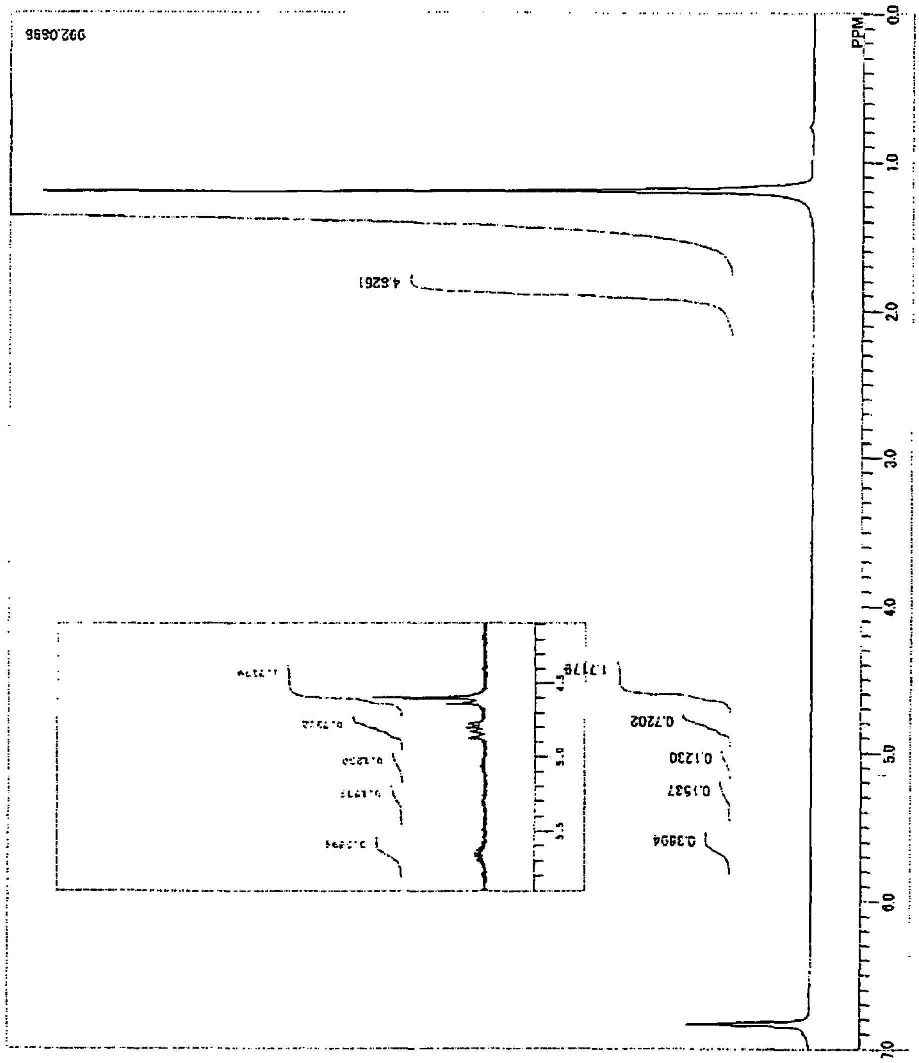

Fig.6

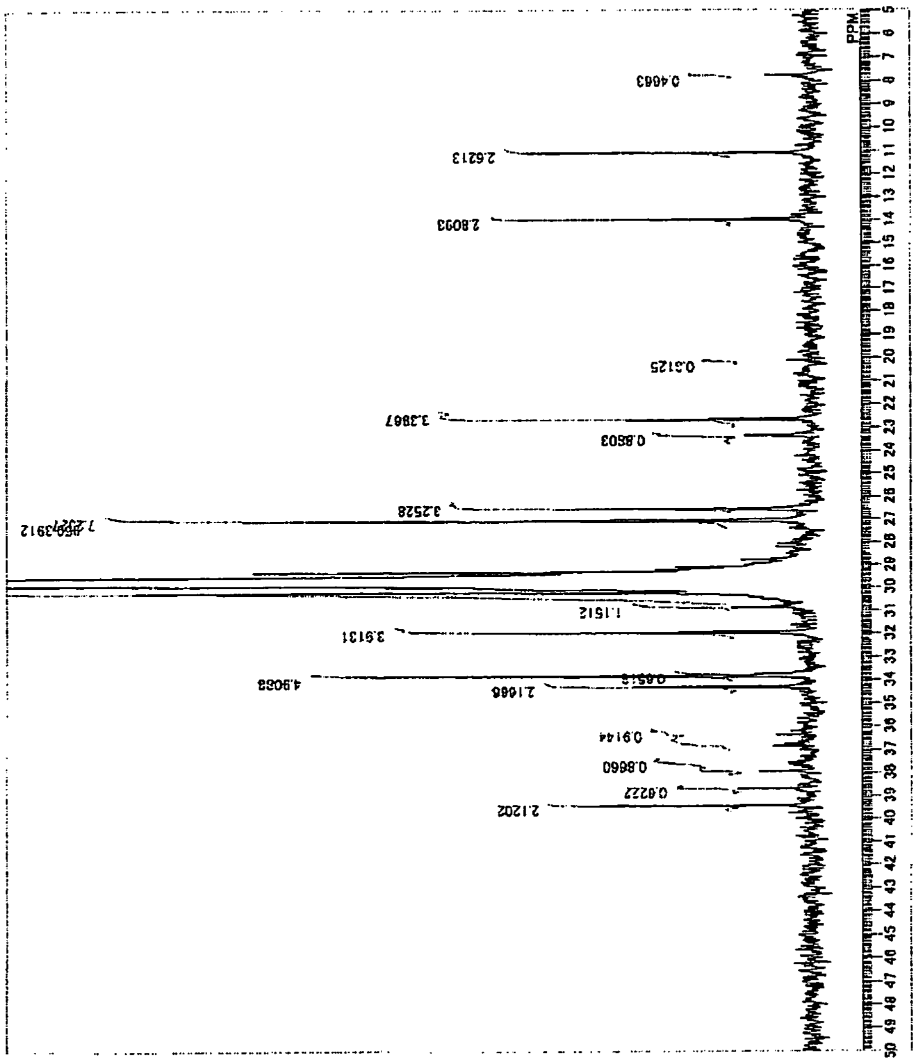

Fig.7

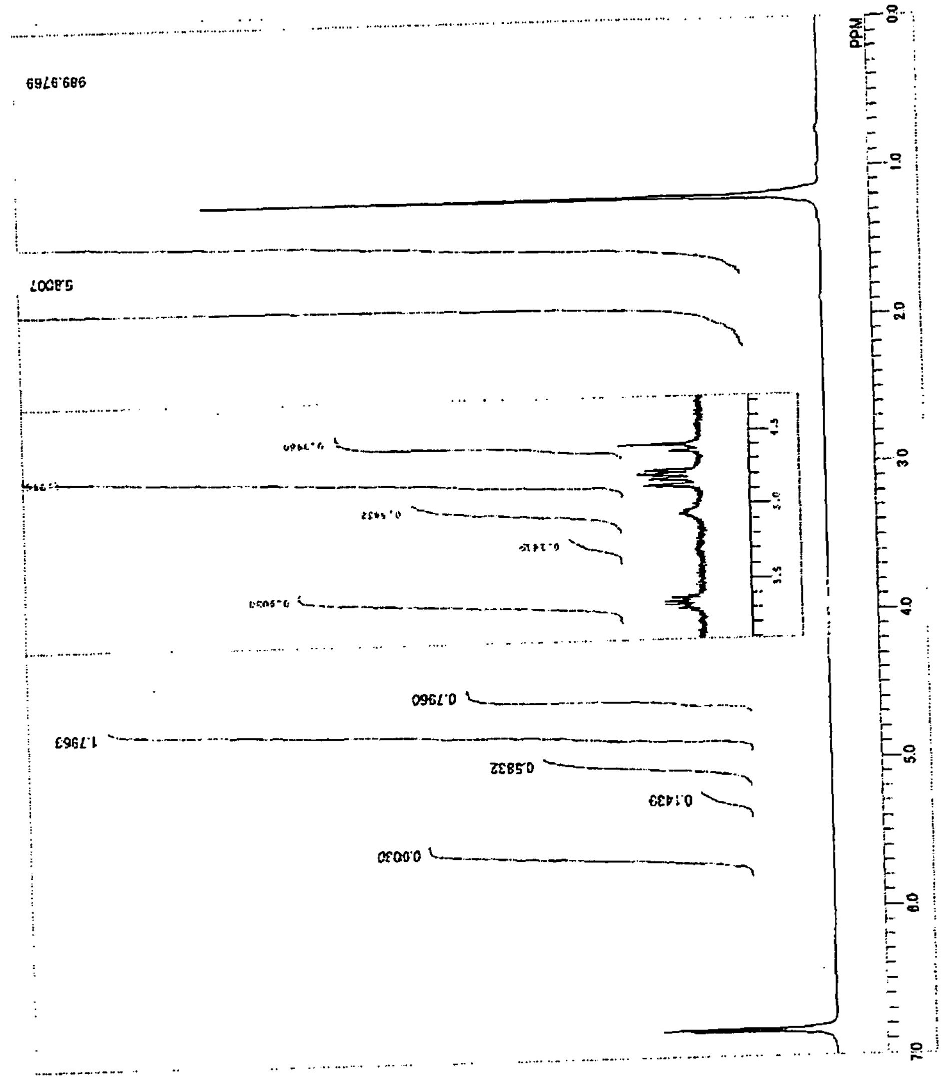

Fig.8

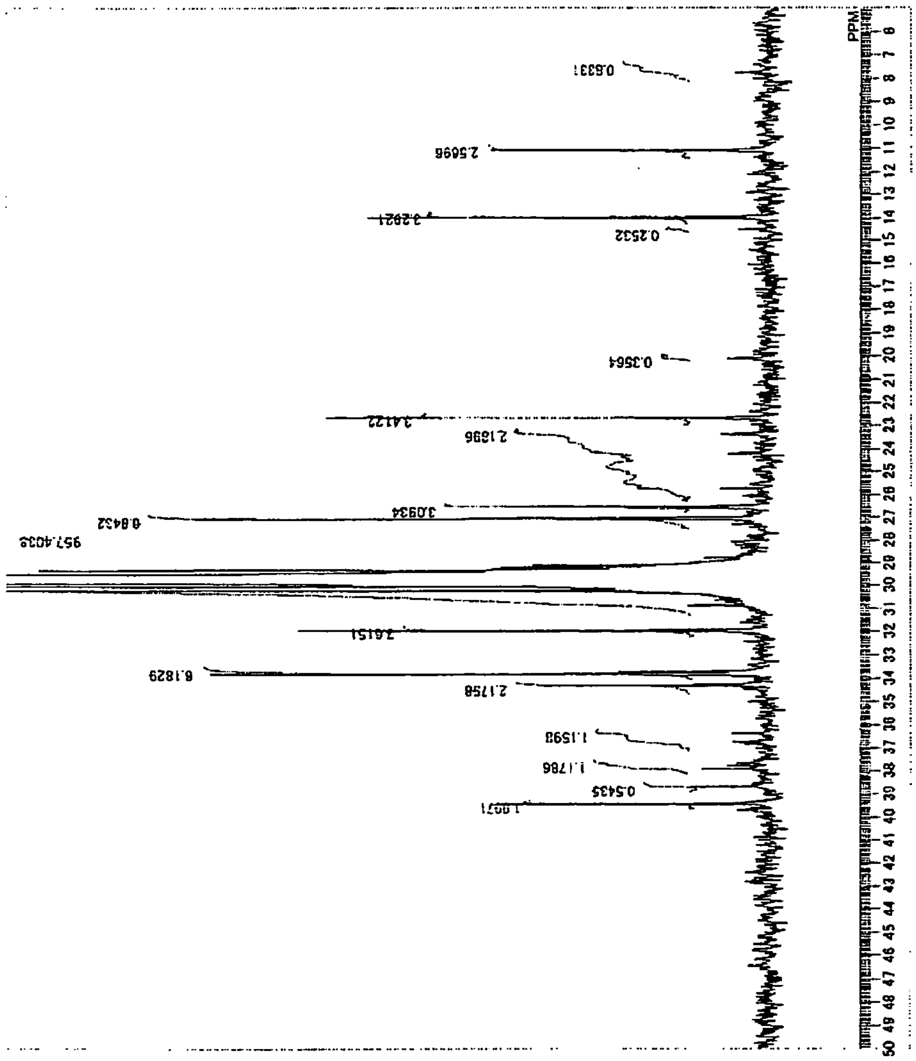

Fig.9

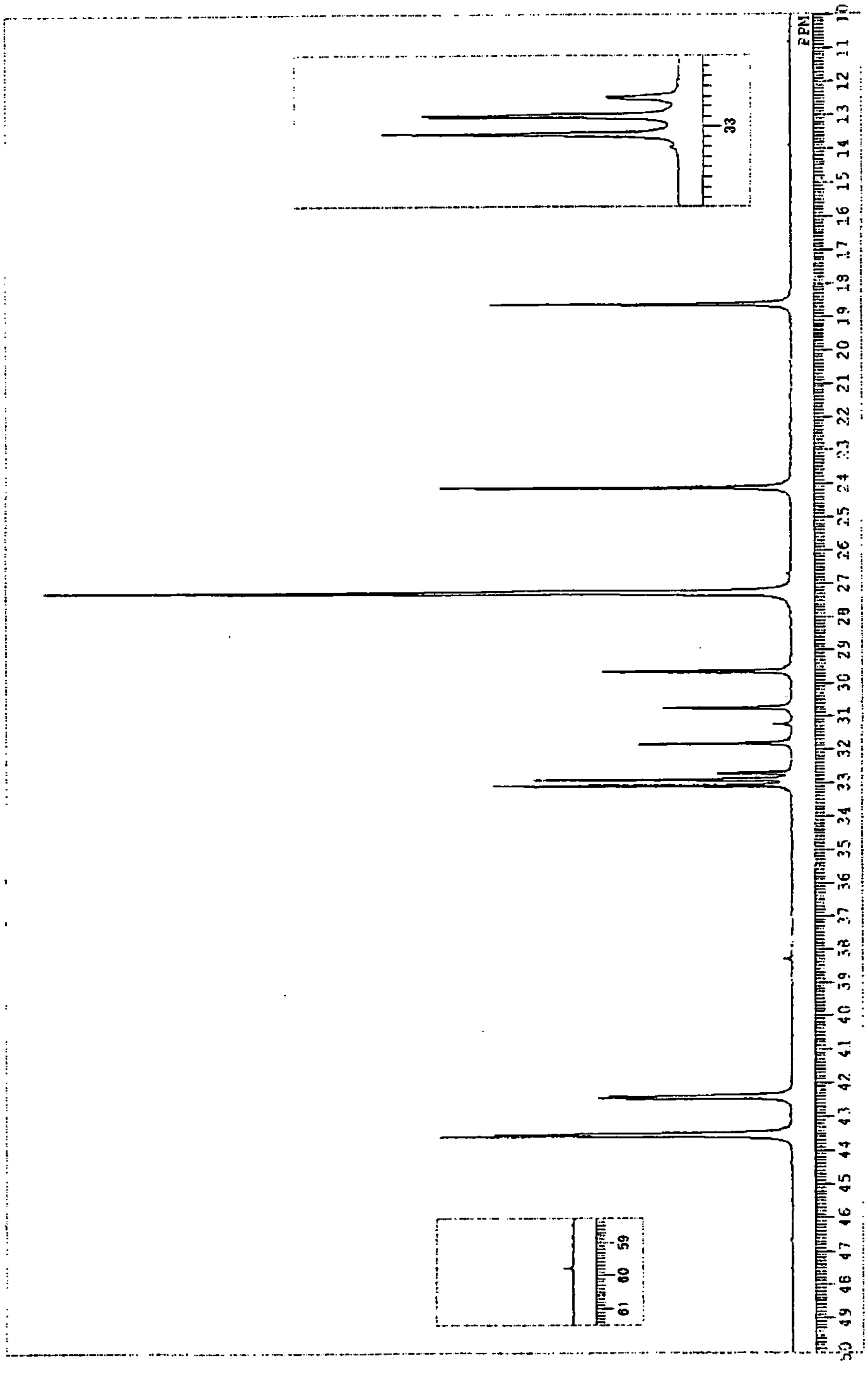

Fig.10

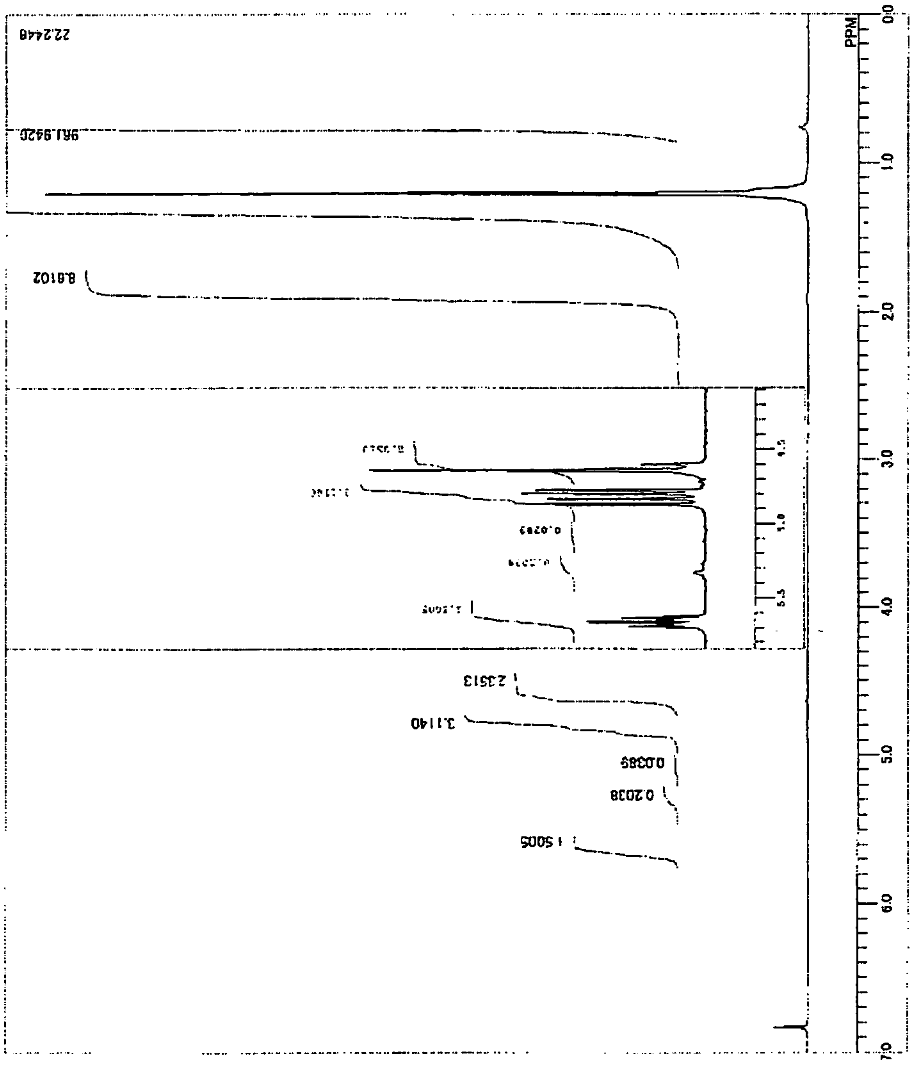

Fig.11

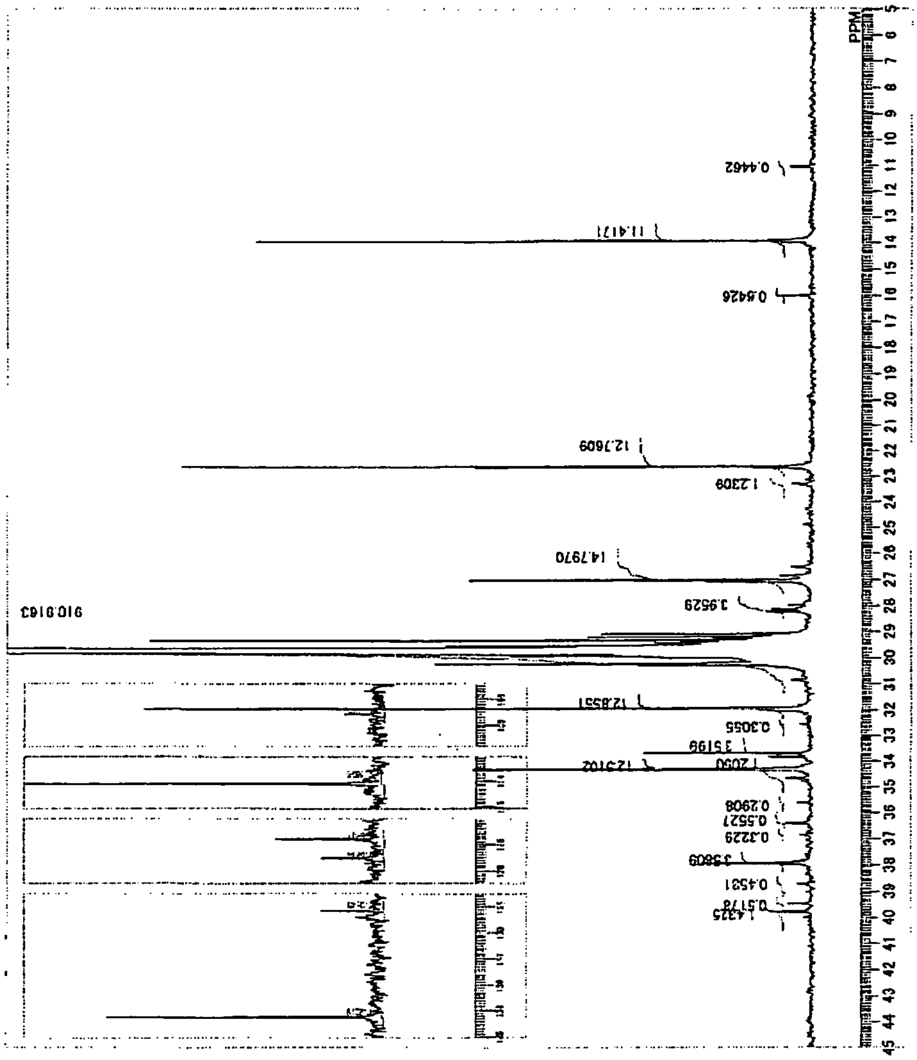

Fig.12

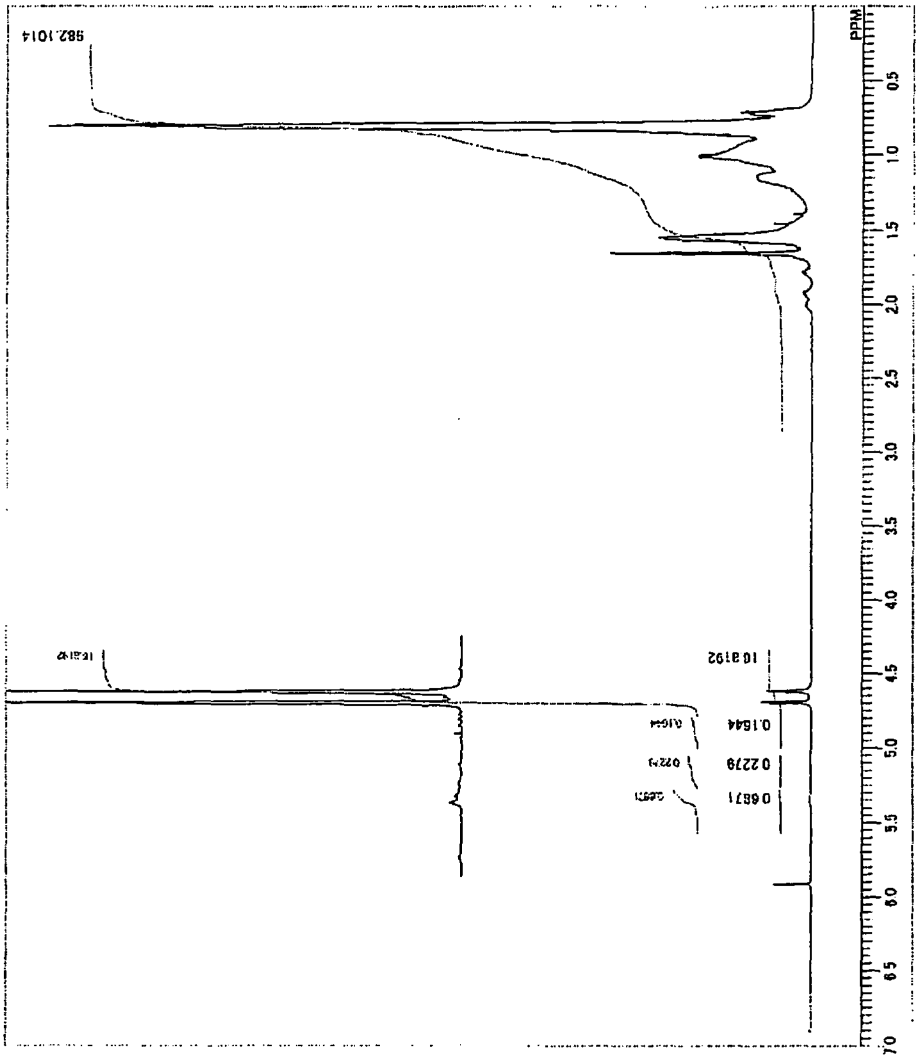
982.1014
10.8192
0.1544
0.2279
0.6871
PPM
0.5
1.0
1.5
2.0
2.5
3.0
3.5
4.0
4.5
5.0
5.5
6.0
6.5
7.0

Fig.13

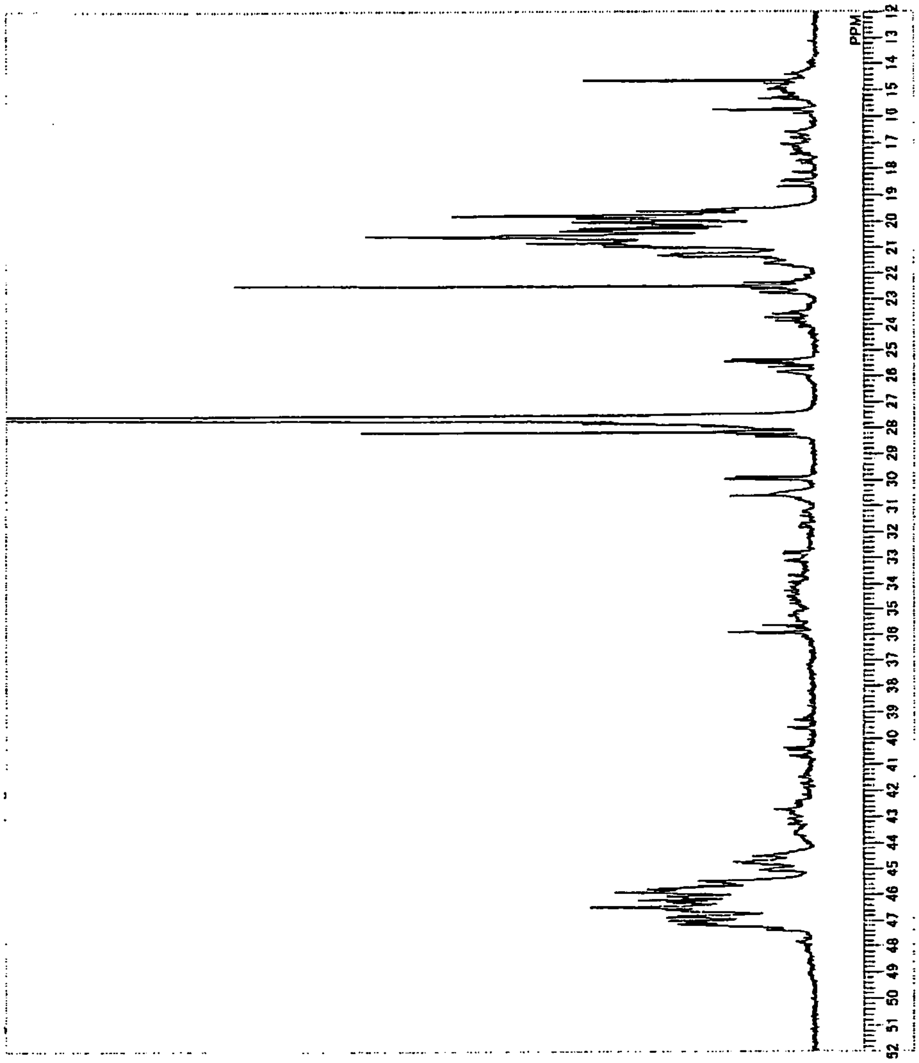

Fig.14

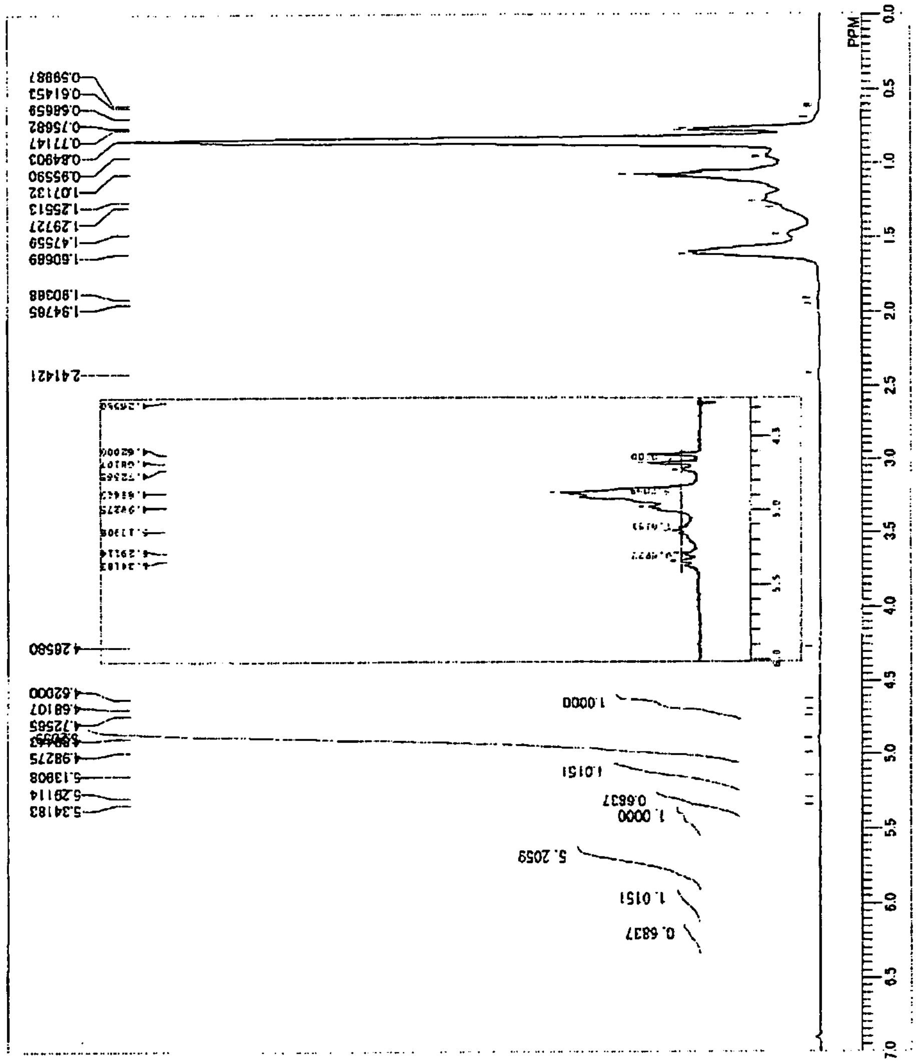

Fig.15

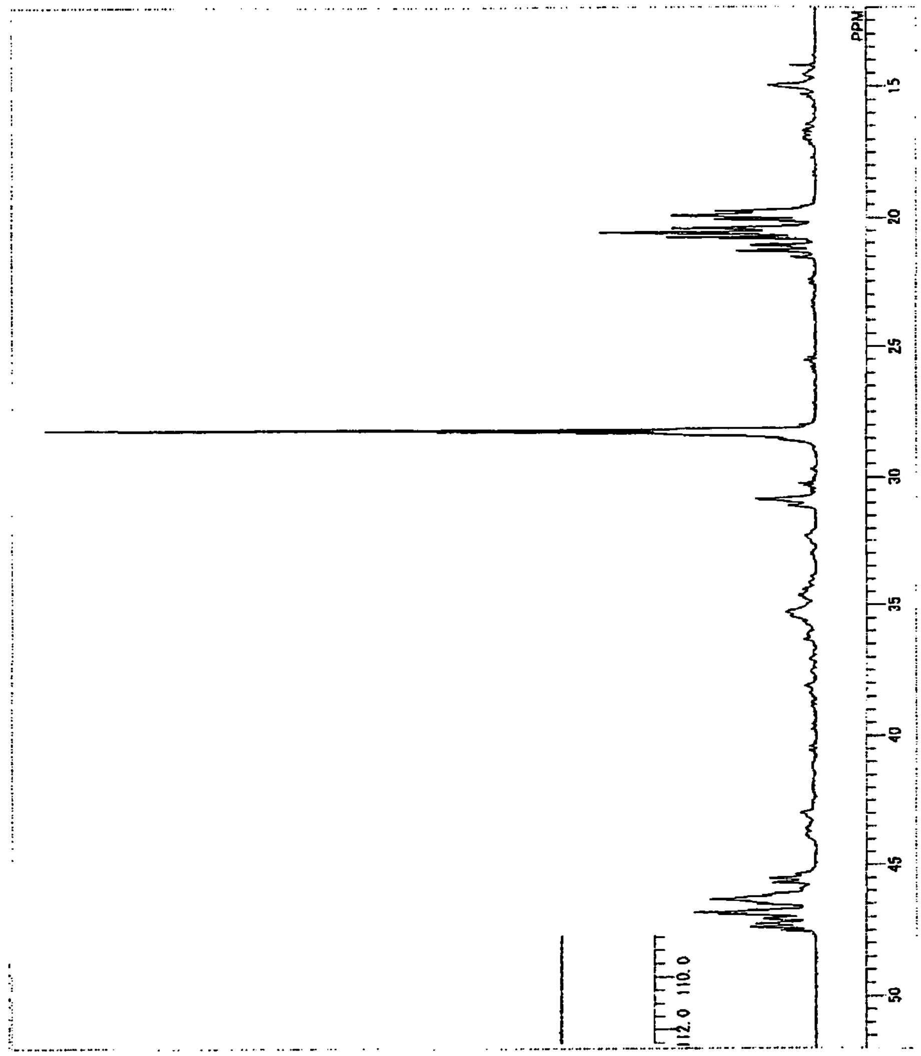

Fig.16

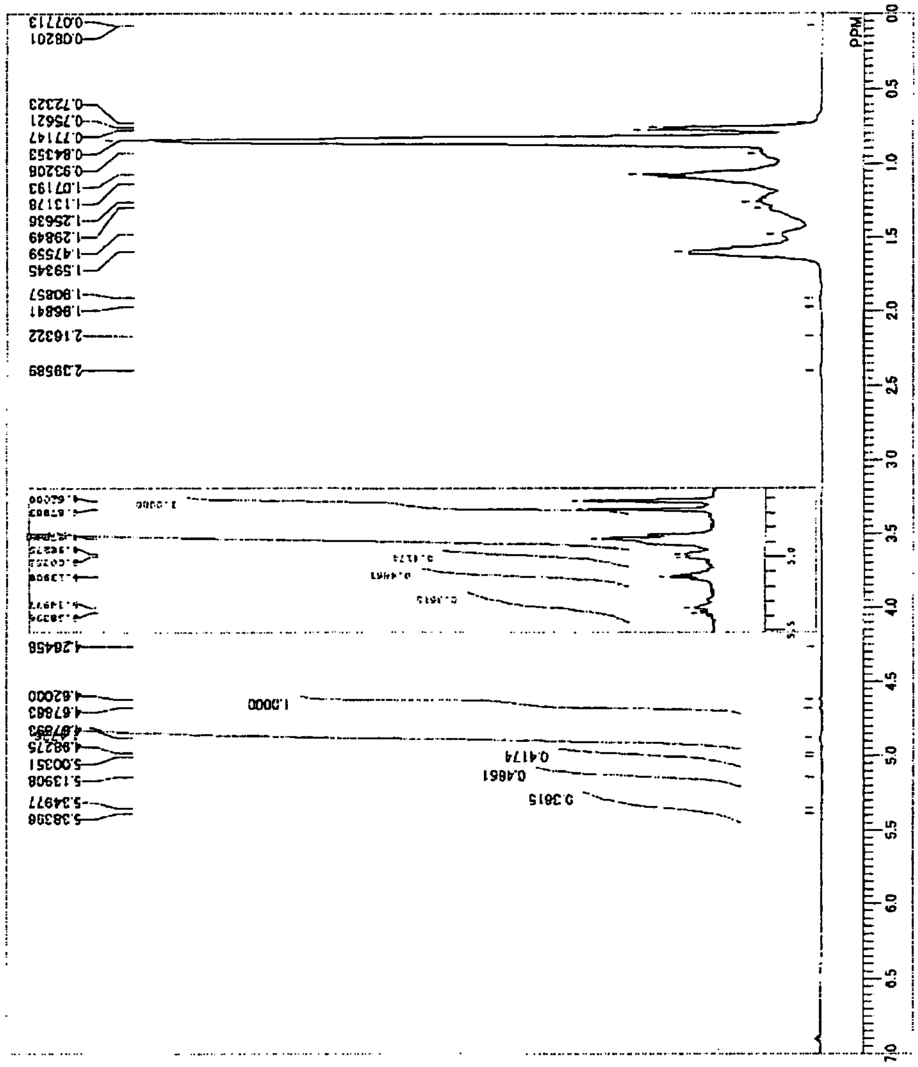

Fig.17

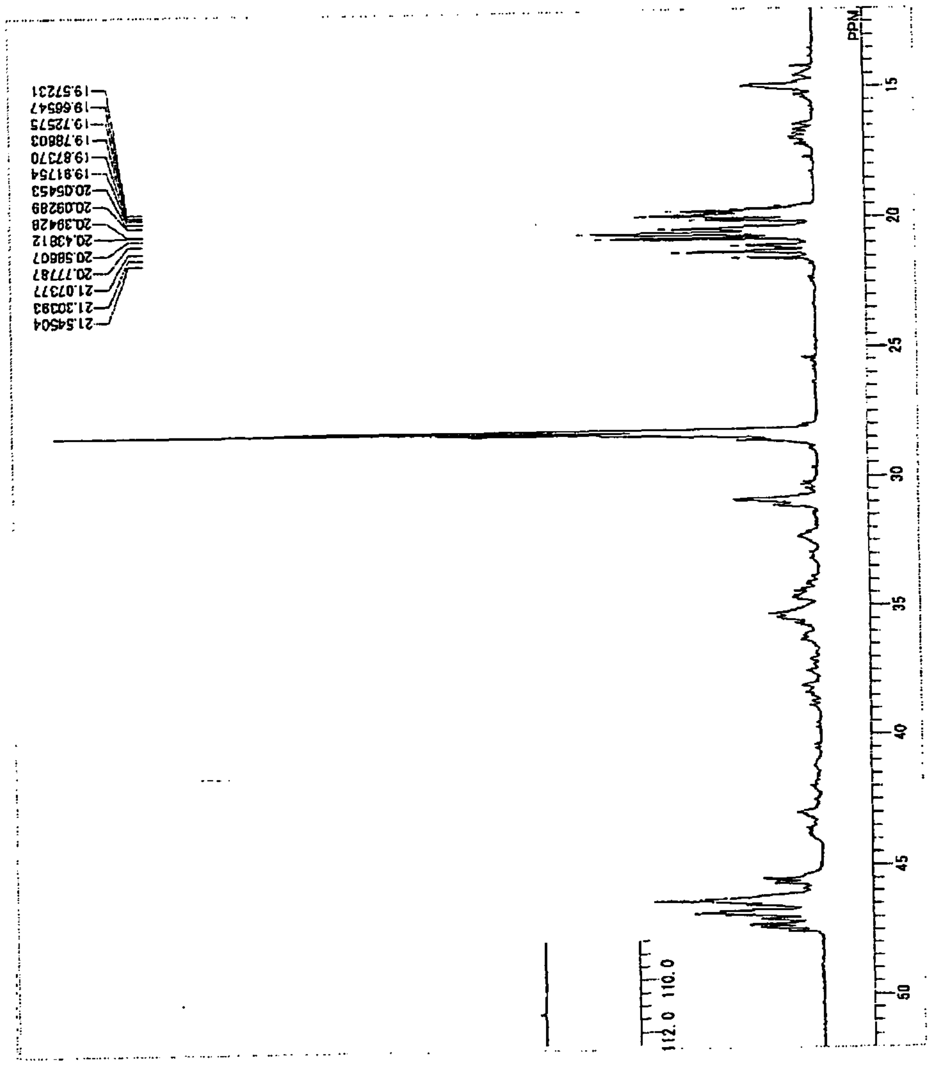
19.57231
19.66547
19.72575
19.78803
19.87370
19.81754
20.05453
20.09289
20.39428
20.43812
20.58807
20.77787
21.07377
21.30393
21.54504
112.0 110.0
PPM
15
20
25
30
35
40
45
50

Fig.18

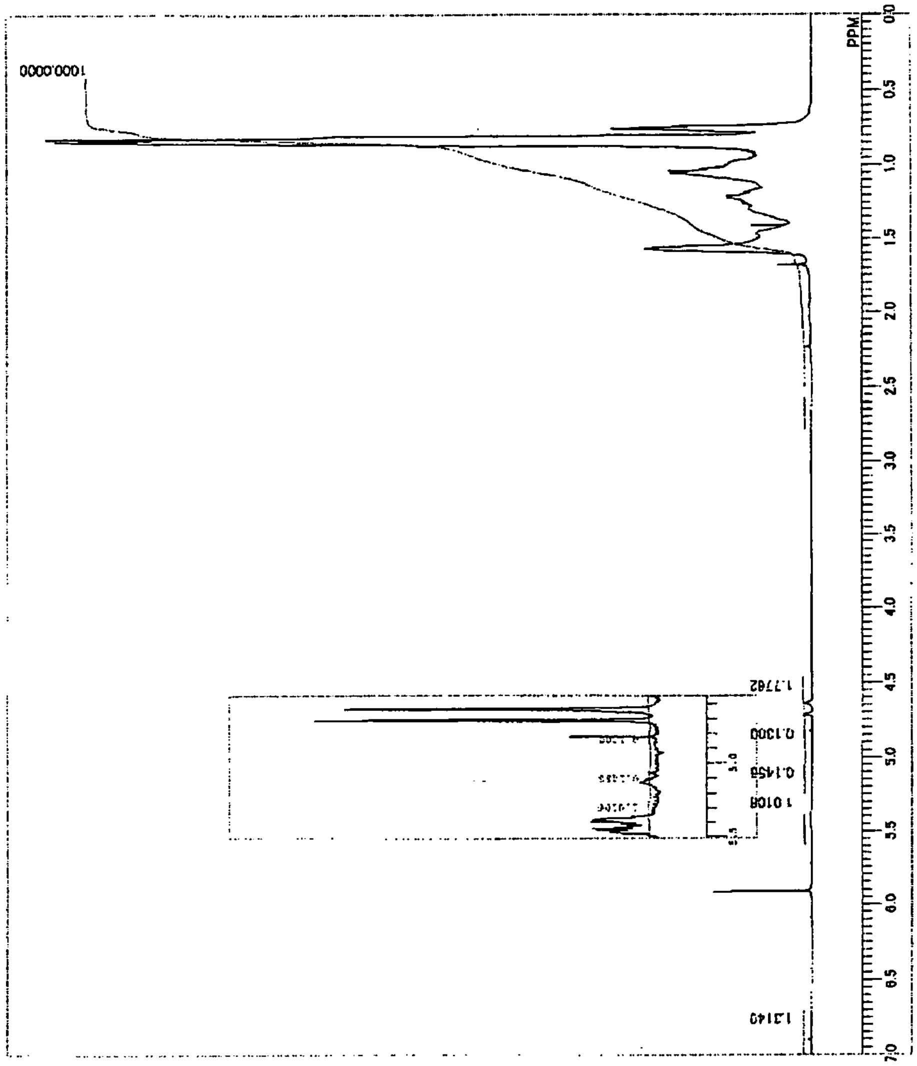
1000.0000
1.7762
0.1300
0.1450
1.0108
1.3140
PPM
0.0
0.5
1.0
1.5
2.0
2.5
3.0
3.5
4.0
4.5
5.0
5.5
6.0
6.5
7.0

Fig.19

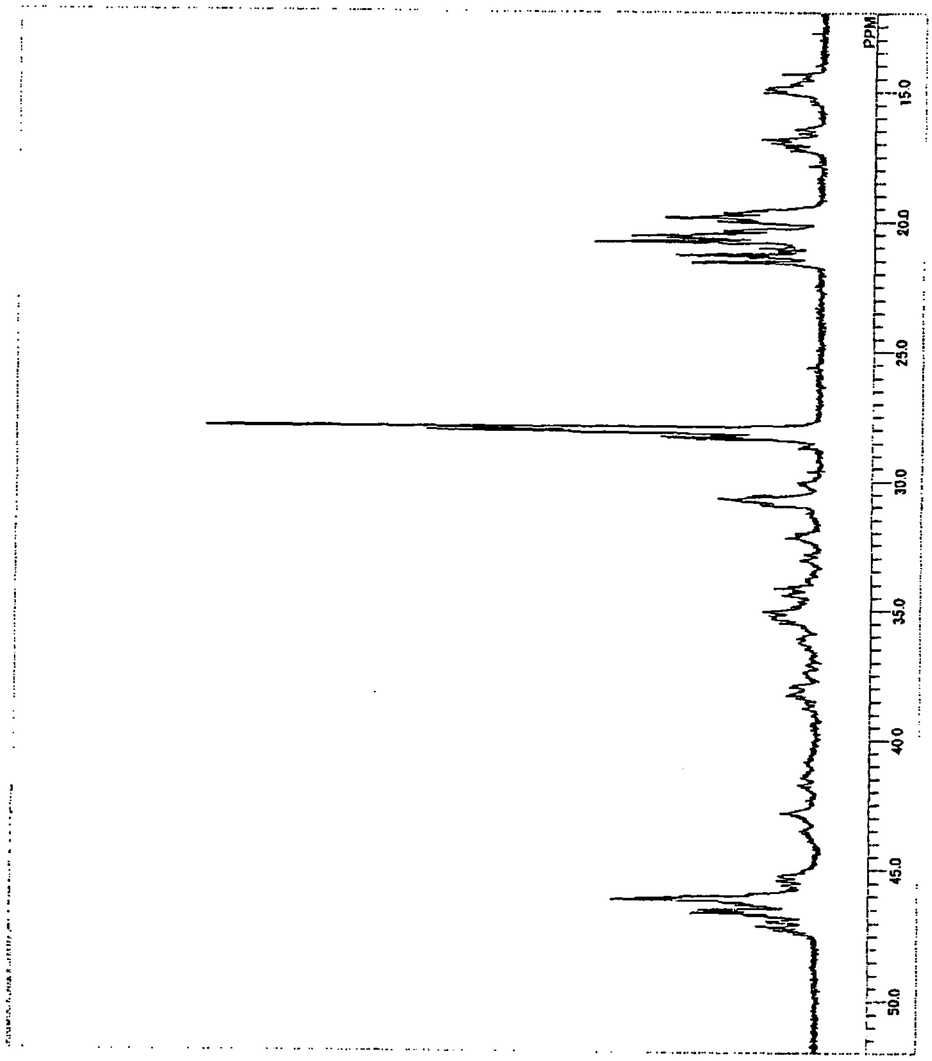

Fig.20

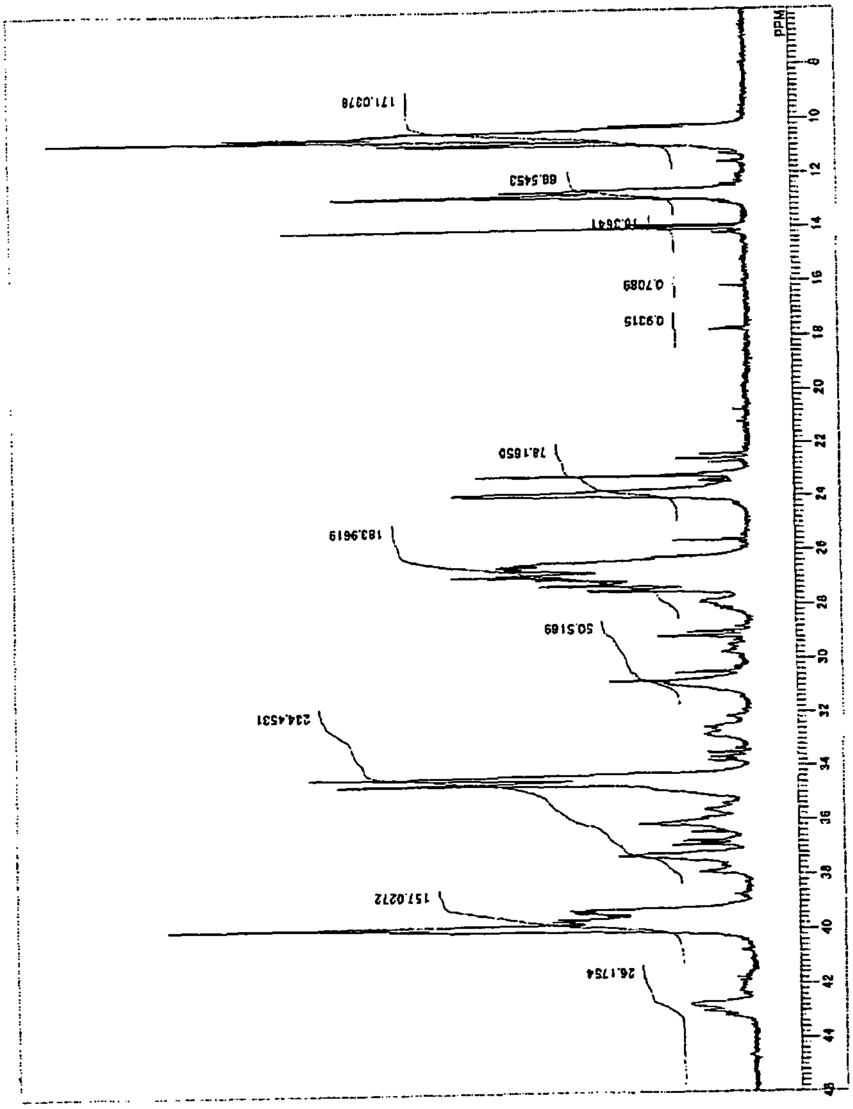

Fig.21

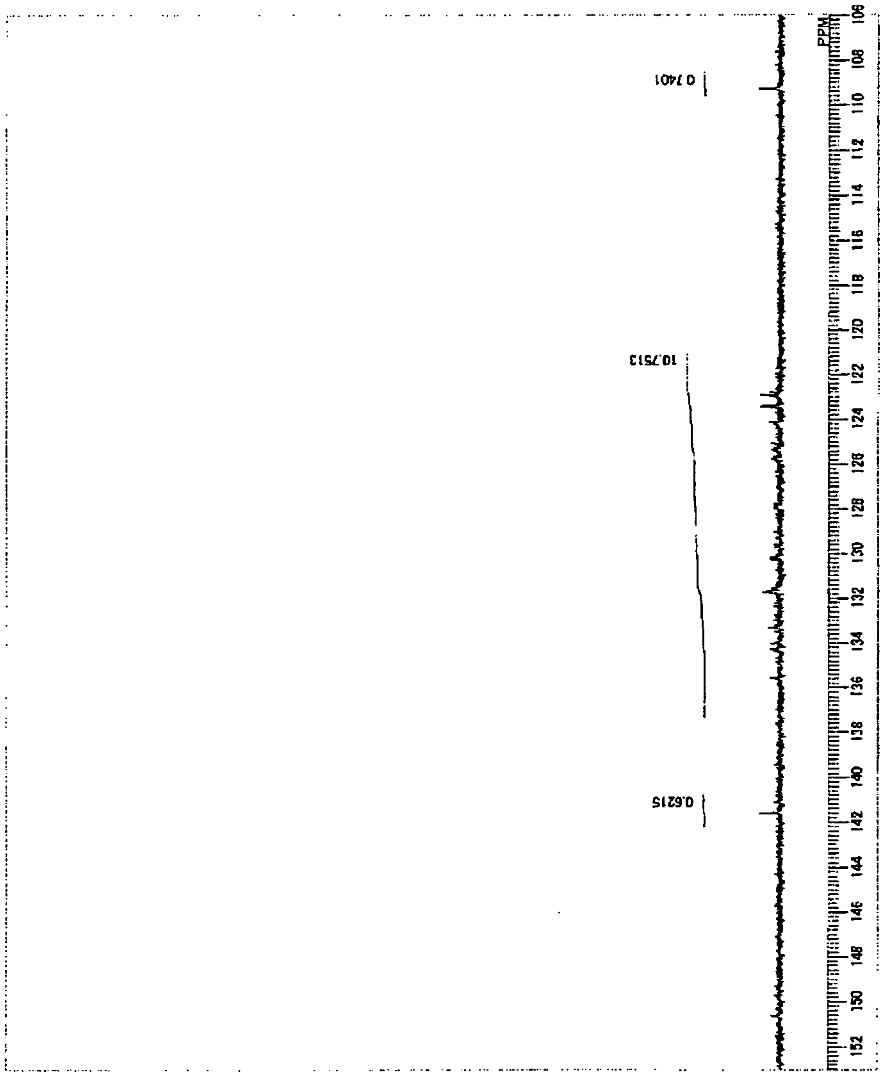

Fig.22

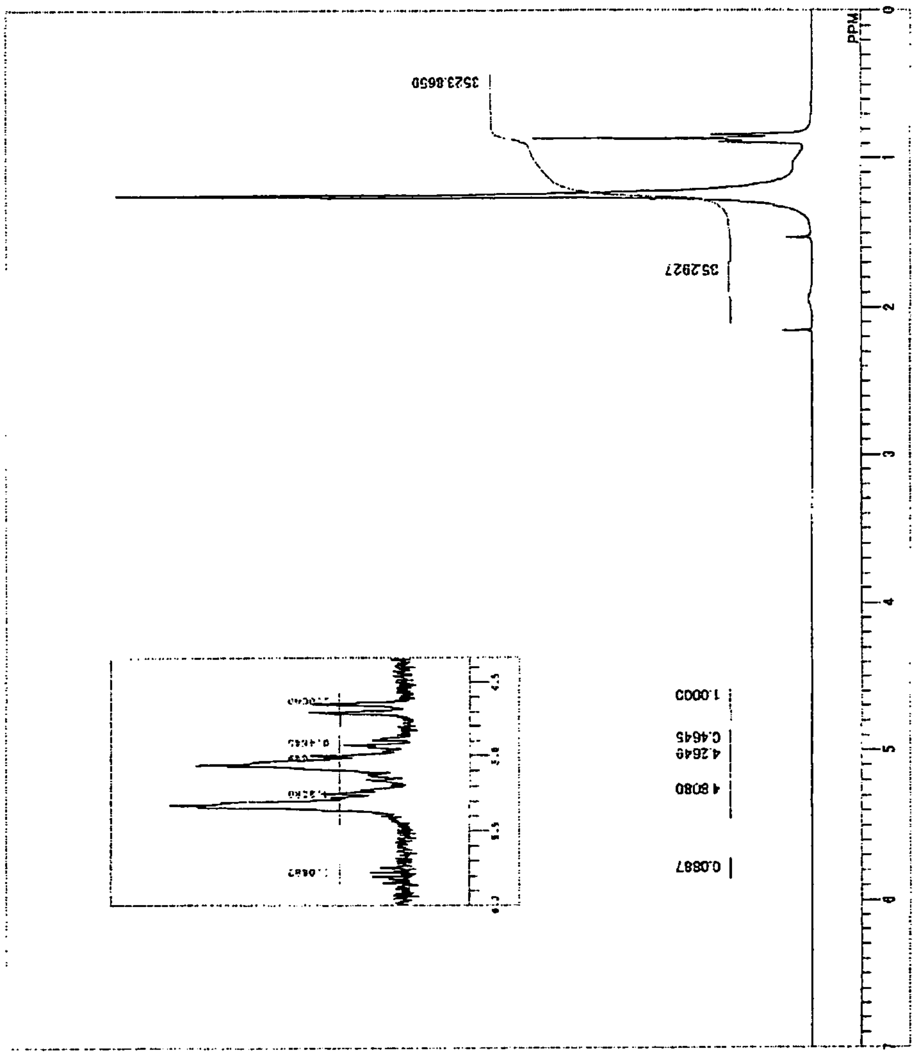

Fig.23

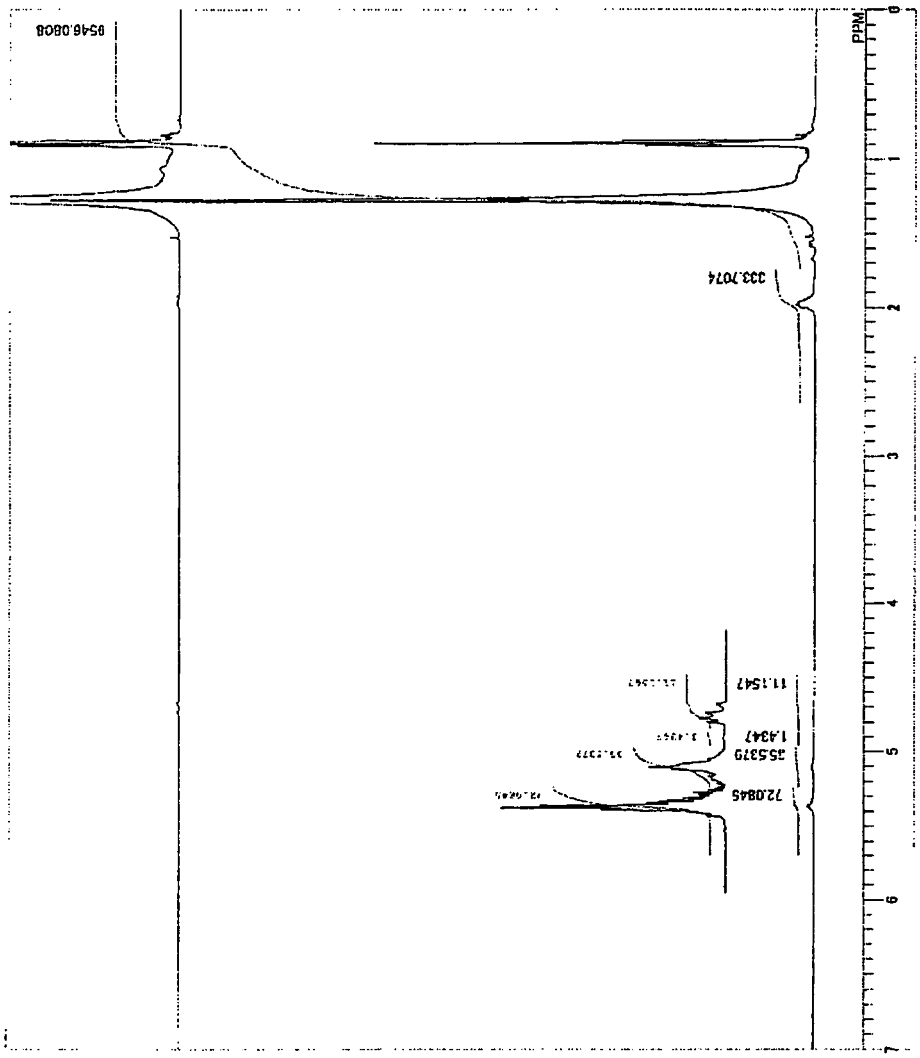

Fig.24

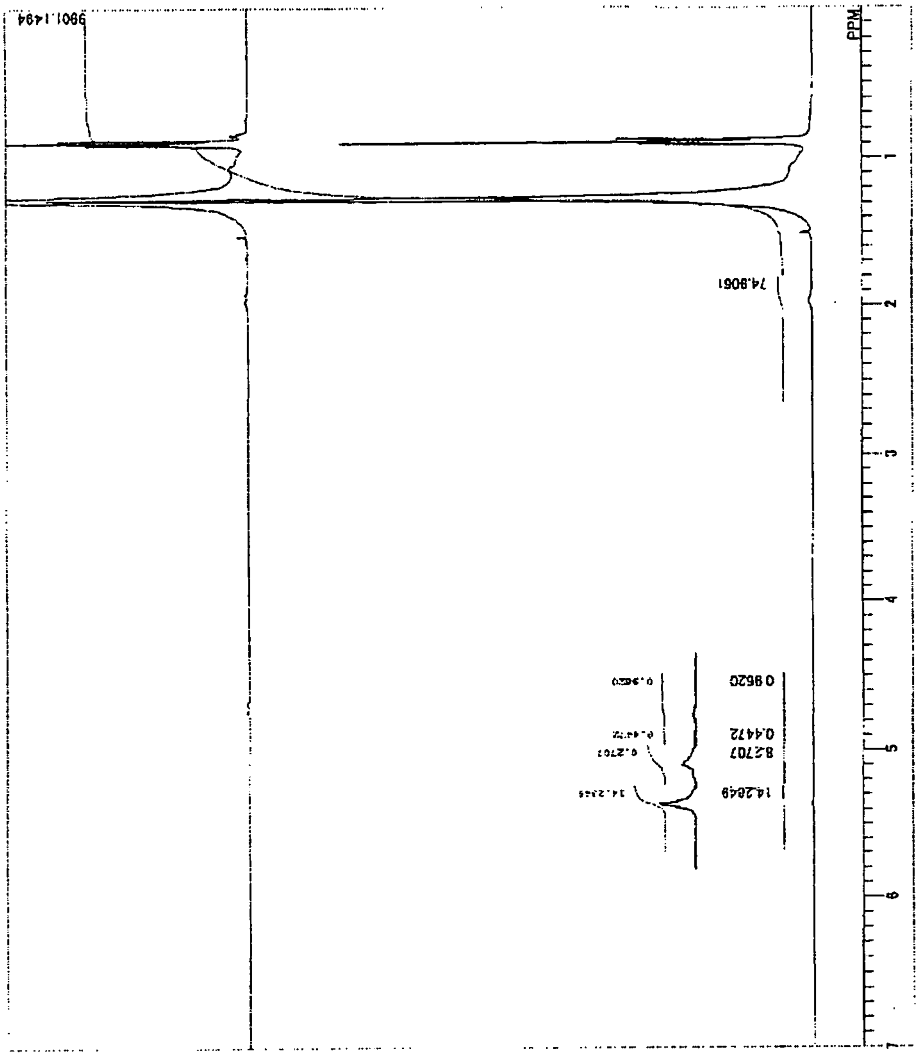

**INTERNATIONAL SEARCH REPORT**

International application No.
PCT/JP2005/015485

A. CLASSIFICATION OF SUBJECT MATTER
*C08F4/645* (2006.01), *C08F10/00* (2006.01), *C07F17/00* (2006.01), *C07F7/00* (2006.01), *C07F7/28* (2006.01)

According to International Patent Classification (IPC) or to both national classification and IPC

B. FIELDS SEARCHED

Minimum documentation searched (classification system followed by classification symbols)
*C08F4/60* (2006.01)-*C08F4/70* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
STN(CASPLUS, REGISTRY)

C. DOCUMENTS CONSIDERED TO BE RELEVANT

| Category* | Citation of document, with indication, where appropriate, of the relevant passages | Relevant to claim No. |
|---|---|---|
| X | JP 8-325283 A (Mitsui Petrochemical Industries, Ltd.), 10 December, 1996 (10.12.96), Claims 1 to 2; Par. Nos. [0013] to [0027], [0032], [0094] (Family: none) | 1 |
| A | JP 8-325315 A (Mitsui Petrochemical Industries, Ltd.), 10 December, 1996 (10.12.96), Full text (Family: none) | 1 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 November, 2005 (22.11.05) | 13 December, 2005 (13.12.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2005/015485

C (Continuation). DOCUMENTS CONSIDERED TO BE RELEVANT

| Category* | Citation of document, with indication, where appropriate, of the relevant passages | Relevant to claim No. |
|---|---|---|
| A | JP 9-87313 A (Sumitomo Chemical Co., Ltd.), 31 March, 1997 (31.03.97), Full text & US 6329478 B1 & EP 842939 A1 & WO 1997/3992 A1 | 1 |
| A | JP 2001-278909 A (Mitsui Chemicals, Inc.), 10 October, 2001 (10.10.01), Full text (Family: none) | 1 |
| A | JP 8-301914 A (Mitsui Petrochemical Industries, Ltd.), 19 November, 1996 (19.11.96), Full text (Family: none) | 1 |

Form PCT/ISA/210 (continuation of second sheet) (April 2005)

**INTERNATIONAL SEARCH REPORT**

International application No.
PCT/JP2005/015485

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The matter common to claims 1-21 is not considered as involving a special technical feature, though examination has been made on the basis of claim 1 and the subsequent claims. Further, the feature common to claims 1-5 is "a catalyst for olefin polymerization as set forth in claim 1", while the feature common to claims 14-20 is "a transition metal compound as set forth in claim 14". As a result of partial search, however, both common features are disclosed in documents cited in the accompanying sheet, thus lacking novelty. Thus, claims 1-5 and 14-20 dot not involve a special technical feature as provided for in PCT Rule 13.2. Additionally, the inventions of claims 6-8 (continued to extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1

**Remark on Protest**

☐ The additional search fees were accompanied by the applicant's protest and, where applicable, the payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

INTERNATIONAL SEARCH REPORT

International application No.
PCT/JP2005/015485

Continuation of Box No.III of continuation of first sheet(2)

are ones which are disclosed in the above documents or could have easily been invented by a person skilled in the art, thus not appearing to be novel or to involve an inventive step. Therefore, it cannot be said that the inventions of claims 1 and 6-8 involve a special technical feature as provided for in PCT Rule 13.2.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 58019309 A
- JP 61130314 A
- JP 8325283 A
- US 5856258 A
- JP 2078678 A
- JP 1501950 A
- JP 1502036 A
- JP 3179005 A
- US 5321106 A
- JP 2000351813 A
- JP 2001002731 A
- JP 2003073412 A
- JP 2004359861 A
- JP 20043598962 A


### Non-patent literature cited in the description


- *Chem. Rev.,* 1998, 2587
- *Chem. Rev.,* 2003, 2633
- *Organometallics,* 1997, 5958
- *Organometallics,* 2003, 3877
- *Organometallics,* 2004, 540
- *Prog. Polym. Sci.,* 2002, 1347
- *Macromol. Chem. Phys.,* 2001, 1757
- **REID, R.C. ; PRAUSNITZ, J. M. ; POLING, B. E.** The Properties of Gases and Liquids. MacGraw Hill
- *Dalton Trans.,* 2003, 4580
- *Organometallics,* 2004, 1576
- *J. Am. Chem. Soc.,* 2000, 8093
- *J. Am. Chem. Soc.,* 1996, 8024
- *Organometallics,* 1995, 5
- *Organometallics,* 2003, 5498
- *Organometallics,* 2003, 4658
- **CHIANG, R.** *J. Polym. Sci.,* 1959, vol. 36, 91
- *Polymer,* 2004, 2883
- *Macromolecules,* 2005
- *Macromolecules,* 1992, 4876
- *Polymer,* 1992, 650
- *Macromol. Chem. Phys.,* 1989, vol. C26 (2&3), 201
- *Macromolecules,* 1999
- *Macromolecules,* 1998, 5145
- *J. Am. Chem. Soc.,* 2003, 10788
- *Organometallics,* 1994, 954
- *Bull. Chem. Soc. Jpn.,* 1986, 2044
- *Organometallics,* 2004, 1777
- *J. Org. Chem.,* 1997, 8767